(19) **Europäisches Patentamt / European Patent Office / Office européen des brevets**

(11) **EP 4 429 191 A1**

(12) # EUROPEAN PATENT APPLICATION
published in accordance with Art. 153(4) EPC

(43) Date of publication:
**11.09.2024 Bulletin 2024/37**

(21) Application number: **22900365.2**

(22) Date of filing: **24.11.2022**

(51) International Patent Classification (IPC):
**H04L 47/56** $^{(2022.01)}$

(52) Cooperative Patent Classification (CPC):
**H04L 43/0852; H04L 47/125; H04L 47/56**

(86) International application number:
**PCT/CN2022/134027**

(87) International publication number:
**WO 2023/098560 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.12.2021 CN 202111468102**

(71) Applicant: **Huawei Technologies Co., Ltd.**
**Shenzhen, Guangdong 518129 (CN)**

(72) Inventors:
• **YU, Fang**
  **Shenzhen, Guangdong 518129 (CN)**
• **LI, Yan**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) ## COMMUNICATION METHOD AND APPARATUS

(57) This application provides a communication method and apparatus. The method includes: A first device determines information about service flow arrival time, where the information about the service flow arrival time includes the service flow arrival time or an offset of the service flow arrival time relative to reference time, the service flow arrival time is time at which a first service flow arrives at a second device, and the first service flow is a periodic service flow to be transmitted between an access network device and a user plane network element. The first device determines information about service flow sending time based on the information about the service flow arrival time. The first device indicates the second device to wait, after receiving the first service flow, until the service flow sending time to send the first service flow. If the first service flow is an uplink service flow, the second device is the access network device or a translator corresponding to the access network device; or if the first service flow is a downlink service flow, the second device is the user plane network element. According to the foregoing method, a deterministic latency requirement of the first service flow can be met, and overall network performance can be improved.

FIG. 8

**Description**

**CROSS-REFERENCE TO RELATED APPLICATIONS**

This application claims priority to Chinese Patent Application No. 202111468102.2, filed with the China National Intellectual Property Administration on December 3, 2021, and entitled "COMMUNICATION METHOD AND APPARATUS", which is incorporated herein by reference in its entirety.

**TECHNICAL FIELD**

Embodiments of this application relate to the wireless communication field, and in particular, to a communication method and apparatus.

**BACKGROUND**

In a data packet forwarding process of a conventional Ethernet, when a large quantity of data packets arrive at a forwarding port within short time, a forwarding latency is high or a packet loss problem is caused. Therefore, the conventional Ethernet cannot provide services with high reliability and a guaranteed transmission latency, and cannot meet requirements of fields such as vehicle control and industrial internet.

The institute of electrical and electronics engineers (institute of electrical and electronics engineers, IEEE) defines a time sensitive networking (time sensitive networking, TSN) standard to meet a requirement on reliable latency transmission. The standard can provide reliable latency transmission services based on layer 2 switching, ensure data transmission reliability of latency-sensitive services, and ensure predictable end-to-end transmission latencies.

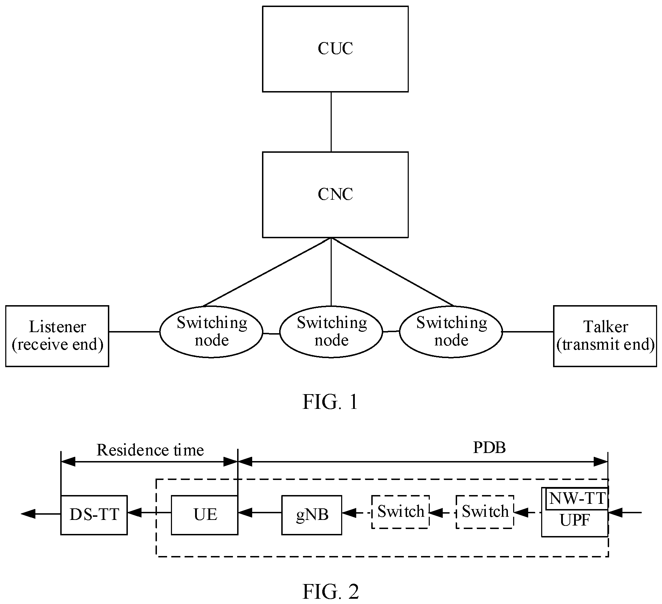

As shown in FIG. 1, a TSN system may include a centralized network configuration (centralized network configuration, CNC) network element, a centralized user configuration (centralized user configuration, CUC) network element, TSN terminals (end stations), and switching nodes (TSN Bridges). The TSN terminals include a transmit end (talker) and a receive end (listener).

An entire 5G system (5G System, 5GS) may be used as a switching node. The CNC network element may configure each switching node based on information reported by the 5GS and another switching node, to ensure an end-to-end (from the TSN talker to the TSN listener) deterministic latency. As shown in FIG. 2, the 5G system used as the switching node includes at least the following devices: a user plane function (User Plane Function, UPF) network element, a TSN translator (TSN translator, TT) on a UPF network element side (briefly referred to as a network side TT (TSN network side TT, NW-TT) below), a next generation base station (next generation NodeB, gNB), user equipment (user equipment, UE), and a UE side TT (briefly referred to as a device side TT (device side TT, DS-TT) below). A downlink data packet is used as an example. The data packet is transmitted from the TSN system to the NW-TT, and the NW-TT sends the data packet to the DS-TT through the UPF network element, the gNB, and the UE.

For a data packet with a deterministic latency requirement, the 5GS needs to determine a corresponding packet delay budget (packet delay budget, PDB) based on the latency requirement of the data packet, and ensure that transmission time of the data packet between the UE and the UPF network element is not greater than the PDB. How to meet the deterministic latency requirement and improve overall network performance is an urgent problem to be resolved.

**SUMMARY**

According to a first aspect, this application provides a communication method. The method includes:

A first device determines information about service flow arrival time, where the information about the service flow arrival time includes the service flow arrival time or an offset of the service flow arrival time relative to reference time, the service flow arrival time is time at which a first service flow arrives at a second device, and the first service flow is a periodic service flow to be transmitted between an access network device and a user plane network element. The first device determines information about service flow sending time based on the information about the service flow arrival time. The first device indicates the second device to wait, after receiving the first service flow, until the service flow sending time to send the first service flow. If the first service flow is an uplink service flow, the second device is the access network device or a translator corresponding to the access network device; or if the first service flow is a downlink service flow, the second device is the user plane network element.

According to the foregoing method, the first device first determines the information about the service flow arrival time, and determines the information about the service flow sending time based on the information about the service flow arrival time, so that after receiving the first service flow, the second device may wait until the service flow sending time to send the first service flow. In other words, the first device configures time at which the second device sends the first service flow, and the second device waits, according to configuration and indication of the first device, until the specified service flow sending time to send the first service flow. Through coordinated configuration of the first device, even if the second device receives a plurality of service flows simultaneously or within a time period, congestion does not occur, so that a deterministic latency requirement of each flow can be met, and therefore overall network performance can be improved.

In a possible design, when indicating the second device to wait, after receiving the first service flow, until the service flow sending time to send the first service flow, the first device sends the information about the service flow sending time to the second device.

In a possible design, the information about the service flow sending time includes the service flow sending time or an offset of the service flow sending time relative to the reference time. The service flow sending time is not later than latest sending time, and the latest sending time is determined based on the information about the service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device. Alternatively, the offset of the service flow sending time relative to the reference time does not exceed a maximum offset, and the maximum offset is determined based on the information about the service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

In the foregoing design, the service flow sending time is not later than the latest sending time, or the offset of the service flow sending time relative to the reference time does not exceed the maximum offset, so that a latency requirement of the first service flow can be met when the second device sends the first service flow.

In a possible design, the service flow sending time is not earlier than earliest sending time, and the earliest sending time is determined based on the information about the service flow arrival time and the processing time of the first service flow in the second device. Alternatively, the offset of the service flow sending time relative to the reference time is greater than or equal to a minimum offset, and the minimum offset is determined based on the information about the service flow arrival time and the processing time of the first service flow in the second device.

In a possible design, parameters for determining the latest sending time, the maximum offset, the earliest sending time, or the minimum offset further include a jitter latency associated with the first service flow.

In a possible design, service flow sending time that is determined by the first device and at which the second device sends a second service flow is different from the service flow sending time that is determined by the first device and at which the second device sends the first service flow, the second service flow is a periodic service flow to be transmitted between the access network device and the user plane network element, and the second service flow and the first service flow arrive at the second device at the same time, or a difference between time at which the second service flow arrives at the second device and the time at which the first service flow arrives at the second device is less than or equal to a threshold.

In the foregoing design, the first device determines different service flow sending time for the first service flow and the second service flow, so that congestion between the first service flow and the second service flow can be avoided, and deterministic latency requirements separately of the first service flow and the second service flow can be ensured.

In a possible design, when determining the information about the service flow sending time based on the information about the service flow arrival time, the first device obtains an offset selection value, where the offset selection value is greater than or equal to the minimum offset and less than or equal to the maximum offset, or the offset selection value is greater than or equal to an offset of the earliest sending time relative to the reference time and less than or equal to an offset of the latest sending time relative to the reference time; and the first device determines the information about the service flow sending time based on the offset selection value.

In the foregoing design, the first device first determines the minimum offset and the maximum offset, or the offset of the earliest sending time relative to the reference time and the offset of the latest sending time relative to the reference time, then obtains the offset selection value, and determines the information about the service flow sending time based on the offset selection value.

In a possible design, when obtaining the offset selection value, the first device sends, to a fourth device, the minimum offset and the maximum offset, or the offset of the earliest sending time relative to the reference time and the offset of the latest sending time relative to the reference time; and the first device receives the offset selection value from the fourth device.

In a possible design, when obtaining the offset selection value, the first device determines, based on a packet delay budget for transmitting the first service flow between the second device and a third device, the processing time of the first service flow in the second device, and processing time of the first service flow in the third device, a latency requirement for transmitting the first service flow between the second device and the third device; and the first device sends the latency requirement to the fourth device. The third device is a device that is to receive the first service flow, and if the first service flow is an uplink service flow, the third device is the user plane network element, or if the first service flow is a downlink service flow, the third device is the access network device or the translator corresponding to the access network device.

In the foregoing design, the fourth device may determine the offset selection value with reference to the latency requirement. In addition, the first device further sends a priority of the first service flow to the fourth device. It may be understood that the fourth device may refer to a plurality of parameters when determining the offset selection value. How the fourth device determines the offset selection value is not limited in this application.

In a possible design, when determining the information about the service flow sending time based on the offset selection value, the first device determines the information about the service flow sending time based on the offset selection value and the jitter latency associated with the first service flow.

In a possible design, the information about the service flow sending time includes a gate control scheduling parameter. The first device may determine the gate control scheduling parameter according to the following method: The first device obtains the cycle of the first service flow and the maximum burst size of the first service flow. The first device determines a size of a maximum frame of the first service flow based on the maximum burst size of the first service flow. The first device determines the gate control scheduling parameter based on the cycle of the first service flow, the size of the maximum frame of the first service flow, and the offset selection value.

In the foregoing design, the first device may determine the gate control scheduling parameter based on the cycle of the first service flow, the maximum burst size of the first service flow, and the offset selection value. The gate control scheduling parameter herein is a gate control scheduling parameter for the second device.

In a possible design, when the first service flow is an uplink service flow, the first service flow arrives at the second device through a terminal device. When determining the information about the service flow arrival time, the first device obtains information about time at which the first service flow arrives at a translator on a terminal device side, residence time of the first service flow in the terminal device and in the translator on the terminal device side, and a packet delay budget for transmitting the first service flow between the terminal device and the second device; and the first device determines the information about the service flow arrival time based on the information about the time at which the first service flow arrives at the translator on the terminal device side, the residence time of the first service flow in the terminal device and in the translator on the terminal device side, and the packet delay budget for transmitting the first service flow between the terminal device and the second device.

In the foregoing design, the first device may determine the information about the service flow arrival time in a scenario in which the first service flow is an uplink service flow.

In a possible design, the first device is a time sensitive networking TSN application function network element. When obtaining the information about the time at which the first service flow arrives at the translator on the terminal device side, the residence time of the first service flow in the terminal device and in the translator on the terminal device side, and the packet delay budget for transmitting the first service flow between the terminal device and the second device, the first device determines the information about the time at which the first service flow arrives at the translator on the terminal device side; and the first device receives, from a session management network element, the residence time of the first service flow in the terminal device and in the translator on the terminal device side, and the packet delay budget for transmitting the first service flow between the terminal device and the second device.

In a possible design, the first device is a session management network element. When obtaining the information about the time at which the first service flow arrives at the translator on the terminal device side, the residence time of the first service flow in the terminal device and in the translator on the terminal device side, and the packet delay budget for transmitting the first service flow between the terminal device and the second device, the first device receives, from a policy control network element, the information about the time at which the first service flow arrives at the translator on the terminal device side; the first device receives, from the terminal device, the residence time of the first service flow in the terminal device and in the translator on the terminal device side; and the first device determines the packet delay budget for transmitting the first service flow between the terminal device and the second device.

According to a second aspect, this application provides a communication method. The method includes: A second device receives a first service flow, where the first service flow is a periodic service flow to be transmitted between an access network device and a user plane network element. The second device receives, from a first device, information about service flow sending time. The second device waits until the service flow sending time indicated by the information about the service flow sending time to send the first service flow. If the first service flow is an uplink service flow, the second device is the access network device or a translator corresponding to the access network device; or if the first service flow is a downlink service flow, the second device is the user plane network element.

According to the foregoing method, after receiving the first service flow at service flow arrival time, the second device waits until the service flow sending time indicated by the first device to send the first service flow. Therefore, the second device may send the first service flow based on the service flow sending time indicated by the first device. In other words, the first device configures time at which the second device sends the first service flow, and the second device waits, according to configuration and indication of the first device, until the specified service flow sending time to send the first service flow. Through coordinated configuration of the first device, even if the second device receives a plurality of service flows simultaneously or within a time period, congestion does not occur, so that a deterministic latency requirement of each flow can be met, and therefore overall network performance can be improved.

In a possible design, service flow sending time at which the second device sends a second service flow is different from the service flow sending time at which the second device sends the first service flow, the second service flow is a periodic service flow to be transmitted between the access network device and the user plane network element, and the second service flow and the first service flow arrive at the second device at the same time, or a difference between time at which the second service flow arrives at the second device and time at which the first service flow arrives at the second device is less than or equal to a threshold.

In a possible design, the information about the service flow sending time includes the service flow sending time or an offset of the service flow sending time relative to reference time. The service flow sending time is not later than latest sending time, and the latest sending time is determined based on information about service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device. Alternatively, the offset of the service flow sending time relative to the reference time does not exceed a maximum offset, and the maximum offset is determined based on information about service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

In a possible design, the service flow sending time is not earlier than earliest sending time, and the earliest sending time is determined based on the information about the service flow arrival time and the processing time of the first service flow in the second device. Alternatively, the offset of the service flow sending time relative to the reference time is greater than or equal to a minimum offset, and the minimum offset is determined based on the information about the service flow arrival time and the processing time of the first service flow in the second device.

In a possible design, parameters for determining the latest sending time, the maximum offset, the earliest sending time, or the minimum offset further include a jitter latency associated with the first service flow.

In a possible design, the information about the service flow sending time includes a gate control scheduling parameter.

In a possible design, the first device is a TSN application function network element, or the first device is a session management network element.

According to a third aspect, this application provides a communication apparatus. The apparatus is a first device or an apparatus having a function of the first device, and the apparatus includes:

a processing unit, configured to determine information about service flow arrival time, where the information about the service flow arrival time includes the service flow arrival time or an offset of the service flow arrival time relative to reference time, the service flow arrival time is time at which a first service flow arrives at a second device, and the first service flow is a periodic service flow to be transmitted between an access network device and a user plane network element, where the processing unit is configured to determine information about service flow sending time based on the information about the service flow arrival time; and a transceiver unit, configured to indicate the second device to wait, after receiving the first service flow, until the service flow sending time to send the first service flow. If the first service flow is an uplink service flow, the second device is the access network device or a translator corresponding to the access network device; or if the first service flow is a downlink service flow, the second device is the user plane network element.

In a possible design, when indicating the second device to wait, after receiving the first service flow, until the service flow sending time to send the first service flow, the transceiver unit is configured to send the information about the service flow sending time to the second device.

In a possible design, the information about the service flow sending time includes the service flow sending time or an offset of the service flow sending time relative to the reference time. The service flow sending time is not later than latest sending time, and the latest sending time is determined based on the information about the service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device. Alternatively, the offset of the service flow sending time relative to the reference time does not exceed a maximum offset, and the maximum offset is determined based on the information about the service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

In a possible design, the service flow sending time is not earlier than earliest sending time, and the earliest sending time is determined based on the information about the service flow arrival time and the processing time of the first service flow in the second device. Alternatively, the offset of the service flow sending time relative to the reference time is greater than or equal to a minimum offset, and the minimum offset is determined based on the information about the service flow arrival time and the processing time of the first service flow in the second device.

In a possible design, parameters for determining the latest sending time, the maximum offset, the earliest sending time, or the minimum offset further include a jitter latency associated with the first service flow.

In a possible design, service flow sending time that is determined by the first device and at which the second device sends a second service flow is different from the service flow sending time that is determined by the first device and at which the second device sends the first service flow, the second service flow is a periodic service flow to be transmitted between the access network device and the user plane network element, and the second service flow and the first service flow arrive at the second device at the same time, or a difference between time at which the second service flow arrives at the second device and the time at which the first service flow arrives at the second device is less than or equal to a threshold.

In a possible design, when determining the information about the service flow sending time based on the information about the service flow arrival time, the processing unit is configured to: obtain an offset selection value, where the offset selection value is greater than or equal to the minimum offset and less than or equal to the maximum offset, or the offset selection value is greater than or equal to an offset of the earliest sending time relative to the reference time and less than or equal to an offset of the latest sending time relative to the reference time; and determine the information about the service flow sending time based on the offset selection value.

In a possible design, the transceiver unit is configured to: send, to a fourth device, the minimum offset and the maximum offset, or the offset of the earliest sending time relative to the reference time and the offset of the latest sending time relative to the reference time; and receive the offset selection value from the fourth device.

In a possible design, the processing unit is further configured to determine, based on a packet delay budget for transmitting the first service flow between the second device and a third device, the processing time of the first service flow in the second device, and processing time of the first service flow in the third device, a latency requirement for transmitting the first service flow between the second device and the third device; and the transceiver unit is further configured to send the latency requirement to the fourth device. The third device is a device that is to receive the first service flow, and if the first service flow is an uplink service flow, the third device is the user plane network element, or if the first service flow is a downlink service flow, the third device is the access network device or the translator corresponding to the access network device.

In a possible design, when determining the information about the service flow sending time based on the offset selection value, the processing unit is configured to determine the information about the service flow sending time based on the offset selection value and the jitter latency associated with the first service flow.

In a possible design, the information about the service flow sending time includes a gate control scheduling parameter. The processing unit is configured to: obtain the cycle of the first service flow and the maximum burst size of the first service flow; determine a size of a maximum frame of the first service flow based on the maximum burst size of the first service flow; and determine the gate control scheduling parameter based on the cycle of the first service flow, the size of the maximum frame of the first service flow, and the offset selection value.

In a possible design, when the first service flow is an uplink service flow, the first service flow arrives at the second device through a terminal device. When determining the information about the service flow arrival time, the processing unit is configured to: obtain information about time at which the first service flow arrives at a translator on a terminal device side, residence time of the first service flow in the terminal device and in the translator on the terminal device side, and a packet delay budget for transmitting the first service flow between the terminal device and the second device; and determine the information about the service flow arrival time based on the information about the time at which the first service flow arrives at the translator on the terminal device side, the residence time of the first service flow in the terminal device and in the translator on the terminal device side, and the packet delay budget for transmitting the first service flow between the terminal device and the second device.

In a possible design, the first device is a time sensitive networking TSN application function network element. When obtaining the information about the time at which the first service flow arrives at the translator on the terminal device side, the residence time of the first service flow in the terminal device and in the translator on the terminal device side, and the packet delay budget for transmitting the first service flow between the terminal device and the second device, the processing unit is configured to determine the information about the time at which the first service flow arrives at the translator on the terminal device side. The transceiver unit is configured to receive, from a session management network element, the residence time of the first service flow in the terminal device and in the translator on the terminal device side, and the packet delay budget for transmitting the first service flow between the terminal device and the second device.

In a possible design, the first device is a session management network element. When the information about the time at which the first service flow arrives at the translator on the terminal device side, the residence time of the first service flow in the terminal device and in the translator on the terminal device side, and the packet delay budget for transmitting the first service flow between the terminal device and the second device are obtained, the transceiver unit is configured to: receive, from a policy control network element, the information about the time at which the first service flow arrives at the translator on the terminal device side; and receive, from the terminal device, the residence time of the first service flow in the terminal device and in the translator on the terminal device side. The processing unit is configured to determine the packet delay budget for transmitting the first service flow between the terminal device and the second device.

According to a fourth aspect, this application provides a communication apparatus. The apparatus is a second device or an apparatus having a function of the second device, and the apparatus includes: a transceiver unit, configured to: receive a first service flow, where the first service flow is a periodic service flow to be transmitted between an access network device and a user plane network element; and receive, from a first device, information about service flow sending time; and a processing unit, configured to wait until the service flow sending time indicated by the information about the service flow sending time to send the first service flow to a third device. If the first service flow is an uplink service flow, the second device is the access network device or a translator corresponding to the access network device; or if the first service flow is a downlink service flow, the second device is the user plane network element.

In a possible design, the information about the service flow sending time includes the service flow sending time or an offset of the service flow sending time relative to reference time. The service flow sending time is not later than latest sending time, and the latest sending time is determined based on information about service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device. Alternatively, the offset of the service flow sending time relative to the reference time does not exceed a maximum offset, and the maximum offset is determined based on information about service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

In a possible design, the service flow sending time is not earlier than earliest sending time, and the earliest sending time is determined based on the information about the service flow arrival time and the processing time of the first service flow in the second device. Alternatively, the offset of the service flow sending time relative to the reference time is greater than or equal to a minimum offset, and the minimum offset is determined based on the information about the service flow arrival time and the processing time of the first service flow in the second device.

In a possible design, parameters for determining the latest sending time, the maximum offset, the earliest sending time, or the minimum offset further include a jitter latency associated with the first service flow.

In a possible design, service flow sending time at which the second device sends a second service flow is different from the service flow sending time at which the second device sends the first service flow, the second service flow is a periodic service flow to be transmitted by the second device between the access network device and the user plane network element, and the second service flow and the first service flow arrive at the second device at the same time, or a difference between time at which the second service flow arrives at the second device and time at which the first service flow arrives at the second device is less than or equal to a threshold.

In a possible design, the information about the service flow sending time includes a gate control scheduling parameter.

In a possible design, the first device is a TSN application function network element, or the first device is a session management network element.

According to a fifth aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The functions may be implemented by hardware, or may be implemented by hardware by executing corresponding software. The hardware or the software includes one or more units that correspond to the foregoing functions.

According to a sixth aspect, this application provides a computer-readable storage medium. The computer-readable storage medium stores a computer program. When the computer program is run on an apparatus, the method in any one of the foregoing possible designs is performed.

According to a seventh aspect, this application provides a computer program product. The computer program product includes a computer program. When the computer program is run on an apparatus, the method in any one of the foregoing possible designs is performed.

According to an eighth aspect, this application provides a communication system. The system includes a first device and a second device. The first device is configured to perform the method in any possible design of the first aspect, and the second device is configured to perform the method in any possible design of the second aspect.

In a possible design, the first device is a TSN application function network element, or the first device is a session management network element.

In a possible design, if a first service flow is an uplink service flow, the second device is an access network device or a translator corresponding to the access network device; or if a first service flow is a downlink service flow, the second device is a user plane network element.

In a possible design, the system further includes a third device, and the third device is a device that is to receive the first service flow. When the first service flow is an uplink service flow, the third device is a user plane network element. When the first service flow is a downlink service flow, the third device is an access network device or a translator corresponding to the access network device.

According to a ninth aspect, this application provides a communication system. The system includes a second device and a third device. The second device is configured to perform the method in any possible design of the second aspect. The third device is a device that is to receive a first service flow.

For example, if the first service flow is an uplink service flow, the second device is an access network device or a translator corresponding to the access network device, and the third device is a user plane network element.

If the first service flow is a downlink service flow, the second device is a user plane network element, and the third device is an access network device or a translator corresponding to the access network device.

## BRIEF DESCRIPTION OF DRAWINGS

FIG. 1 is a schematic diagram of a fully centralized configuration model of a TSN system;
FIG. 2 is a schematic diagram of a forwarding path of a first service flow in a 5G system;
FIG. 3 is a schematic diagram of an evolved packet system architecture;
FIG. 4A is a system architecture diagram of interworking between a 3GPP network and a TSN system;
FIG. 4B is a system architecture diagram of interworking between a 3GPP network and a non-TSN system;
FIG. 5 is a schematic diagram of a long tail effect;
FIG. 6A is a schematic diagram of an architecture to which an embodiment of this application is applied;
FIG. 6B is a schematic diagram of another architecture to which an embodiment of this application is applied;
FIG. 7A is a schematic diagram of still another architecture to which an embodiment of this application is applied;
FIG. 7B is a schematic diagram of still another architecture to which an embodiment of this application is applied;
FIG. 8 is an overview flowchart of a communication method according to an embodiment of this application;
FIG. 9 is a schematic diagram of a forwarding path of a first service flow when the first service flow is an uplink service flow according to an embodiment of this application;
FIG. 10 is a schematic diagram of a forwarding path of a first service flow when the first service flow is a downlink service flow according to an embodiment of this application;
FIG. 11 is a schematic diagram of a gate control state corresponding to a transmission queue according to an embodiment of this application;
FIG. 12A is a schematic diagram of a gate control state according to an embodiment of this application;
FIG. 12B is a schematic diagram of another gate control state according to an embodiment of this application;
FIG. 12C is a schematic diagram of still another gate control state according to an embodiment of this application;
FIG. 12D is a schematic diagram of still another gate control state according to an embodiment of this application;
FIG. 12E is a schematic diagram of still another gate control state according to an embodiment of this application;
FIG. 13 is a transmission flowchart of a first service flow according to an embodiment of this application;
FIG. 14 is another transmission flowchart of a first service flow according to an embodiment of this application;
FIG. 15A and FIG. 15B are still another transmission flowchart of a first service flow according to an embodiment of this application;
FIG. 16 is still another transmission flowchart of a first service flow according to an embodiment of this application;
FIG. 17 is a schematic diagram of still another architecture to which an embodiment of this application is applied;
FIG. 18A and FIG. 18B are still another transmission flowchart according to an embodiment of this application;
FIG. 19 is a schematic diagram of a structure of an apparatus according to an embodiment of this application; and

FIG. 20 is a schematic diagram of another structure of an apparatus according to an embodiment of this application.

## DESCRIPTION OF EMBODIMENTS

The following clearly and completely describes technical solutions in embodiments of this application with reference to accompanying drawings in embodiments of this application. Clearly, the described embodiments are merely some but not all of embodiments of this application. In the specification, claims, and accompanying drawings of this application, terms such as "first" and "second" and corresponding numerals of the terms are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants thereof are intended to cover the non-exclusive inclusion, so that a process, method, system, product, or device that includes a series of units is not necessarily limited to those units, but may include other units not expressly listed or inherent to the process, method, product, or device.

In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The technical solutions provided in embodiments of this application may be applied to various communication systems. For example, the technical solutions are applicable to a long term evolution (long term evolution, LTE) system or a 5G system, or are applicable to another future-oriented new system, for example, a programmable user plane system. This is not specifically limited in embodiments of this application. In addition, terms "system" and "network" are interchangeable.

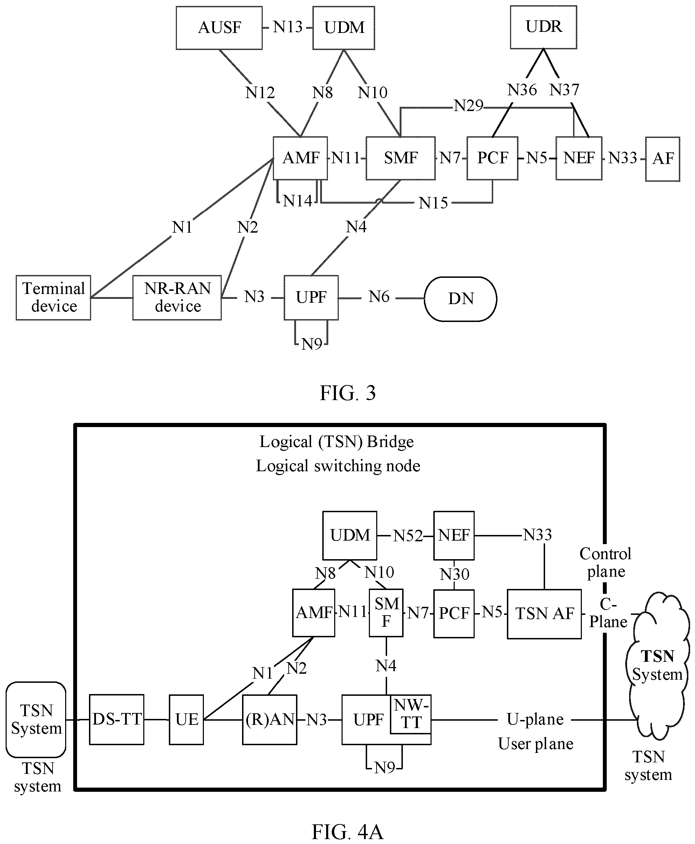

FIG. 3 is a schematic diagram of an evolved packet system (evolved packet system, EPS) architecture. The system architecture is divided into two parts: an access network and a core network. The access network is configured to implement functions related to radio access. An access network element includes a radio access network (radio access network, RAN) device. The core network mainly includes the following several network elements: an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, a unified data repository (unified data repository, UDR) network element, an authentication server function (authentication server function, AUSF) network element, a network exposure function (network exposure function, NEF) network element, and an application function (application function, AF) network element.

The following briefly describes devices in embodiments of this application with reference to FIG. 3.

A terminal device may be connected to an access network device, to access a communication system. The terminal device may also be referred to as a terminal, UE, a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used for the terminal device are not limited in embodiments of this application. As shown in FIG. 3, the terminal device may be UE.

An access network device may be a base station (base station), an evolved base station (evolved NodeB, eNodeB), a transmission reception point (transmission reception point, TRP), a gNB, a base station in a future mobile communication system, an access node in a Wi-Fi system, or the like. Alternatively, the access network device may be a module or unit that completes some functions of a base station, for example, may be a central unit (central unit, CU) or a distributed unit (distributed unit, DU). A specific technology and a specific device form that are used for the access network device are not limited in embodiments of this application. As shown in FIG. 3, the access network device may be an NR-RAN device.

An access management network element is used for mobility management, access management, and the like, for example, location update of a terminal device, registration of a terminal device with a network, and terminal device handover. The access management network element may be a mobility management entity (mobility management entity, MME) function in a 4G mobile communication system or an AMF network element in a 5G mobile communication system.

In a future mobile communication system, for example, a 6G mobile communication system, the access management network element may still be the AMF network element, or may have another name. This is not limited in this application. Namf is a service-based interface provided by the AMF. The AMF may communicate with another network function through the Namf. As shown in FIG. 3, the access management network element may be an AMF network element.

A session management network element is used for session management, for example, session establishment, modification, and release. The session management network element is further configured to: allocate an internet protocol (Internet Protocol, IP) address to a terminal device, select a UPF that provides a data packet forwarding function, and so on. In a 5G mobile communication system, the session management network element may be an SMF network element. In a future mobile communication system, for example, a 6G mobile communication system, the session management function network element may still be the SMF network element, or may have another name. This is not limited in this application. Nsmf is a service-based interface provided by the SMF. The SMF may communicate with another network function through the Nsmf. As shown in FIG. 3, the session management network element may be an SMF network element.

A policy control network element is configured to provide, for an access management network element or a session management network element, policy rule information and the like, for example, a quality of service (Quality of Service, QoS) policy and a slice selection policy. In a 5G mobile communication system, the policy control network element may be a PCF network element. In a future mobile communication system, for example, a 6G mobile communication system, the policy control function network element may still be the PCF network element, or may have another name. This is not limited in this application. As shown in FIG. 3, the policy control network element may be a PCF network element.

A data management network element is configured to store data of a terminal device, for example, subscription information and authentication/authorization information. In a 5G mobile communication system, the data management network element may be a UDM network element. In a future mobile communication system, for example, a 6G mobile communication system, the data management network element may still be the UDM network element, or may have another name. This is not limited in this application. As shown in FIG. 3, the data management network element may be a UDM network element.

A data repository network element is responsible for storing structured data, and stored content includes subscription data, policy data, externally exposed structured data, and application-related data. In a 5G mobile communication system, the data repository network element may be a UDR network element. In a future communication system, for example, a 6G mobile communication system, the data repository network element may still be the UDR network element, or may have another name. This is not limited in this application.

An authentication server function network element is mainly responsible for providing an authentication function and supporting authentication of 3GPP access and non-3GPP (Non-3GPP) access. In a 5G mobile communication system, the authentication server function network element may be an authentication server function AUSF network element. In a future communication system, for example, a 6G mobile communication system, the authentication server function network element may still be the AUSF network element, or may have another name. This is not limited in this application.

A network exposure function network element mainly provides a service, so that a 3GPP network can securely provide a network service capability to a third-party service provider, namely, an application function network element. In a 5G communication system, the network exposure function network element may be an NEF network element. In a future communication system, for example, a 6G mobile communication system, the network exposure function network element may still be the NEF network element, or may have another name. This is not limited in this application.

An application function network element is configured to provide a service for a 3GPP network, for example, affect service routing, and interact with a policy control network element for policy control. In 5G communication, the application function network element may be an AF network element. In future communication, for example, 6G communication, the application function network element may still be the AF network element, or may have another name. This is not limited in this application. As shown in FIG. 3, the application function network element may be an AF network element.

A user plane network element is configured to process a data packet of a terminal device, for example, perform forwarding and charging. In 5G communication, the user plane network element may be a UPF network element. In future communication, for example, 6G communication, the user plane network element may still be the UPF network element, or may have another name. This is not limited in this application. As shown in FIG. 3, the user plane network element may be a UPF network element.

A data network (data network, DN) is a network that provides a data transmission service for a terminal device. The data network may be a private network, for example, a local area network, or an external network that is not managed and controlled by an operator, for example, the internet (Internet), or a dedicated network deployed by an operator, for example, a network that provides an IP multimedia core network subsystem (IP multimedia core network subsystem, IMS) service. The terminal device may access the data network by establishing a connection from the terminal device to the data network through an access network device and a user plane network element.

Currently, a fully centralized configuration model is defined for a TSN system. FIG. 1 is a schematic diagram of the fully centralized configuration model of the TSN system. The following briefly describes functions of devices in FIG. 1.

A TSN terminal includes a talker and a listener. The talker and the listener are respectively a sender and a receiver of a service flow.

A CUC network element is responsible for discovering and managing the TSN terminal, obtaining capability information and a user requirement of the TSN terminal, sending a requirement of the service flow to a CNC network element, and configuring the TSN terminal according to indication of the CNC network element.

The CNC network element is configured to: determine an end-to-end (end-to-end, E2E) forwarding path of the service flow based on a topology of a user plane of the TSN system (including a topology between the TSN terminal and each switching node), capability information of each switching node, and the requirement of the service flow that is sent by the CUC network element, and configure a switching node on the forwarding path.

The switching node is configured to: send capability information of the switching node to the CNC network element, determine a gate control scheduling parameter based on configuration information of the CNC network element, and schedule and forward the service flow based on the gate control scheduling parameter.

FIG. 4A is a system architecture diagram of interworking between a 3GPP network and a TSN system. An entire 5G system (5G System, 5GS) is used as a switching node. A TSN application function (Application Function, AF) network element in the 5GS exchanges information with a node in the TSN system.

It should be noted that a DS-TT may be located inside UE or may be located outside the UE, and an NW-TT may be located inside a UPF. A downlink data packet is used as an example. The DS-TT may determine a gate control scheduling parameter based on configuration information sent by a CNC network element, and send the data packet based on the gate control scheduling parameter. To ensure that the data packet can be sent in time, time at which the data packet arrives at the DS-TT cannot be later than a specific moment, to ensure that the data packet can be sent in a gate opening process. The gate opening process refers to a range of duration in which a gate state is Open. If the data packet arrives at the DS-TT before start time, indicated by the gate control scheduling parameter, from which the gate state is Open, the data packet needs to be buffered at the DS-TT until time at which the gate state is Open for sending. If the data packet arrives at the DS-TT after the start time, indicated by the gate control scheduling parameter, from which the gate state is Open, the DS-TT needs to complete sending of the data packet before the gate state is switched to a closed state. Similarly, the NW-TT may also determine a gate control scheduling parameter based on configuration information sent by the CNC network element, and send a data packet based on the gate control scheduling parameter. For example, the NW-TT may send, to a next-hop switching node adjacent to the 5GS on a forwarding path, an uplink service flow received through the 5GS; or the NW-TT may be configured to receive a downlink service flow from a previous-hop switching node adjacent to the 5GS on a forwarding path, and send the downlink service flow to the 5GS.

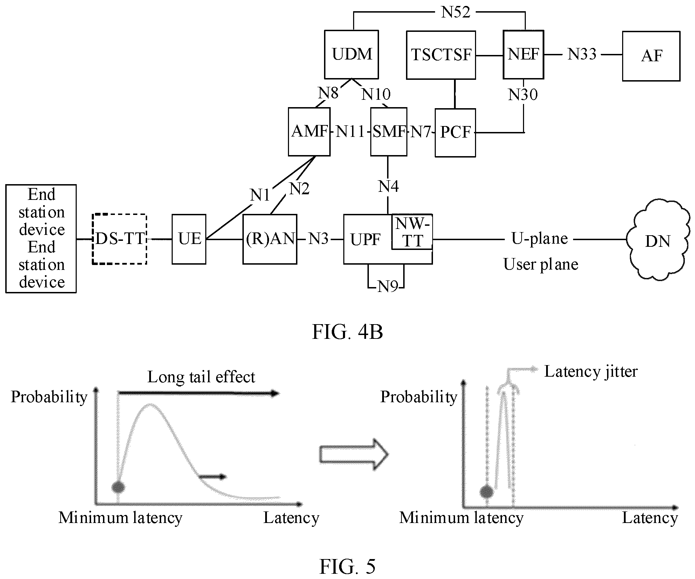

FIG. 4B is a system architecture diagram of interworking between a 3GPP network and a non-TSN system. In a non-TSN scenario, a time sensitive communication and time synchronization function (time sensitive communication and time synchronization function, TSCTSF) network element is used to support a clock synchronization service and enable a time sensitive communication (time sensitive communication, TSC) service in the non-TSN scenario. The TSCTSF network element in a 5GS directly exchanges information with an AF network element, or the TSCTSF exchanges information with the AF network element through an NEF.

As shown in FIG. 2, in a deterministic low-latency scenario, for example, in some industrial control scenarios, an end-to-end latency is required to be very low. For example, a latency between UE (or a DS-TT) and a UPF (or an NW-TT) needs to be less than 2 ms. However, transmission between a gNB and the UPF is performed in a tunnel mode. In other words, when a data packet of a service flow arrives at an egress port of the gNB, the UPF, or a transmission node (for example, a switch) between the gNB and the UPF, the data packet does not need to wait and is directly sent provided that there is an idle transmission resource. When data packets of several service flows simultaneously arrive at an egress port of one of the foregoing nodes (that is, a microburst scenario), a transmission latency of the data packet between the gNB and the UPF may be high due to congestion, for example, may exceed 0.5 ms. Consequently, an end-to-end transmission latency cannot meet a service requirement, for example, exceeds 2 ms, and implementation of an end-to-end low latency is affected. It may be understood that a forwarding path between the gNB and the UPF may further include at least one transmission node (not shown in FIG. 4A and FIG. 4B). The transmission node may be a switch (as shown in FIG. 2), a router, or the like.

As shown in FIG. 5, in a microburst scenario, a long tail effect occurs in latency distribution of a data packet, as shown in a left figure in FIG. 5. In other words, a maximum latency has no upper boundary or an upper boundary is a very large value. As a result, an end-to-end latency exceeds a transmission latency requirement of a service. To implement an end-to-end low latency, a latency of the data packet needs to be limited within a range, as shown in a right figure in FIG. 5. In other words, it is necessary to limit a latency jitter between a gNB and a UPF within a time range.

It should be noted that, in embodiments of this application, the data packet may also be referred to as a packet, a data packet, a data frame, a frame, or the like. The following uses only the data packet as an example for description.

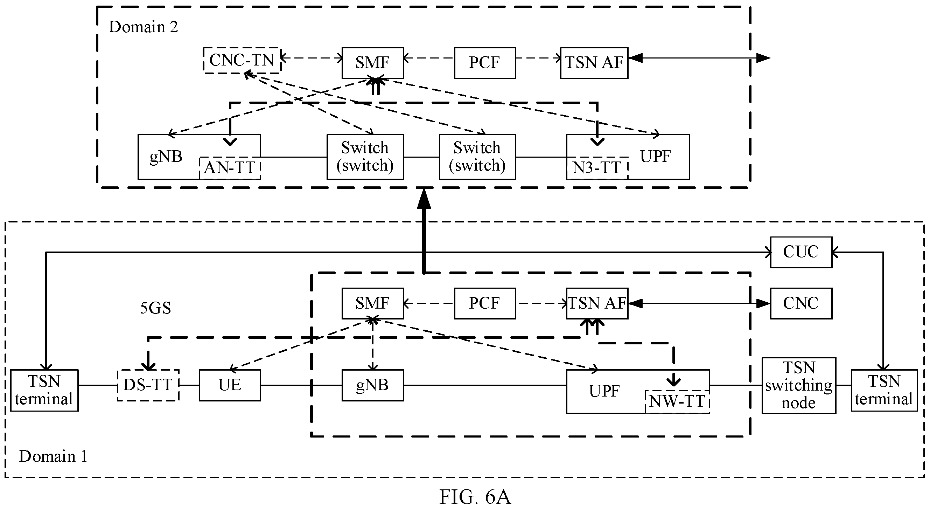

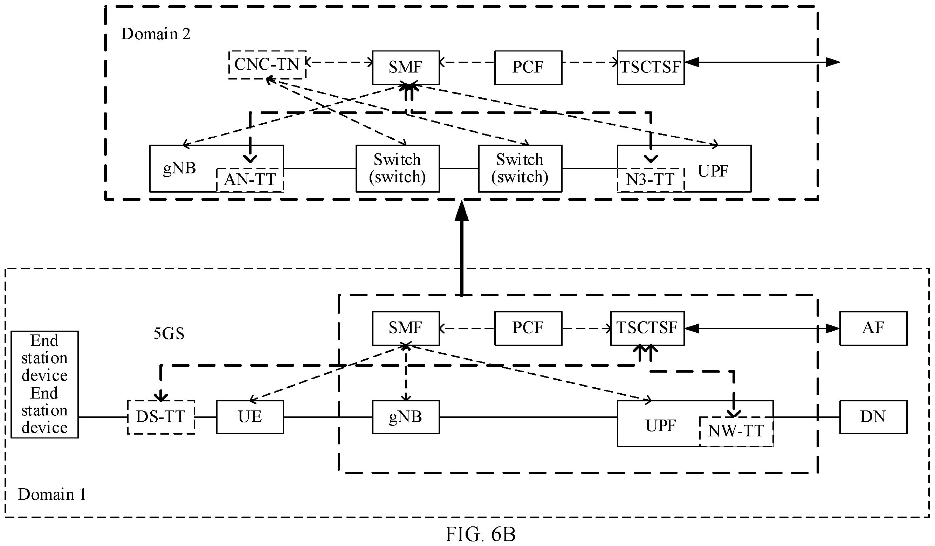

In a possible design, embodiments of this application may be applied to network architectures shown in FIG. 6A and FIG. 6B, to implement a low transmission latency between a gNB and a UPF. A network architecture in FIG. 6A is applicable to a TSN scenario, and a network architecture in FIG. 6B is applicable to a non-TSN scenario.

For example, as shown in FIG. 6A, two domains (domain) are involved in FIG. 6A. A domain 1 uses the architecture shown in FIG. 4A. A user plane includes a TSN terminal, a 5GS, another switching node, and a CUC network element. A CNC network element is a control plane network element in a TSN system, and a TSN AF exchanges information with the CNC network element. A dashed-line box in the domain 1 forms a domain 2, as shown in an upper part to which an arrow points in FIG. 6A. The domain 2 includes a gNB and a UPF network element in the 5GS, a switch between the gNB and the UPF network element, an SMF network element, a CNC-TN network element, a TSN AF network element, and a PCF network element. In the domain 2, a user plane includes the gNB and the UPF network element in the 5GS and the switch between the gNB and the UPF network element, and a control plane includes the SMF network element, the CNC-TN network element, the TSN AF network element, and the PCF network element.

In the domain 2, a translator corresponding to an access network device is added on a gNB side. The translator corresponding to the access network device may be denoted as an AN-TT (as shown in FIG. 6A). The AN-TT is configured to implement deterministic transmission between the gNB and the UPF network element, and is specifically described with reference to a following flowchart. The AN-TT may be located inside or outside the gNB. When the AN-TT is located inside the gNB, the AN-TT may be understood as a functional module integrated inside the gNB. Alternatively, when the AN-TT is located outside the gNB, it may be understood that the AN-TT and the gNB are two devices separately deployed. In this case, the AN-TT may be deployed between the gNB and UE, or the AN-TT may be deployed between the gNB and the UPF network element.

In addition, another translator corresponding to the UPF network element is added on a UPF network element side, and the translator is located inside the UPF network element. In other words, functional modules of two translators are integrated inside the UPF. One translator is the foregoing described NW-TT, and the other translator may be denoted as an N3 interface translator, namely, an N3-TT (as shown in FIG. 6A). The newly added N3-TT is configured to implement deterministic transmission between the gNB and the UPF, and is specifically described with reference to a following flowchart. Alternatively, a function of the existing NW-TT may be enhanced, so that the NW-TT has a function of the N3-TT. In this way, a functional module of one translator is reserved inside the UPF network element. In addition, if an intermediate user plane network element (intermediate UPF, I-UPF) is further included on a path between the gNB and the UPF network element, the newly added translator may be denoted as an N9-TT. An example in which the newly added translator is the N3-TT is only used below for description.

In addition, the two newly added translators may alternatively have other names. This is not limited in this application.

Based on a layout of the network architecture in FIG. 6A, in both the domain 1 and the domain 2, transmitting a first service flow by a user plane device can meet a deterministic latency requirement of the first service flow.

The network architecture shown in FIG. 6B also includes two domains. A domain 1 uses the architecture shown in FIG. 4B. A user plane includes an end station device (End station device), a 5GS, and another switching node, for example, a switching node in a DN. A control plane includes control plane network elements of the 5GS and an AF network element. A dashed-line box in the domain 1 forms a domain 2, as shown in an upper part to which an arrow points in FIG. 6B. The domain 2 includes a gNB and a UPF network element in the 5GS, a switch between the gNB and the UPF network element, an SMF network element, a CNC-TN network element, a TSCTSF network element, and a PCF network element. In the domain 2, a user plane includes the gNB and the UPF network element in the 5GS and the switch between the gNB and the UPF network element, and a control plane includes the SMF network element, the CNC-TN network element, the TSCTSF network element, and the PCF network element. Similarly, in the domain 2, an AN-TT and an N3-TT are newly added. For details, refer to the descriptions in FIG. 6A. Details are not described herein again. Based on a layout of the network architecture in FIG. 6B, in both the domain 1 and the domain 2, transmitting a first service flow by a user plane device can also meet a deterministic latency requirement of the first service flow.

In the network architectures shown in FIG. 6A and FIG. 6B, the SMF in the domain 2 is configured to implement a function of the following first device. Therefore, in the network architectures shown in FIG. 6A and FIG. 6B, the SMF is connected to the CNC-TN, and information may be exchanged through an interface between the SMF and the CNC-TN.

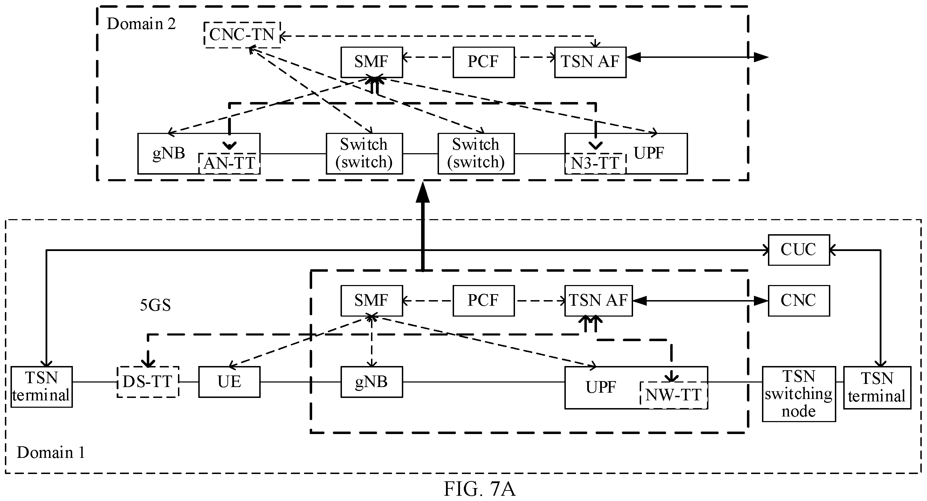

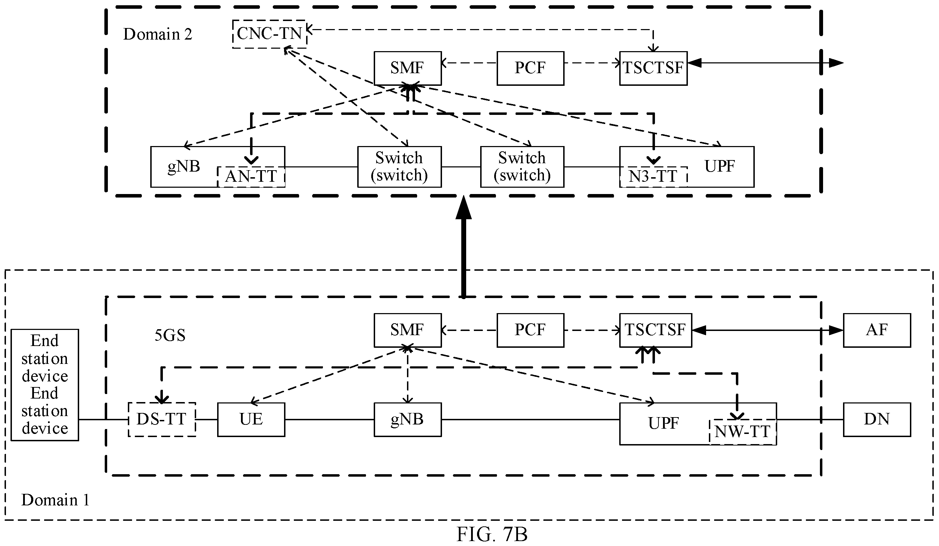

In a possible design, embodiments of this application may be applied to domains 2 shown in FIG. 7A and FIG. 7B, to implement a low transmission latency between a gNB and a UPF. A network architecture in FIG. 7A is applicable to a TSN scenario, and a network architecture in FIG. 7B is applicable to a non-TSN scenario.

For example, as shown in FIG. 7A, for a domain 1 and a domain 2, refer to related descriptions in FIG. 6A. A difference from FIG. 6A lies in that, in FIG. 7A, a TSN AF network element in the domain 2 may be configured to implement a function of a first device in the domain 2. Therefore, in the network architecture shown in FIG. 7A, the TSN AF is connected to a CNC-TN, and information may be exchanged through an interface between the TSN AF and the CNC-TN.

For example, as shown in FIG. 7B, for a domain 1 and a domain 2, refer to related descriptions in FIG. 6B. A difference from FIG. 6B lies in that, in FIG. 7B, a TSCTSF network element may be configured to implement a function of a first device in the domain 2. Therefore, in the network architecture shown in FIG. 7B, the TSCTSF is connected to a CNC-TN, and information may be exchanged through an interface between the TSCTSF and the CNC-TN.

It should be noted that, for FIG. 6A, FIG. 6B, FIG. 7A, and FIG. 7B, user plane forwarding behavior of the domain 1 may be independent of user plane forwarding behavior of the domain 2. To be specific, when the control plane of the domain 1 controls forwarding behavior of the 5GS, the 5GS is considered as a whole, and a transmission status inside the 5GS, to be specific, transmission between the UE and the gNB and between the gNB and the UPF network element, is not considered. When the control plane of the domain 2 controls forwarding behavior of the switching node in the domain 2, when the first service flow is an uplink service flow, the gNB and the UPF network element are respectively considered as a transmit end and a receive end of the first service flow, or the AN-TT and the N3-TT are respectively considered as a transmit end and a receive end of the first service flow. When the first service flow is a downlink service flow, the UPF network element and the gNB are respectively considered as a transmit end and a receive end of the first service flow, or the N3-TT and the AN-TT are respectively considered as a transmit end and a receive end of the first service flow. Time at which the transmit end sends a data packet is limited by time at which a 5GS node in the domain 1 receives the data packet from an upstream switching node, but specific sending and forwarding behavior may not be affected and controlled by the domain 1.

This application provides a communication method, to implement a low transmission latency between a gNB and a UPF, and improve overall network performance. In the method, deterministic transmission is supported between the gNB and the UPF, so that a data packet can arrive at the gNB or the UPF (or an NW-TT) within a predetermined time window, in other words, the long tail effect shown in FIG. 5 is avoided.

The communication method relates to a first device, a second device, and a third device. For example, the first device may be a session management network element, for example, the SMF network element in FIG. 6A or FIG. 6B; or the first network element is a TSN application function network element, for example, the TSN AF network element in FIG. 7A; or the first device may be a time sensitive communication and time synchronization function network element, for example, the TSCTSF network element in FIG. 7B. In an uplink case, the second device is an access network device or a translator (for example, the AN-TT) corresponding to the access network device, and the third device is a user plane network element. Alternatively, in a downlink case, the second device is a user plane network element (for example, the UPF having the function of the N3-TT), and the third device is an access network device.

Optionally, the method may further relate to a fourth device. For example, the fourth device may be the CNC-transport network (transport network, TN) in FIG. 6A, FIG. 6B, FIG. 7A, or FIG. 7B. The CNC-TN may be a new network element that has a function of the CNC network element, or the CNC-TN is a functional module in the first device. This is not limited in this application. For details, refer to the following related descriptions of the fourth device.

It should be noted that in a scenario in which a first service flow is an uplink service flow (corresponding to the following scenario 1), a packet delay budget (PDB 3) for transmitting the first service flow between a terminal device and the user plane network element indicates an upper limit of a latency from time at which the terminal device receives a data packet of the first service flow to time at which the user plane network element or the NW-TT completes processing of the data packet and sends the data packet to a next-hop node.

When the second device is the access network device and the third device is the user plane network element, the translator (namely, the AN-TT) corresponding to the access network device is used as a functional module inside the access network device. A packet delay budget (PDB 1) for transmitting the first service flow between the terminal device and the access network device indicates an upper limit of a latency from the time at which the terminal device receives the data packet of the first service flow to time at which the data packet of the first service flow arrives at a PDCP layer or an SDAP layer of the access network device. A packet delay budget (PDB 2) for transmitting the first service flow between the access network device and the user plane network element indicates an upper limit of a latency from time at which the data packet of the first service flow is sent from the PDCP layer or the SDAP layer of the access network device to the time at which the user plane network element or the NW-TT completes processing of the data packet and sends the data packet to the next-hop node. The PDB 3 is equal to a sum of the PDB 1 and the PDB 2.

In this case, a packet delay budget for transmitting the first service flow between the second device and the third device corresponds to the PDB 2.

When the second device is the translator (namely, the AN-TT) corresponding to the access network device and the third device is the user plane network element, the AN-TT is a device that is independently deployed outside the access network device. A packet delay budget (PDB 1') for transmitting the first service flow between the terminal device and the translator (namely, the AN-TT) corresponding to the access network device indicates an upper limit of a latency from the time at which the terminal device receives the data packet of the first service flow to time at which the data packet of the first service flow arrives at the AN-TT. A packet delay budget (PDB 2') for transmitting the first service flow between the translator corresponding to the access network device and the user plane network element indicates an upper limit of a latency from time at which the AN-TT receives the data packet of the first service flow to the time at which the user plane network element or the NW-TT completes processing of the data packet and sends the data packet to the next-hop node. The PDB 3 is equal to a sum of the PDB 1' and the PDB 2'.

In this case, a packet delay budget for transmitting the first service flow between the second device and the third device corresponds to the PDB 2'.

For example, in a scenario in which a first service flow is a downlink service flow (corresponding to the following scenario 2), a packet delay budget (PDB 6) for transmitting the first service flow between the user plane network element and a terminal device indicates an upper limit of a latency from time at which a packet of the first service flow is received by the user plane network element or the NW-TT from a previous-hop switching node to time at which the packet arrives at the terminal device (for example, an application layer of the terminal device).

When the second device is the user plane network element and the third device is the access network device, the translator (namely, the AN-TT) corresponding to the access network device is used as a functional module inside the access network device. A packet delay budget (PDB 4) for transmitting the first service flow between the user plane network element and the access network device indicates an upper limit of a latency from the time at which the packet of the first service flow is received by the user plane network element or the NW-TT from the previous-hop switching node to time at which a general packet radio service (general packet radio service, GPRS) tunnel protocol for the user plane (GPRS Tunnel Protocol for the user plane, GTP-U) layer of the access network device completes processing of the packet. A packet delay budget (PDB 5) for transmitting the first service flow between the access network device and the terminal device indicates an upper limit of a latency from time at which the packet of the first service flow is sent from a PDCP layer or an SDAP layer of the access network device to the time at which the packet of the first service flow arrives at the terminal device (for example, the application layer of the terminal device). The PDB 6 is equal to a sum of the PDB 4 and the PDB 5.

In this case, a packet delay budget for transmitting the first service flow between the second device and the third device corresponds to the PDB 4.

When the second device is the user plane network element and the third device is the translator (namely, the AN-TT) corresponding to the access network device, the AN-TT is a device that is independently deployed outside the access network device. A packet delay budget (PDB 4') for transmitting the first service flow between the user plane network element and the translator (namely, the AN-TT) corresponding to the access network device indicates an upper limit of a latency from time at which the user plane network element or the NW-TT receives the packet of the first service flow to time at which the AN-TT completes processing of the packet. A packet delay budget (PDB 5') for transmitting the first service flow between the translator (namely, the AN-TT) corresponding to the access network device and the terminal device indicates an upper limit of a latency from time at which the packet of the first service flow is sent from the AN-TT to the time at which the packet of the first service flow arrives at the terminal device (for example, the application layer of the terminal device). The PDB 6 is equal to a sum of the PDB 4' and the PDB 5'.

In this case, a packet delay budget for transmitting the first service flow between the second device and the third device corresponds to the PDB 4'.

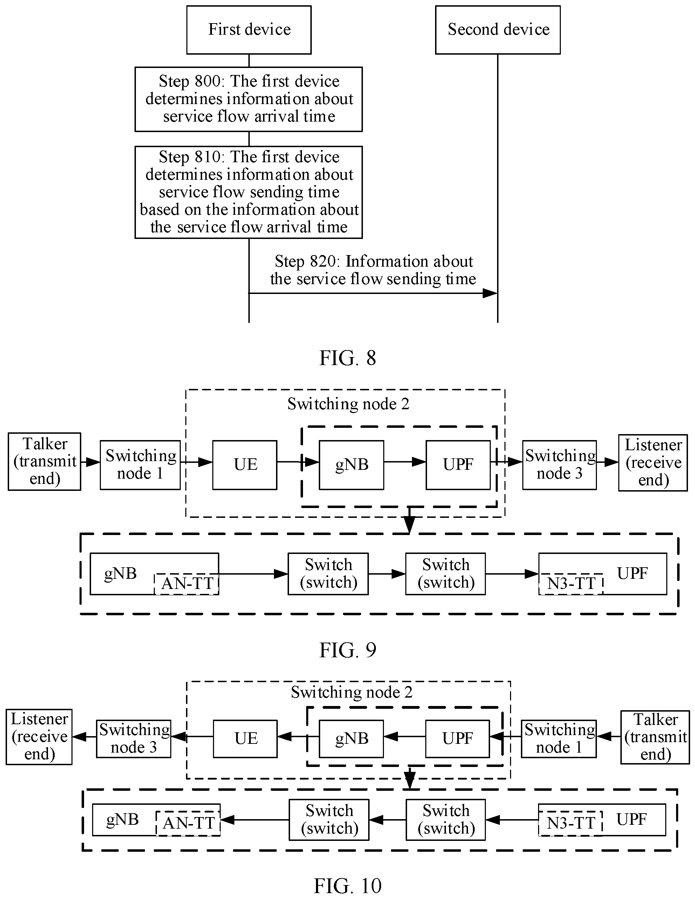

The following describes the communication method with reference to FIG. 8. FIG. 8 is a signaling interaction diagram of a communication method according to an embodiment of the present invention. As shown in FIG. 8, the method includes the following steps.

Step 800: A first device determines information about service flow arrival time, where the service flow arrival time is time at which a first service flow arrives at a second device, and the first service flow is a periodic service flow to be sent between an access network device and a user plane network element.

The information about the service flow arrival time may be the service flow arrival time, or may be an offset of the service flow arrival time relative to reference time.

The first service flow may be a TSN service flow that is referred to as a TSN flow for short. For example, the first service flow may be a TSN flow sent from a talker to a listener in FIG. 9. Alternatively, the first service flow may be a QoS flow obtained through aggregation, to be specific, a QoS flow that aggregates a plurality of TSN flows having same or similar features. A forwarding path of the first service flow may be determined by a CNC network element in a TSN system. In an example, a switching node in the forwarding path of the first service flow includes a mobile communication system, for example, a 4G system, a 5G system, or a 6G system. In other words, the entire mobile communication system is used as a switching node, for example, a switching node 2 shown in FIG. 9.

It may be understood that the first device may determine at least one of the service flow arrival time or the offset of the service flow arrival time relative to the reference time. In a possible implementation, the first device may first determine the offset of the service flow arrival time relative to the reference time, and then determine the service flow arrival time based on the offset of the service flow arrival time relative to the reference time. Alternatively, after determining the offset of the service flow arrival time relative to the reference time, the first device does not further determine the service flow arrival time. In another possible implementation, the first device may first determine the service flow arrival time, and then determine, based on the service flow arrival time, the offset of the service flow arrival time relative to the reference time. Alternatively, after determining the service flow arrival time, the first device does not further determine the offset of the service flow arrival time relative to the reference time.

A specific process in which the first device determines the information about the service flow arrival time is described below with reference to two scenarios by using examples.

Scenario 1: When the first service flow is an uplink service flow, the second device is the access network device or a translator corresponding to the access network device. In other words, the first service flow is an uplink service flow to be sent by the access network device to the user plane network element.

For example, that the second device is the access network device or a translator corresponding to the access network device may be understood as follows: If the translator corresponding to the access network device and the access network device are separately deployed, the second device may be the translator corresponding to the access network device. For example, the service flow arrival time may be time at which the first service flow arrives at the translator (for example, the foregoing AN-TT) corresponding to the access network device. If the translator corresponding to the access network device is used as a functional module inside the access network device, the second device may be an access network device that includes a translator function, in other words, the second device may be the access network device. Correspondingly, the service flow arrival time may be time at which the first service flow arrives at the access network device. For example, the service flow arrival time is time at which the first service flow arrives at a packet data convergence protocol (packet data convergence protocol, PDCP) layer or a service data adaptation protocol (Service Data Adaptation Protocol, SDAP) layer of the access network device.

In this case, a forwarding path of the first service flow in the mobile communication system includes at least a terminal device, the access network device, and the user plane network element. Optionally, on the forwarding path, at least one switch or router may be further included between the access network device and the user plane network element.

For example, as shown in FIG. 9, a 5G system is used as the switching node 2, and the first service flow is an uplink service flow. An entire forwarding path of the first service flow is: the talker, a switching node 1, the switching node 2, a switching node 3, and the listener. A forwarding path of the first service flow in the 5G system (namely, the switching node 2) is: UE, a gNB, and a UPF network element. In FIG. 9, a DS-TT and an NW-TT are not identified. With reference to FIG. 2, the forwarding path of the first service flow in the 5G system may be specifically: the DS-TT, the UE, the gNB, and the UPF network element (or the NW-TT). A forwarding path of the first service flow from the gNB to the UPF network element is: the gNB (an AN-TT, where the AN-TT is located inside the gNB as a functional module of the gNB), a transmission node 1, a transmission node 2, and the UPF network element (an N3-TT, where the N3-TT is located inside the UPF as a functional module of the UPF). Alternatively, a forwarding path of the first service flow from the gNB to the UPF network element is: the gNB, an AN-TT (where the AN-TT and the gNB are separately deployed), a transmission node 1, a transmission node 2, and the UPF network element (an N3-TT). In FIG. 9, an example in which the AN-TT is located inside the gNB as a functional module of the gNB is only used for description.

In an implementation, the first device may obtain information about time at which the first service flow arrives at a translator (for example, a DS-TT) on a terminal device side, residence time of the first service flow in the terminal device and in the translator on the terminal device side, and a packet delay budget for transmitting the first service flow between the terminal device and the second device.

For example, the information about the time at which the first service flow arrives at the translator (for example, the DS-TT) on the terminal device side specifically refers to information about time at which a data packet of the first service flow in a specific cycle arrives at the translator on the terminal device side, and may be determined based on burst arrival time (burst arrival time) at which the first service flow arrives at the DS-TT and a cycle of the first service flow. The information about the time at which the first service flow arrives at the translator on the terminal device side may be the time at which the first service flow arrives at the translator on the terminal device side or an offset of the time at which the first service flow arrives at the translator on the terminal device side relative to the reference time. The reference time refers to start time of a time domain (for example, 00:00:00 on January 1, 1970).

The residence time of the first service flow in the terminal device and in the translator on the terminal device side may be residence time of the first service flow between the DS-TT and the UE in FIG. 2, that is, UE-DS-TT Residence Time.

Further, the first device may determine the service flow arrival time or the offset of the service flow arrival time relative to the reference time based on the information about the time at which the first service flow arrives at the translator on the terminal device side, the residence time of the first service flow in the terminal device and in the translator on the terminal device side, and the packet delay budget for transmitting the first service flow between the terminal device and the second device. An example is provided below:

$$T1\ (uplink)=Burst\ Arrival\ Time\ 1+UE\text{-}DS\text{-}TT\ Residence\ Time+PDB \qquad \text{Formula (1)}$$

$$\text{T1-offset (uplink)=Burst Arrival Time 1*+UE-DS-TT Residence Time+PDB} \quad \text{Formula} \quad (2)$$

T1 (uplink) indicates service flow arrival time in an uplink scenario, and T1-offset (uplink) indicates an offset of the service flow arrival time relative to the reference time in the uplink scenario. Burst Arrival Time 1 indicates time at which the first service flow arrives at the DS-TT, and Burst Arrival Time 1* indicates an offset of the time at which the first service flow arrives at the DS-TT relative to the reference time. UE-DS-TT Residence Time indicates residence time of the first service flow in the terminal device and in the DS-TT. PDB indicates the packet delay budget for transmitting the first service flow between the terminal device and the second device, and may be the foregoing PDB 1 or PDB 1'. For example, residence time of service flows in the terminal device and in the translator on the terminal device side may be the same or may be different.

It may be understood that, when the first device is implemented by using different devices, manners in which the first device obtains the three parameters are also different. The following uses a manner 1 and a manner 2 as examples to describe a specific process in which the first device obtains the three parameters.

Manner 1: When the first device is a session management network element (for example, the SMF network element in FIG. 6A or FIG. 6B), the first device may obtain the three parameters in, but not limited to, the following manner.

For the information about the time at which the first service flow arrives at the translator on the terminal device side, the session management network element may determine, based on information obtained from a policy control network element, the information about the time at which the first service flow arrives at the translator on the terminal device side.

For example, the information about the time at which the first service flow arrives at the translator on the terminal device side specifically refers to information about time at which a data packet of the first service flow in a specific cycle arrives at the translator on the terminal device side.

For example, the policy control network element sends, to the session management network element, parameters such as information about burst arrival time of the first service flow, a cycle of the first service flow, and a direction of the first service flow.

The information about the burst arrival time of the first service flow may be time at which the 1$^{st}$ data packet in a data burst of the first service flow arrives at an ingress port of a 5G system, duration from the reference time to the time at which the 1$^{st}$ data packet in the data burst of the first service flow arrives at the ingress port of the 5G system, or an offset of the time at which the 1$^{st}$ data packet in the data burst of the first service flow arrives at the ingress port of the 5G system relative to the reference time. The reference time is start time of a time domain (for example, 00:00:00 on January 1, 1970). When the direction of the first service flow indicates that the first service flow is an uplink service flow, the ingress port of the 5G system herein refers to a port of the translator (for example, the DS-TT) on the terminal device side. In this case, the information about the burst arrival time of the first service flow is information about time at which the 1$^{st}$ data packet of the data burst of the first service flow arrives at the translator on the terminal device side.

In addition, the cycle of the first service flow may also be described as a time length of an interval between two adjacent points of burst start time of the first service flow.

In a possible implementation, the policy control network element may obtain, from a TSN application function network element (for example, the TSN AF network element shown in FIG. 6A) or time sensitive communication and time synchronization function network element (for example, the TSCTSF network element shown in FIG. 6B), the parameters such as the information about the burst arrival time of the first service flow, the cycle of the first service flow, and the direction of the first service flow.

For example, for the network architecture shown in FIG. 6A, the TSN AF network element is used as a control plane of the 5GS switching node, and the TSN AF network element determines the parameters based on information obtained from the CNC network element and sends the parameters to the policy control network element.

For another example, for the network architecture shown in FIG. 6B, the TSCTSF network element is used as a control plane of the 5GS switching node, and the TSCTSF network element determines the parameters based on information obtained from the application function network element and sends the parameters to the policy control network element.

For example, the policy control network element sends a policy control and charging (Policy Control and Charging, PCC) rule to the session management network element. The PCC rule includes the information about the burst arrival time of the first service flow, the cycle of the first service flow, and the direction of the first service flow. For example, the PCC rule includes a TSC assistance container (assistance container). The TSC assistance container carries the information about the burst arrival time of the first service flow, the cycle of the first service flow, and the direction of the first service flow.

In addition, the PCC rule may further include a service requirement description parameter. The service requirement description parameter is obtained by the policy control network element from the TSN application function network element or the time sensitive communication and time synchronization function network element. The service requirement description parameter may include at least one of a maximum burst size (maximum burst Size), a priority of the first service flow, a latency requirement of the first service flow, a maximum flow bit rate (maximum flow bit rate), and the like.

After receiving several parameters, to be specific, the information about the burst arrival time of the first service flow, the cycle of the first service flow, and the direction of the first service flow from the policy control network element, the session management network element may determine, based on these parameters, the information about the time at which the data packet of the first service flow in the specific cycle arrives at the translator on the terminal device side, namely, the information about the time at which the first service flow arrives at the translator on the terminal device side.

In other words, Burst Arrival Time 1 in the formula (1) or Burst Arrival Time 1 * in the formula (2) may be determined in the foregoing manner.

For the residence time of the first service flow in the terminal device and in the translator on the terminal device side, the session management network element may obtain, from the terminal device, the residence time of the first service flow in the terminal device and in the translator on the terminal device side.

For example, in a protocol data unit (protocol data unit, PDU) session establishment process, the session management network element may receive a PDU session establishment request message from the terminal device, where the PDU session establishment request message carries the residence time of the first service flow in the terminal device and in the translator on the terminal device side. Optionally, the PDU session establishment request message may further carry a media access control address (media access control Address, MAC) address of a DS-TT port.

In other words, UE-DS-TT Residence Time in the formula (1) or the formula (2) may be determined in the foregoing manner.

For the packet delay budget for transmitting the first service flow between the terminal device and the second device, the session management network element may determine the packet delay budget for transmitting the first service flow between the terminal device and the second device.

For example, the session management network element may determine a PDB 1 or a PDB 1' based on a 5G QoS identifier (5G QoS Identifier, 5QI) in the PCC rule. For example, the session management network element has configured a PDB 2 or a PDB 2', and may further determine a PDB 3 based on the 5QI. Further, a difference between the PDB 3 and the PDB 2 may be calculated, to obtain the PDB 1. Alternatively, a difference between the PDB 3 and the PDB 2' may be calculated, to obtain the PDB 1'. For details, refer to the foregoing related content.

In other words, the PDB 1 and the PDB 1' may be determined in the foregoing manner. An example in which the PDB is the PDB 1 is only used below for description.

Manner 2: When the first device is a TSN application function network element (for example, the TSN AF network element shown in FIG. 7A) or a time sensitive communication and time synchronization function network element (for example, the TSCTSF network element shown in FIG. 7B), the first device may obtain the three parameters in, but not limited to, the following manner.

For the information about the time at which the first service flow arrives at the translator on the terminal device side, the first device may determine the information about the time at which the first service flow arrives at the translator on the terminal device side.

For example, the information about the time at which the first service flow arrives at the translator on the terminal device side specifically refers to information about time at which a data packet of the first service flow in a specific cycle arrives at the translator on the terminal device side.

For example, when the first device is the TSN application function network element, the TSN application function network element is further used as a control plane of a 5GS switching node, and determines, based on information obtained from the CNC network element, parameters such as information about burst arrival time of the first service flow, a cycle of the first service flow, and a direction of the first service flow. For another example, when the first device is the time sensitive communication and time synchronization function network element, the time sensitive communication and time synchronization function network element is further used as a control plane of a 5GS switching node, and determines, based on information obtained from an application function network element, parameters such as information about burst arrival time of the first service flow, a cycle of the first service flow, and a direction of the first service flow.

The information about the burst arrival time of the first service flow may be time at which the 1st data packet in a data burst of the first service flow arrives at an ingress port of a 5G system, duration from the reference time to the time at which the 1st data packet in the data burst of the first service flow arrives at the ingress port of the 5G system, or an offset of the time at which the 1st data packet in the data burst of the first service flow arrives at the ingress port of the 5G system relative to the reference time. The reference time is start time of a time domain (for example, 00:00:00 on January 1, 1970). When the direction of the first service flow indicates that the first service flow is an uplink service flow, the ingress port of the 5G system herein refers to a port of the translator (for example, the DS-TT) on the terminal device side. In this case, the information about the burst arrival time of the first service flow is information about time at which the 1st data packet of the data burst of the first service flow arrives at the translator on the terminal device side.

For the residence time of the first service flow in the terminal device and in the translator on the terminal device side and the packet delay budget for transmitting the first service flow between the terminal device and the second device, it can be learned with reference to the manner 1 that a session management network element may obtain the residence time of the first service flow in the terminal device and in the translator on the terminal device side from the terminal device, and the session management network element may further determine the packet delay budget (namely, a PDB 1 or a PDB 1') for transmitting the first service flow between the terminal device and the second device. For example, the first device may directly receive the foregoing information from the session management network element, or receive the foregoing information from the session management network element through another network element (for example, a policy control network element). Alternatively, the session management network element stores the foregoing information in a data repository network element (for example, a UDR network element) through a data management network element (for example, a UDM network element), and the first device may obtain the foregoing information from the data repository network element.

Scenario 2: When the first service flow is a downlink service flow, the second device is the user plane network element. In other words, the first service flow is a downlink service flow to be sent by the user plane network element to the access network device.

In this case, a forwarding path of the first service flow in the mobile communication system is: the user plane network element, the access network device, and a terminal device. Optionally, at least one switch or router may be further included between the user plane network element and the access network device.

For example, as shown in FIG. 10, a 5G system is used as a switching node 2, and the first service flow is a downlink service flow. A forwarding path of the first service flow is: a talker, a switching node 1, the switching node 2, a switching node 3, and a listener. A forwarding path of the first service flow in the 5G system (namely, the switching node 2) is: a UPF network element, a gNB, and UE. In FIG. 10, a DS-TT and an NW-TT are not identified. With reference to FIG. 2, the forwarding path of the first service flow in the 5G system may be specifically: the UPF (or the NW-TT), the gNB, the UE, and the DS-TT. A forwarding path of the first service flow from the UPF network element to the gNB is: the UPF network element (an N3-TT, where the N3-TT is located inside the UPF as a functional module of the UPF), a transmission node 1, a transmission node 2, and the gNB (an AN-TT, where the AN-TT is located inside the gNB as a functional module of the gNB). Alternatively, a forwarding path of the first service flow from the UPF network element to the gNB is: the UPF network element (an N3-TT), a transmission node 1, a transmission node 2, an AN-TT (where the AN-TT is located outside the gNB), and the gNB. In FIG. 10, an example in which the AN-TT is located inside the gNB as a functional module of the gNB is only used for description.

In an implementation, the information about the service flow arrival time is information about time at which the first service flow arrives at the user plane network element, or may be understood as information about time at which the first service flow arrives at an NW-TT. The NW-TT is located inside the user plane network element, and the time at which the first service flow arrives at the NW-TT is equal to the time at which the first service flow arrives at the user plane network element. The information about the service flow arrival time may include the time at which the first service flow arrives at the user plane network element, or an offset of the time at which the first service flow arrives at the user plane network element relative to the reference time. An example is provided below:

$$\text{T1 (downlink)} = \text{Burst Arrival Time 2} \qquad \text{Formula (3)}$$

$$\text{T1-offset (downlink)} = \text{Burst Arrival Time 2*} \qquad \text{Formula (4)}$$

T1 (downlink) indicates service flow arrival time in a downlink scenario, and T1-offset (downlink) indicates an offset of the service flow arrival time relative to the reference time in the downlink scenario. Burst Arrival Time 2 indicates the time at which the first service flow arrives at the NW-TT, and Burst Arrival Time 2* indicates an offset of the time at which the first service flow arrives at the NW-TT relative to the reference time.

Similarly, when the first device is implemented by using different devices, manners in which the first device obtains the information about the service flow arrival time are also different. The following uses a manner 3 and a manner 4 as examples to describe a specific process in which the first device obtains the information about the service flow arrival time.

Manner 3: When the first device is a session management network element (for example, the SMF network element in FIG. 6A or FIG. 6B), the first device may receive the information about the service flow arrival time from a policy control network element.

The manner 3 is similar to the manner 1 in which the session management network element may obtain, from the policy control network element, the information about the time at which the first service flow arrives at the translator on the terminal device side. A difference lies in: Because information about burst arrival time of the first service flow may be time at which the 1st data packet in a data burst of the first service flow arrives at an ingress port of a 5G system, duration from the reference time to the time at which the 1st data packet in the data burst of the first service flow arrives at the ingress port of the 5G system, or an offset of the time at which the 1st data packet in the data burst of the first service flow arrives at the ingress port of the 5G system relative to the reference time, when a direction of the first service flow indicates that the first service flow is a downlink service flow, the ingress port of the 5G system herein refers to a port of the NW-TT. In this case, the information about the burst arrival time of the first service flow is information about time at which the 1st data packet of the data burst of the first service flow arrives at the NW-TT.

Manner 4: When the first device is a TSN application function network element or a time sensitive communication and time synchronization function network element, the first device may determine the information about the service flow arrival time.

The manner 4 is similar to the manner 2 in which the first device may determine the information about the time at which the first service flow arrives at the translator on the terminal device side. A difference lies in: Because information about burst arrival time of the first service flow may be time at which the 1st data packet in a data burst of the first service flow arrives at an ingress port of a 5G system, duration from the reference time to the time at which the 1st data packet in the data burst of the first service flow arrives at the ingress port of the 5G system, or an offset of the time at which the 1st data packet in the data burst of the first service flow arrives at the ingress port of the 5G system relative to the reference time, when a direction of the first service flow indicates that the first service flow is a downlink service flow, the ingress port of the 5G system herein refers to a port of the NW-TT. In this case, the information about the burst arrival time of the first service flow is information about time at which the 1st data packet of the data burst of the first service flow arrives at the NW-TT.

Step 810: The first device determines information about service flow sending time based on the information about the service flow arrival time.

In a first implementation, the first device determines earliest sending time and latest sending time based on the information about the service flow arrival time. The earliest sending time may be understood as earliest time at which the second device sends the first service flow, and the latest sending time may be understood as latest time at which the second device sends the first service flow. The service flow sending time is not earlier than the earliest sending time, and the service flow sending time is not later than the latest sending time. The first device may determine, as the service flow sending time, time that is not earlier than the earliest sending time and not later than the latest sending time. The service flow sending time may be understood as time recommended for the second device to send the service flow.

The earliest sending time is a sum of the service flow arrival time and processing time of the first service flow in the second device.

For example, in a scenario in which a jitter is not considered:

$$\text{T2=T1+processing time of the second device} \quad \text{Formula (5-1)}$$

T2 indicates the earliest sending time. T1 indicates the service flow arrival time, and may be T1 (uplink) obtained according to the formula (1) or T1 (downlink) obtained according to the formula (3).

For example, when the first service flow is an uplink service flow:

$$\text{T2 (uplink)=T1 (uplink)+}T_{AN} \quad \text{Formula (5-2)}$$

$T_{AN}$ is processing time of the first service flow in the access network device or the AN-TT.

In addition, the first device may further skip a process of calculating T1 (uplink), and directly calculate T2 (uplink):

$$\text{T2 (uplink)=Burst Arrival Time 1+UE-DS-TT Residence Time+PDB+}T_{AN} \quad \text{Formula (5-3)}$$

For example, when the first service flow is a downlink service flow:

$$\text{T2 (downlink)=T1 (downlink)+}T_{UPF} \quad \text{Formula (5-4)}$$

$T_{UPF}$ is processing time of the first service flow in the user plane network element.

In addition, the first device may further skip a process of calculating T1 (downlink), and directly calculate T2

(downlink):

$$T2\ (uplink)=\text{Burst Arrival Time 2}+T_{UPF}\qquad\text{Formula (5-5)}$$

In a scenario in which a jitter is considered:

$$T2=T1+\text{processing time of the second device}+\text{Jitter}\qquad\text{Formula (6-1)}$$

For example, when the first service flow is an uplink service flow:

$$T2\ (uplink)=T1\ (uplink)+T_{AN}+\text{Jitter}\qquad\text{Formula (6-2)}$$

For example, when the first service flow is a downlink service flow:

$$T2\ (downlink)=T1\ (downlink)+T_{UPF}+\text{Jitter}\qquad\text{Formula (6-3)}$$

In addition, in the scenario in which the jitter is considered, the first device may further skip a process of calculating T1, and directly calculate T2. Details are not described herein again.

Jitter (Jitter) indicates a jitter latency associated with the first service flow, is a sending latency caused by existence of a service flow having a same priority as the first service flow, and may be determined based on a size of a maximum frame of the service flow having the same priority as the first service flow.

For example, for a flow, if no flow having a same priority as the flow exists, a jitter value of the flow is 0. For a flow, if a flow having a same priority as the flow exists, a jitter value of the flow is affected by [MaxFrameSize] of all other flows having the same priority. [MaxFrameSize] refers to time required for sending a maximum data packet of the service flow, or longest time for sending a frame of the service flow.

For example, a flow J and a flow K have a same priority. It is determined, based on [MaxFrameSize] of the flow J, that longest time for sending a frame of the flow J is 120 $\mu$s, and it is determined, based on [MaxFrameSize] of the flow K, that longest time for sending a frame of the flow K is 80 $\mu$s. A jitter of the flow K depends on the longest time for sending a frame of flow J. For example, the jitter of the flow K is determined based on half of the longest time for sending a frame of the flow J, that is, 60 $\mu$s. It may be understood that, because the flow J and the flow K have the same priority, the flow J and the flow K enter a same send queue. When the flow J and the flow K simultaneously wait to be sent in the same send queue, if the flow J is sent first, the flow K needs to wait for maximum duration, where the maximum duration is the longest time for sending a frame of the flow J; if the flow K is sent first, the flow K needs to wait for minimum duration, where the minimum duration is 0. Therefore, herein, the jitter of the flow K is defined, based on a probability, as half of the longest time (120 $\mu$s) for sending a frame of the flow J, that is, 60 $\mu$s. Similarly, a jitter of the flow J is 40 $\mu$s.

For another example, a flow J, a flow K, and a flow G have a same priority. It is determined, based on [Max-FrameSize] of the flow J, that longest time for sending a frame of the flow J is 120 $\mu$s, it is determined, based on [MaxFrameSize] of the flow K, that longest time for sending a frame of the flow K is 80 $\mu$s, and it is determined, based on [MaxFrameSize] of the flow G, that longest time for sending a frame of the flow G is 100 $\mu$s. Similarly, a jitter of the flow J depends on the longest time for sending a frame of the flow K and the longest time for sending a frame of the flow G. For example, the jitter of the flow J is determined based on a sum of half of the longest time for sending a frame of the flow K and half of the longest time for sending a frame of the flow K, that is, the jitter of the flow J is 90 $\mu$s. Similarly, a jitter of the flow K is 110 $\mu$s, and a jitter of the flow G is 100 $\mu$s.

In addition, the processing time of the first service flow in the second device in the foregoing formula may be understood as time required by the second device to decapsulate a data packet of the first service flow, process the data packet of the first service flow, encapsulate the data packet of the first service flow, and send the encapsulated data packet to an egress port of the second device after the data packet of the first service flow arrives at the second device. The egress port is an egress port used by the second device to send the first service flow. In other words, the processing time of the first service flow in the second device may be understood as duration from time at which the second device receives the data packet of the first service flow to time at which the data packet arrives at the egress port of the second device and is ready for sending. For example, it is assumed that the second device receives the data packet of the first service flow from an upstream node at a moment t1, and the data packet arrives at the egress port of the second device at a moment t2 after being processed by the second device, and waits to be sent to a next device. In this case, t2-t1 is the processing time of the first service flow in the second device. The moment t1 corresponds to the service flow arrival time, and the moment t2 corresponds to the earliest sending time when the jitter is not considered.

In an implementation, when the second device is the user plane network element, t1 is time at which the data packet of the first service flow arrives at an ingress port of the NW-TT corresponding to the user plane network element, and t2 is time at which the data packet of the first service flow arrives at an egress port of the user plane network element or the NW-TT. For example, when a forwarding path from the second device to the access network device does not include an I-UPF, t2 is time at which the data packet of the first service flow arrives at an egress port of an N3-TT. The egress port herein is an egress port used for sending to the access network device or the AN-TT. For example, when a forwarding path from the second device to the access network device includes an I-UPF, t2 is time at which the data packet of the first service flow arrives at an egress port of an N9-TT. The egress port herein is an egress port used for sending to the I-UPF.

In another implementation, when the second device is the access network device, t1 is time at which the data packet of the first service flow arrives at the access network device after being transmitted over an air interface, for example, may be time at which the data packet of the first service flow arrives at the PDCP layer or the SDAP layer of the access network device, and t2 is time at which the data packet of the first service flow arrives at an egress port after being processed by the access network device.

In still another implementation, when the second device is the translator corresponding to the access network device, t1 is time at which the data packet of the first service flow arrives at the AN-TT outside the access network device after being transmitted over an air interface, and t2 is time at which the data packet of the first service flow arrives at an egress port after being processed by the AN-TT.

For example, the first device may obtain processing time information of the second device from the second device, and determine, based on the processing time information of the second device, the processing time of the first service flow in the second device.

The processing time information of the second device may include a 5QI and processing time of a service flow corresponding to the 5QI in the second device. Further, the first device may determine, based on a 5QI of the first service flow and the processing time information of the second device, the processing time of the first service flow in the second device.

Alternatively, the processing time information of the second device includes a data packet size range and processing time of a service flow that meets the data packet size range in the second device. Further, the first device may determine, based on a size of the data packet of the first service flow, a data packet size range within which the data packet of the first service flow falls, and determine, based on the processing time information of the second device, the processing time of the first service flow in the second device.

Alternatively, the processing time information of the second device includes processing time of a service flow in the second device, in other words, processing time of all service flows in the second device is of a same time length. Further, the second device determines the processing time of the service flow in the second device in the processing time information of the second device as the processing time of the first service flow in the second device.

With reference to the scenario 1 and the scenario 2, the following uses examples to describe an implementation in which the first device obtains the processing time information of the second device from the second device.

In correspondence to the scenario 1, when the translator corresponding to the access network device is used as a functional module inside the access network device, the first device may obtain the processing time information of the second device from the access network device. In this case, the processing time information of the second device is also referred to as processing time information of the access network device.

When the translator corresponding to the access network device is a device that is independently deployed outside the access network device, the translator corresponding to the access network device may send the processing time information of the second device to the access network device, and the first device may obtain the processing time information of the second device from the access network device; or the processing time information of the second device is configured on the access network device; or the first device may obtain the processing time information of the second device from the translator corresponding to the access network device. In this case, the processing time information of the second device is also referred to as processing time information of the translator corresponding to the access network device.

For example, when the first device is the session management network element, the access network device may send a setup request (NG Setup Request) message to an access and mobility management function network element when establishing a connection to the access and mobility management function network element, where the NG setup request message carries the processing time information of the second device. Alternatively, the access network device may send a configuration update (RAN Configuration Update) message to an access and mobility management function network element, where the RAN configuration update message carries the processing time information of the second device. Alternatively, in a registration process of a terminal device (for example, the 1st terminal device), the access network device may send the processing time information of the second device to an access and mobility management function network element. Further, the access and mobility management function network element sends the processing time information of the second device to the session management network element in a PDU session establishment process. Alternatively, the processing time information of the second device may be configured on the session management network element. Alternatively, in a session establishment process of a terminal device (for example, a session establishment request carries specific single network slice selection assistance information (single network slice selection assistance information, S-NSSAI) and a data network name (data network name, DNN)), the access network device may send the processing time information of the second device to the session management network element through an access and mobility management network element.

In correspondence to the scenario 2, the first device may obtain processing time information of the user plane network element from the user plane network element. For example, when the first device is the session management network element, the session management network element sends a request message to the user plane network element, where the request message is used to request the processing time information of the user plane network element. For example, the request message may be an N4 session establishment message or an N4 session modification request message. The user plane network element may send a response message for the request message to the first device, where the response message for the request message carries the processing time information of the user plane network element. For example, when the request message is the N4 session establishment message, the response message for the request message is a response message for the N4 session establishment message. When the request message is the N4 session modification request message, the response message for the request message is a response message for the N4 session modification message. Alternatively, the user plane network element may directly report the processing time information of the user plane network element to the session management network element, and the session management network element does not need to request, from the user plane network element, the processing time of the first service flow in the user plane network element. Alternatively, the processing time information of the user plane network element may be configured on the session management network element.

In addition, when the first device is a device other than the session management network element, the session management network element may send the processing time of the first service flow in the second device and the processing time information of the second device to the first device, and the first device may directly receive the foregoing information from the session management network element, or receive the foregoing information from the session management network element through another network element (for example, the policy control network element). Alternatively, the session management network element stores the foregoing information in the data repository network element (for example, the UDR network element) through the data management network element (for example, the UDM network element), and the first device may obtain the foregoing information from the data repository network element. Alternatively, the processing time information of the second device may be configured on the first device.

In the foregoing manner, the earliest sending time may be determined. In addition, the service flow sending time is not later than the latest sending time. The latest sending time may be determined in, but not limited to, the following manner A, manner B, or manner C:

Manner A: Because the first service flow is a periodic service flow, a data packet of the first service flow that currently arrives at the second device needs to be sent before a data packet of the first service flow in a next cycle arrives at the second device, in other words, the second device needs to send the data packet of the first service flow within duration corresponding to a cycle of the first service flow after the service flow arrival time. Therefore, latest time (namely, the latest sending time) at which the second device sends the data packet of the first service flow needs to be earlier than a sum of the service flow arrival time and the cycle of the first service flow. Further, to implement that before the data packet of the first service flow in the next cycle arrives at the second device, the data packet of the first service flow that currently arrives at the second device has been sent instead of being sent, based on the foregoing discussion, the latest time (namely, the latest sending time) at which the second device sends the first service flow may be equal to a difference between the sum of the service flow arrival time and the cycle of the first service flow and duration corresponding to sending of a maximum data packet of the first service flow.

For example, the latest sending time is determined based on the service flow arrival time, the cycle of the first service flow, and a size of a maximum frame of the first service flow.

In the scenario in which the jitter is not considered:

$$T3_A = T1 + Interval - [MaxFrameSize] \quad \text{Formula (7-1)}$$

$T3_A$ indicates latest sending time determined in the manner A. T1 indicates the service flow arrival time, and may be T1 (uplink) obtained according to the formula (1) or T1 (downlink) obtained according to the formula (3). Interval indicates the cycle of the first service flow, and [MaxFrameSize] indicates duration corresponding to sending of a data packet with a size of MaxFrameSize through the egress port of the second device, that is, the duration corresponding to sending of the maximum data packet of the first service flow.

For the cycle of the first service flow, refer to related content in the manner 1 to the manner 4. MaxFrameSize may be determined based on information obtained from the service requirement description parameter, and MaxFrameSize is a difference between the maximum burst size in the service requirement description parameter and a size of a media framing field. The media framing field may include at least one of a preamble, an IEEE 802.3 header, a priority or a virtual local area network identifier (VLAN Identifier, VID), a cyclic redundancy check (cyclic redundancy check, CRC), an interframe gap, and the like.

In addition, the first device may further skip a process of calculating T1 (uplink), and directly calculate $T3_A$ (uplink):

$$T3_A \text{ (uplink)} = \text{Burst Arrival Time 1} + \text{UE-DS-TT Residence Time} + \text{PDB} + \text{Interval} - [\text{MaxFrameSize}] \qquad \text{Formula (7-2)}$$

Similarly, the first device may further skip a process of calculating T1 (downlink), and directly calculate $T3_A$ (downlink):

$$T3_A \text{ (downlink)} = \text{Burst Arrival Time 2} + \text{Interval} - [\text{MaxFrameSize}] \qquad \text{Formula (7-3)}$$

Optionally, in the scenario in which the jitter is considered:

$$T3_A = T1 + \text{Interval} - [\text{MaxFrameSize}] - \text{Jitter} \qquad \text{Formula (8)}$$

It may be understood that, in the scenario in which the jitter is considered, the second device sends the data packet of the first service flow earlier than T1+Interval-[MaxFrameSize]-Jitter, so that when the data packet of the first service flow in the next cycle arrives at the second device, the data packet of the first service flow in a current cycle has been sent by the second device instead of being sent. Therefore, Jitter is subtracted herein.

Similarly, the first device may also skip a process of calculating T1. Details are not described herein again.

Manner B: After the first service flow arrives at the second device, the second device needs to process the first service flow, which is limited by maximum buffer duration of the first service flow in the second device. Therefore, latest time (namely, the latest sending time) at which the second device sends the first service flow may be equal to a sum of the service flow arrival time, the processing time of the first service flow in the second device, and the maximum buffer duration of the first service flow in the second device.

For example, the latest sending time is determined based on the service flow arrival time, the processing time of the first service flow in the second device, and the maximum buffer duration of the first service flow in the second device. The maximum buffer duration of the first service flow in the second device is maximum duration in which the first service flow can be buffered in the second device.

In the scenario in which the jitter is not considered:

$$T3_B = T1 + T' + T^* \qquad \text{Formula (9-1)}$$

$T3_B$ indicates latest sending time determined in the manner B. T1 indicates the service flow arrival time, and may be T1 (uplink) obtained according to the formula (1) or T1 (downlink) obtained according to the formula (3). T' indicates the processing time of the first service flow in the second device. T* indicates the maximum buffer duration of the first service flow in the second device.

In addition, the first device may further skip a process of calculating T1 (uplink), and directly calculate $T3_B$ (uplink):

$$T3_B \text{ (uplink)} = \text{Burst Arrival Time 1} + \text{UE-DS-TT Residence Time} + \text{PDB} + T' + T^* \qquad \text{Formula (9-2)}$$

The first device may further skip a process of calculating T1 (downlink), and directly calculate $T3_B$ (downlink):

$$T3_B \text{ (downlink)} = \text{Burst Arrival Time 2} + T' + T^* \qquad \text{Formula (9-3)}$$

In the scenario in which the jitter is considered:

$$T3_B = T1 + T' + T^* - \text{Jitter} \quad \text{Formula (10-1)}$$

It may be understood that, in the scenario in which the jitter is considered, the second device needs to send the data packet of the first service flow earlier than T1+T'+T*-Jitter, so that buffer time of the data packet of the first service flow in the second device does not exceed the maximum buffer duration.

Similarly, the first device may also skip a process of calculating T1. Details are not described herein again.

For the processing time T' of the first service flow in the second device that needs to be used to calculate the latest sending time in the manner B, refer to the descriptions of how to determine the processing time of the first service flow in the second device in determining the earliest sending time. Details are not described herein again.

In a possible implementation, the maximum buffer duration T* of the first service flow in the second device that needs to be used to calculate the latest sending time in the manner B is related to a buffer capability of the second device, or the maximum buffer duration of the first service flow in the second device is related to the 5QI corresponding to the first service flow, or the maximum buffer duration of the first service flow in the second device is related to the data packet size range. For example, the first device obtains maximum buffer duration information of the second device, and determines, based on the maximum buffer duration information of the second device, the maximum duration in which the first service flow can be buffered in the second device. For example, when the first device is the session management network element, the maximum buffer duration information includes at least one 5QI and maximum duration in which a service flow corresponding to each 5QI can be buffered in the second device. The session management network element may further determine the maximum buffer duration of the first service flow in the second device with reference to the 5QI of the first service flow. Alternatively, the maximum buffer duration information includes a data packet size range and maximum buffer duration of a service flow that meets the data packet size range in the second device. The session management network element may further determine the maximum buffer duration of the first service flow in the second device with reference to the size of the data packet of the first service flow. Alternatively, the maximum buffer duration information includes maximum buffer duration of a service flow in the second device, in other words, maximum buffer duration of all service flows in the second device is the same. An implementation in which the session management network element obtains the maximum buffer duration information of the second device may be the same as the implementation in which the first device obtains the processing time information of the second device from the second device. For details, refer to the descriptions in step 810. Details are not described herein again.

In another possible implementation, the first device determines the maximum buffer duration of the first service flow in the second device based on the processing time information of the second device, processing time information of the third device, a packet delay budget for transmitting the first service flow between the second device and the third device, and a maximum transmission latency of the first service flow between the second device and the third device. The maximum buffer duration T* of the first service flow in the second device=the packet delay budget for transmitting the first service flow between the second device and the third device-processing time of the first service flow in the third device-the processing time of the first service flow in the second device-maximum transmission latency of the first service flow between the second device and the third device.

For example, when the first device is the session management network element, the session management network element may determine, based on the 5QI corresponding to the first service flow, the packet delay budget for transmitting the first service flow between the second device and the third device, and determine the processing time of the first service flow in the second device based on the processing time information of the second device. The session management network element may further determine the maximum transmission latency of the first service flow between the second device and the third device, and further calculate the maximum buffer duration of the first service flow in the second device based on the foregoing parameters.

For example, for the packet delay budget for transmitting the first service flow between the second device and the third device, refer to related descriptions of the PDB 2 (or the PDB 2') and the PDB 4 (or the PDB 4') in the scenario 1 and the scenario 2. For example, the first service flow is an uplink service flow. If a latency requirement for transmitting the first service flow between the terminal device and the user plane network element is 2 ms, the session management network element may determine that a packet delay budget (the PDB 3) for transmission between the terminal device and the user plane network element is 2 ms, and the packet delay budget (the PDB 2) for transmission between the second device and the third device is 1 ms.

For the processing time of the first service flow in the second device, refer to the foregoing related descriptions.

The maximum transmission latency of the first service flow between the second device and the third device depends on a capability of each transmission node between the second device and the third device, and indicates a latency required for transmitting the first service flow between the second device and the third device. The maximum transmission latency of the first service flow between the second device and the third device is duration from time at which the second device (the access network device or the AN-TT) sends the data packet of the first service flow to time at which the third device (the user plane network element, the N3-TT, or the N9-TT) receives the data packet of the first service flow when the second device, the third device, and another transmission node between the second device and the third device forward the data packet of the first service flow based on a gate control scheduling parameter under control of a CNC-TN.

The maximum transmission latency of the first service flow between the second device and the third device may be preconfigured on the session management network element. For example, maximum transmission latencies between different access network devices (or translators corresponding to the access network devices) and different user plane network elements may be configured on the session management network element. Alternatively, the maximum transmission latencies may be configured based on different 5QIs. To be specific, for a specific access network device (or a translator corresponding to the access network device) and a specific user plane network element, corresponding maximum transmission latencies are separately preconfigured for different 5QIs, or a uniform value of a maximum transmission latency may be configured, in other words, 5QIs separately corresponding to different services are not distinguished.

The processing time of the first service flow in the third device may be understood as time required by the third device to decapsulate and process the data packet of the first service flow, encapsulate the first service flow, and send the encapsulated first service flow to an egress port of the third device after the data packet of the first service flow arrives at the third device. The egress port is an egress port used by the third device to send the first service flow to a next-hop device. In other words, the processing time of the first service flow in the third device may be understood as duration from the time at which the third device receives the data packet of the first service flow to time at which the data packet arrives at the egress port of the third device and is ready for sending. For example, it is assumed that the third device receives the data packet of the first service flow from an upstream node at a moment t3, and the data packet arrives at the egress port of the third device at a moment t4 after being processed by the third device, and waits to be sent to the next-hop device. In this case, t4-t3 is the processing time of the first service flow in the third device.

In an implementation, when the third device is the user plane network element, t3 is time at which the data packet of the first service flow arrives at an ingress port of the N3-TT or the N9-TT corresponding to the user plane network element, and t4 is time at which the data packet of the first service flow arrives at an egress port of the user plane network element or the NW-TT of the user plane network element. For example, when a forwarding path determined from the second device to the third device does not include an I-UPF, t3 is time at which the data packet of the first service flow arrives at an ingress port of the N3-TT. For example, when a forwarding path determined from the second device to the third device includes an I-UPF, t3 is time at which the data packet of the first service flow arrives at an ingress port of the N9-TT.

In another implementation, when the third device is the access network device, t3 is time at which the data packet of the first service flow arrives at the access network device after being transmitted over an N3 link, for example, may be time at which the data packet of the first service flow arrives at an ingress port of the access network device, and t4 is time at which the data packet of the first service flow arrives at the PDCP layer or the SDAP layer after being processed by the access network device.

In still another implementation, when the third device is the translator corresponding to the access network device, t3 is time at which the data packet of the first service flow arrives at an ingress port of the AN-TT outside the access network device after being transmitted over an N3 link, and t4 is time at which the data packet of the first service flow is processed by the AN-TT.

For example, the first device may obtain the processing time information of the third device from the third device, and determine, based on the processing time information of the third device, the processing time of the first service flow in the third device.

The processing time information of the third device may include a 5QI and processing time of a service flow corresponding to the 5QI in the third device. Further, the first device may determine, based on the 5QI of the first service flow and the processing time information of the third device, the processing time of the first service flow in the third device.

Alternatively, the processing time information of the third device includes a data packet size range and processing time of a service flow that meets the data packet size range in the third device. Further, the first device may determine, based on the size of the data packet of the first service flow, a data packet size range within which the data packet of the first service flow falls, and determine, based on the processing time information of the third device, the processing time of the first service flow in the third device.

Alternatively, the processing time information of the third device includes processing time of a service flow in the third device, in other words, processing time of all service flows in the third device is of a same time length, so that the third device determines the processing time of the service flow in the third device in the processing time information of the third device as the processing time of the first service flow in the third device.

In addition, when the first device is a device other than the session management network element, the session management network element may send the processing time of the first service flow in the third device or the processing time information of the third device to the first device.

With reference to the scenario 1 and the scenario 2, the following uses examples to describe an implementation in which the first device obtains the processing time information of the third device from the third device.

In correspondence to the scenario 1, the first device may obtain processing time information of the user plane network element from the user plane network element. For details, refer to the foregoing related content. Repeated parts are not described.

In correspondence to the scenario 2, the first device may obtain processing time information of the access network device or processing time information of the translator corresponding to the access network device. For details, refer to the foregoing related content. Repeated parts are not described.

In addition, when the first device is a device other than the session management network element, the session management network element may send the processing time of the first service flow in the third device and the processing time information of the third device to the first device, and the first device may directly receive the foregoing information from the session management network element, or receive the foregoing information from the session management network element through another network element (for example, the policy control network element). Alternatively, the session management network element stores the foregoing information in the data repository network element (for example, the UDR network element) through the data management network element (for example, the UDM network element), and the first device may obtain the foregoing information from the data repository network element. Alternatively, the processing time information of the third device may be configured on the first device.

In addition, when the first device is a device other than the session management network element, the session management network element may send the maximum buffer duration information of the second device or the maximum buffer duration of the first service flow in the second device to the first device, or the maximum buffer duration information of the second device may be configured on the first device.

In the foregoing manner, the first device may determine the maximum buffer duration of the first service flow in the second device, and then determine the latest sending time according to the formula (9-1), formula (9-2), formula (9-3), or formula (10-1).

In addition, the maximum buffer duration $T^*$ of the first service flow in the second device may not be first determined, and the latest sending time is directly determined in the foregoing manner of determining the maximum buffer duration $T^*$ of the first service flow in the second device with reference to the formula (9-1), formula (9-2), formula (9-3), or formula (10-1).

For example, in the scenario in which the jitter is not considered, it may be learned with reference to the formula (9-1):

$$T3_B = T1 + \text{packet delay budget transmitting the first service flow between the second device and the third device} - \text{processing time of the first service flow in the third device} - \text{maximum transmission latency of the first service flow between the second device and the third device} \qquad \text{Formula (9-4)}$$

In the scenario in which the jitter is considered, it may be learned with reference to the formula (10-1):

$$T3_B = T1 + \text{packet delay budget for transmitting the first service flow between the second device and the third device} - \text{processing time of the first service flow in the third device} - \text{maximum transmission latency of the first service flow between the second device and the third device} - \text{Jitter}$$

Manner C: Based on the manner A and the manner B, a smaller value of the latest sending time determined in the manner A and the latest sending time determined in the manner B is selected as the latest sending time. For example, a smaller value of $T3_A$ and $T3_B$ is selected.

It should be noted that the foregoing three manners of determining the latest sending time are merely examples.

Therefore, the first device may determine the earliest sending time and the latest sending time with reference to the foregoing manners, and then the first device may determine, as the service flow sending time, time that is not earlier than the earliest sending time and not later than the latest sending time. Alternatively, the first device may further determine, based on the determined service flow sending time, an offset of the service flow sending time relative to the reference time, and uses the offset as the information of the service flow sending time.

In a second implementation, the first device may directly determine an offset of the service flow sending time relative to the reference time.

For the second implementation, the first device may determine a minimum offset and a maximum offset based on the information about the service flow arrival time. The minimum offset is a minimum offset of time at which the second device sends the first service flow relative to the reference time, and is equal to an offset of the earliest sending time in the first implementation relative to the reference time. The maximum offset is a maximum offset of the time at which the second device sends the first service flow relative to the reference time, and is equal to an offset of the latest sending time in the first implementation relative to the reference time. Further, the first device may obtain an offset selection value, where the offset selection value is greater than or equal to the minimum offset and is less than or equal to the maximum offset. Further, the first device determines the information about the service flow sending time based on the offset selection value. The offset selection value may be used as the offset of the service flow sending time relative to the reference time, or a difference between the offset selection value and a jitter latency associated with the first service flow may be used as the offset of the service flow sending time relative to the reference time.

For example, the minimum offset may be an earliest transmission offset (EarliestTransmitOffset) in TSpec-TimeAware, and the earliest transmission offset is used to define an earliest time offset, relative to the reference time, of time at which the second device can start to send a data packet in the cycle (Interval) of the first service flow.

For the minimum offset, the first device may determine the minimum offset based on the information about the service flow arrival time and processing time of the first service flow in the second device. For example, the minimum offset is a sum of the offset of the service flow arrival time relative to the reference time and the processing time of the first service flow in the second device, or the minimum offset is a sum of the offset of the service flow arrival time relative to the reference time, the processing time of the first service flow in the second device, and the jitter latency associated with the first service flow.

For example, in a scenario in which a jitter is not considered:

$$\text{EarliestTransmitOffset}=\text{T1-offset}+\text{processing time of the second device} \quad \text{Formula (11-1)}$$

T1-offset indicates the offset of the service flow arrival time relative to the reference time, and may be T1-offset (uplink) obtained according to the formula (2) or T1-offset (downlink) obtained according to the formula (4).

For example, when the first service flow is an uplink service flow:

$$\text{EarliestTransmitOffset (uplink)}=\text{T1-offset (uplink)}+\text{T}_{AN} \quad \text{Formula (11-2)}$$

In addition, the first device may further skip a process of calculating T 1-offset (uplink), and directly calculate EarliestTransmitOffset (uplink):

$$\text{EarliestTransmitOffset (uplink)} = \text{Burst Arrival Time 1*}+\text{UE-DS-TT Residence Time}+\text{PDB}+\text{T}_{AN} \quad \text{Formula (11-3)}$$

For example, when the first service flow is a downlink service flow:

$$\text{EarliestTransmitOffset (downlink)}=\text{T1-offset (downlink)}+\text{T}_{UPF} \quad \text{Formula (11-4)}$$

In addition, the first device may further skip a process of calculating T1-offset (downlink), and directly calculate EarliestTransmitOffset (downlink):

$$\text{EarliestTransmitOffset (downlink)}=\text{Burst Arrival Time 2*}+\text{T}_{UPF} \quad \text{Formula (11-5)}$$

In a scenario in which a jitter is considered:

$$\text{EarliestTransmitOffset}=\text{T1-offset}+\text{processing time of the second device}+\text{Jitter} \quad \text{Formula (12-1)}$$

For example, when the first service flow is an uplink service flow:

$$\text{EarliestTransmitOffset (uplink)}=\text{T1-offset (uplink)}+\text{T}_{AN}+\text{Jitter} \quad \text{Formula (12-2)}$$

For example, when the first service flow is a downlink service flow:

$$\text{EarliestTransmitOffset (downlink)}=\text{T1-offset (downlink)}+\text{T}_{\text{UPF}}+\text{Jitter} \quad \text{Formula (12-3)}$$

Similarly, the first device may also skip a process of calculating T1-offset. Details are not described herein again.

For a specific manner in which the first device determines the processing time of the first service flow in the second device, refer to the foregoing related descriptions. Details are not described again.

For example, the maximum offset may be a latest transmission offset (LatestTransmitOffset) in TSpecTimeAware, and the latest transmission offset is used to define a latest time offset, relative to the reference time, of time at which the second device can start to send a frame in the cycle (Interval) of the first service flow.

For the maximum offset, the maximum offset corresponds to the latest sending time. Therefore, for a manner in which the first device determines the maximum offset, refer to the foregoing manner of determining the latest sending time.

Manner A*: In the scenario in which the jitter is not considered:

$$\text{LatestTransmitOffset}=\text{T1-offset}+\text{Interval}-[\text{MaxFrameSize}] \quad \text{Formula (13-1)}$$

In addition, the first device may further skip a process of calculating T1-offset (uplink), and directly calculate LatestTransmitOffset (uplink):

LatestTransmitOffset (uplink) = Burst Arrival Time 1*+UE-DS-TT Residence Time+PDB+Interval-[MaxFrameSize]
  Formula (13-2)

The first device may further skip a process of calculating T1-offset (downlink), and directly calculate LatestTransmitOffset (downlink):

$$\text{LatestTransmitOffset (downlink)}=\text{Burst Arrival Time 2*}+\text{Interval}-[\text{MaxFrameSize}] \quad \text{Formula (13-3)}$$

In the scenario in which the jitter is considered: LatestTransmitOffset=T1-offset+Interval-[MaxFrameSize]-Jitter Formula (14)

Similarly, the first device may also skip a process of calculating T1-offset. Details are not described herein again.

For the manner A*, refer to related descriptions of the manner A corresponding to the latest sending time in the first implementation.

Manner B*: In the scenario in which the jitter is not considered:

$$\text{LatestTransmitOffset}=\text{T1-offset}+\text{T'}+\text{T}^* \quad \text{Formula (15-1)}$$

In addition, the first device may further skip a process of calculating T 1-offset (uplink), and directly calculate LatestTransmitOffset (uplink):

LatestTransmitOffset (uplink)=Burst Arrival Time 1*+UE-DS-TT Residence Time+PDB+T'+T*  Formula (15-2)

The first device may further skip a process of calculating T1-offset (downlink), and directly calculate LatestTransmitOffset (downlink):

$$\text{LatestTransmitOffset (downlink)}=\text{Burst Arrival Time 2*}+\text{T'}+\text{T}^* \quad \text{Formula (15-3)}$$

In the scenario in which the jitter is considered:

LatestTransmitOffset=T1-offset+T'+T*-Jitter  Formula (16)

Similarly, the first device may also skip a process of calculating T1-offset. Details are not described herein again.

For the manner B*, refer to related descriptions of the manner B corresponding to the latest sending time in the first implementation.

Manner C*: Based on the manner A* and the manner B*, a smaller value of the maximum offset determined in the manner A* and the maximum offset determined in the manner B* is selected as the maximum offset.

For the manner C*, refer to related descriptions of the manner C corresponding to the latest sending time in the first implementation.

For example, after the minimum offset and the maximum offset are determined in the foregoing manners, the first device may obtain the offset selection value in, but not limited to, the following manner.

In a possible design, the first device sends the minimum offset and the maximum offset to a fourth device. The fourth device may determine the offset selection value based on the minimum offset and the maximum offset, and send the offset selection value to the first device.

In addition, the foregoing method is also applicable to the first implementation. For example, the first device sends the offset of the earliest sending time relative to the reference time and the offset of the latest sending time relative to the reference time to the fourth device. The fourth device may determine the offset selection value based on the offset of the earliest sending time relative to the reference time and the offset of the latest sending time relative to the reference time, and send the offset selection value to the first device. The offset selection value of the first service flow is greater than or equal to the minimum offset of the first service flow, and is less than or equal to the maximum offset of the first service flow.

It may be understood that the offset of the earliest sending time relative to the reference time is equal to the minimum offset, and the offset of the latest sending time relative to the reference time is equal to the maximum offset. The following only uses the maximum offset and the minimum offset as an example for description.

In a possible implementation, in addition to the minimum offset and the maximum offset of the first service flow, the fourth device may further obtain a minimum offset and a maximum offset of a second service flow. The second service flow and the first service flow arrive at the second device at the same time, or a difference between time at which the second service flow arrives at the second device and time at which the first service flow arrives at the second device is less than or equal to a threshold.

The fourth device may determine the offset selection value of the first service flow and an offset selection value of the second service flow based on the minimum offset and the maximum offset of the first service flow and the minimum offset and the maximum offset of the second service flow.

The offset selection value of the first service flow is greater than or equal to the minimum offset of the first service flow and is less than or equal to the maximum offset of the first service flow, and the offset selection value of the second service flow is greater than or equal to the minimum offset of the second service flow and is less than or equal to the maximum offset of the second service flow, so that a deterministic latency requirement of the first service flow and a deterministic latency requirement of the second service flow can be ensured. In addition, a difference between the offset selection value of the first service flow and the offset selection value of the second service flow is greater than or equal to duration corresponding to a data packet of MaxFrameSize of the first service flow (when the fourth device determines that the offset selection value of the first service flow is less than the offset selection value of the second service flow) or duration corresponding to a data packet of MaxFrameSize of the second service flow (when the fourth device determines that the offset selection value of the first service flow is greater than the offset selection value of the second service flow), to avoid congestion between the first service flow and the second service flow.

Optionally, the first device may further send the priority of the first service flow to the fourth device. The fourth device may determine the offset selection value based on the obtained maximum offset and minimum offset of the first service flow and the priority of the first service flow. For example, for a service flow with a high priority, a small offset selection value is set. A smaller offset selection value indicates shorter time for caching a data packet of a service flow in the second device, and a larger offset selection value indicates longer time for caching a data packet of a service flow in the second device. A small offset selection value is set for a service flow with a high priority, to ensure that a data packet of the service flow is preferentially sent, and therefore ensure a low transmission latency of the service flow.

Optionally, the first device may further send a priority of the second service flow to the fourth device, and the fourth device may comprehensively consider priorities of service flows to determine an offset selection value for each service flow.

Optionally, the first device further sends, to the fourth device, a maximum latency requirement for transmitting the first service flow between the second device and the third device. The fourth device may determine the offset selection value with reference to the maximum latency requirement for transmitting the first service flow between the second device and the third device, the minimum offset, and the maximum offset, and send the offset selection value to the first device. The maximum latency requirement for transmitting the first service flow between the second device and the third device is a maximum allowable value of duration from time at which the second device sends the first service flow to time at which the third device receives the first service flow or duration from time at which the third device sends the first service flow to time at which the second device receives the first service flow.

For example, the first device may determine, based on the packet delay budget for transmitting the first service flow between the second device and the third device and the processing time of the first service flow in the second device, the maximum latency requirement for transmitting the first service flow between the second device and the third device. For the packet delay budget for transmitting the first service flow between the second device and the third device and the processing time of the first service flow in the second device, refer to the foregoing descriptions. Details are not described herein again. For example, the maximum latency requirement for transmitting the first service flow between the second device and the third device=the packet delay budget for transmitting the first service flow between the second device and the third device-the processing time of the first service flow in the second device.

For another example, the first device may determine, based on the packet delay budget for transmitting the first service flow between the second device and the third device, the processing time of the first service flow in the second device, and the processing time of the first service flow in the third device, the maximum latency requirement for transmitting the first service flow between the second device and the third device. For the processing time of the first service flow in the third device, refer to the foregoing descriptions. Details are not described herein again. For example, the maximum latency requirement for transmitting the first service flow between the second device and the third device=the packet delay budget for transmitting the first service flow between the second device and the third device-the processing time of the first service flow in the second device-the processing time of the first service flow in the third device.

It may be understood that a smaller value of the maximum latency requirement indicates a higher latency requirement of the service flow, and the service flow needs to be sent as soon as possible. A larger value of the maximum latency requirement indicates a lower latency requirement of the service flow, and the service flow does not need to be sent as soon as possible.

For example, when the first service flow is an uplink service flow, the SMF network element may determine the maximum latency requirement MaxLatency between the second device and the third device based on the packet delay budget (the PDB 2) (or the PDB 2') for transmitting the first service flow between the second device and the third device, the processing time ($T_{AN}$) of the first service flow in the access network device or the AN-TT, and the processing time ($T_{UPF}$) of the first service flow in the user plane network element. The following uses the PDB 2 as an example:

$$MaxLatency=PDB\ 2-T_{AN}-T_{UPF}$$

When the first service flow is a downlink service flow, the SMF network element may determine the maximum latency requirement MaxLatency between the second device and the third device based on the packet delay budget (the PDB 4) (or the PDB 4') for transmitting the first service flow between the second device and the third device, the processing time ($T_{UPF}$) of the first service flow in the user plane network element, and the processing time ($T_{AN}$) of the first service flow in the access network device or the AN-TT. The following uses the PDB 4 as an example:

$$MaxLatency=PDB\ 4-T_{UPF}-T_{AN}$$

For example, the fourth device may determine the offset selection value in, but not limited to, the following manner:

In an implementation, the fourth device may determine the offset selection value based on the obtained maximum offset and minimum offset of the first service flow and the maximum latency requirement of the service flow. For example, a small offset selection value is set for a service flow with a small value of a maximum latency requirement for transmitting the service flow between the second device and the third device. A smaller offset selection value indicates shorter time for caching a data packet of a service flow in the second device, and a larger offset selection value indicates longer time for caching a data packet of a service flow in the second device. A small offset selection value is set for a service flow with a high latency requirement, to ensure that a data packet of the service flow is preferentially sent, and therefore ensure a low transmission latency of the service flow.

Optionally, the first device may further send maximum latency requirements of a plurality of service flows to the fourth device, and the fourth device may comprehensively consider maximum latency requirements of service flows to determine an offset selection value for each service flow. For example, if a maximum latency requirement of a service flow between the second device and the third device is small, the fourth device may determine a value close to a minimum offset corresponding to the service flow as an offset selection value corresponding to the service flow; if a maximum latency requirement of a service flow between the second device and the third device is large, the fourth device may determine a value close to a maximum offset as an offset selection value corresponding to the service flow.

It should be noted that a specific method for determining the offset selection value by the fourth device is not limited in this application. The foregoing content is merely an example and is not intended to limit this application. In addition, the foregoing manners may be combined.

In another possible design, the first device may autonomously determine the offset selection value based on the minimum offset and the maximum offset.

It may be understood that the first device and the fourth device are integrated, or the first device integrates a function of the fourth device.

According to the foregoing method, the first device may obtain the offset selection value, and use the offset selection value as the offset of the service flow sending time relative to the reference time, or use the difference between the offset selection value and the jitter latency associated with the first service flow as the offset of the service flow sending time relative to the reference time, to obtain the offset of the service flow sending time relative to the reference time.

Step 820: The first device indicates the second device to wait, after receiving the first service flow, until the service flow sending time to send the first service flow.

For example, when the first service flow is an uplink service flow, and the second device is the access network device, the first device may send the information about the service flow sending time to the access network device. When the second device is the AN-TT, the first device may directly send the information about the service flow sending time to the AN-TT. Alternatively, the first device may first send the information about the service flow sending time to the access network device, and then the access network device notifies the AN-TT of the information. When the first service flow is a downlink service flow, the first device may send, to the user plane network element (the N3-TT), information indicating the service flow sending time.

In a first possible design, the information about the service flow sending time includes the offset of the service flow sending time relative to the reference time or the service flow sending time.

It may be understood that, in some special cases, the offset selection value may also be equal to the minimum offset, in other words, the service flow sending time may be equal to the earliest sending time. The following uses the offset selection value as an example for description. For example, at a specific moment, no service flow other than the first service flow arrives at the second device, and the second device may send the first service flow based on the minimum offset. For another example, three service flows arrive at the second device at the same time, where the service flows are separately a service flow a, a service flow b, and a service flow c. For the service flow a, an offset selection value corresponding to the service flow a may be equal to a minimum offset corresponding to the service flow a. In this case, after the service flow a arrives at the second device and is processed by the second device, the second device immediately sends the service flow a to the third device. For the service flow b, an offset selection value corresponding to the service flow b may be greater than a minimum offset corresponding to the service flow b and less than or equal to a maximum offset corresponding to the service flow b (where the offset selection value corresponding to the service flow b is denoted as a first value). In this case, after the service flow b arrives at the second device and is processed by the second device, the second device needs to wait for a period of time corresponding to a difference between the first value and the minimum offset corresponding to the service flow b before sending the service flow b to the third device. For the service flow c, an offset selection value corresponding to the service flow c may be greater than a minimum offset corresponding to the service flow c and less than or equal to a maximum offset corresponding to the service flow c (where the offset selection value corresponding to the service flow c is denoted as a second value), and the second value is greater than the first value. After the service flow c arrives at the second device and is processed by the second device, the second device needs to wait for a period of time corresponding to a difference between the second value and the minimum offset corresponding to the service flow c before sending the service flow c to the third device. Therefore, different service flow sending time is configured for service flows according to the foregoing method, so that congestion does not occur among data packets of the three service flows, and latency requirements of the three service flows can be separately met.

Optionally, the difference between the first value and the minimum offset is duration corresponding to a data packet of MaxFrameSize of the service flow a, and a difference between the second value and the first value is duration corresponding to a data packet of MaxFrameSize of the service flow b. Based on the foregoing setting, the service flow b may be sent after sending of the service flow a is completed, and the service flow c may be sent after sending of the service flow b is completed. In this way, sending congestion among the service flow a, the service flow b, and the service flow c can be better avoided, and network resources can be fully used, so that overall network performance can be improved.

For example, the fourth device sends interface configuration information for the second device to the first device. The first device sends the interface configuration information for the second device to the second device. For example, the interface configuration information for the second device includes an interface identifier (InterfaceID) of the second device and the information about the service flow sending time. The interface identifier of the second device is used to identify an interface of the second device, and may include a MAC address and an interface name (InterfaceName). The interface corresponding to the interface identifier of the second device is an egress port used to send the first service flow. In other words, the second device may learn, based on the interface identifier (InterfaceID) of the second device, which interface is used as the egress port for sending the first service flow, and with reference to the information about the service flow sending time, the second device may wait, based on the information about the service flow sending time, at the egress port until the service flow sending time to send the first service flow.

In addition, the fourth device may further send interface configuration information for the third device to the first device, and the first device sends the interface configuration information for the third device to the third device. For example, the interface configuration information for the third device includes an interface identifier of the third device. Optionally, the interface configuration information for the third device may further include the information about the service flow sending time. The interface identifier of the third device is used to identify an interface of the third device, and may include a MAC address and an interface name. The interface corresponding to the interface identifier of the third device is a receiving port used to receive the first service flow. In other words, the third device may learn, based on the interface identifier of the third device, which interface is used as the receiving port for receiving the first service flow.

In addition, the interface configuration information for the second device and the interface configuration information for the third device may further include a QoS flow identifier (QoS flow identifier, QFI) and a corresponding priority. When encapsulating the data packet of the first service flow, the second device may include, in an outer MAC, the priority corresponding to the QFI, so that a switching node on a path between the second device and the third device determines, based on the included priority of the QFI, a transmission queue corresponding to the data packet.

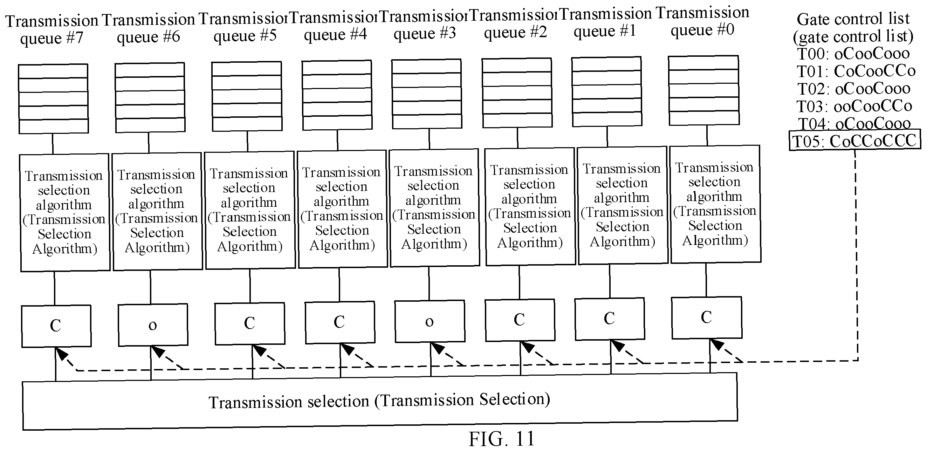

For example, as shown in FIG. 11, eight transmission queues correspond to different priorities, and the second device may determine, based on the priority of the QoS flow identifier, a transmission queue in which the data packet of the first service flow is located.

In a possible design, the information about the service flow sending time includes a gate control scheduling parameter.

For example, the first device may further determine the gate control scheduling parameter based on the cycle of the first service flow, the maximum burst size of the first service flow, and the service flow sending time. The gate control scheduling parameter herein is a first gate control scheduling parameter, in other words, the first gate control scheduling parameter is a gate control scheduling parameter determined by the first device. The first gate control scheduling parameter may include an administration value (AdminCycleTime) of a port gate control cycle, an administration value (AdminBaseTime) of base time, and an administration value (AdminControlList) of a port gate control list.

The second device determines a second gate control scheduling parameter based on the first gate control scheduling parameter. In other words, the second gate control scheduling parameter is a gate control scheduling parameter determined by the second device. The second gate control scheduling parameter may include an operation value (OperCycleTime) of the port gate control cycle, an operation value (OperBaseTime) of the base time, start time (CycleStartTime) of the gate control cycle, and an operation value (OperControlList) of the gate control list run at a port.

The following describes a relationship between the first gate control scheduling parameter and the second gate control scheduling parameter.

AdminCycleTime is used to configure a gate control cycle of each port. The second device uses the parameter to set OperCycleTime. AdminCycleTime and OperCycleTime may be the same, or may be different.

AdminBaseTime is used to configure start time of the gate control cycle of each port. Usually, AdminBaseTime indicates duration relative to start time of a time domain (for example, 00:00:00 on January 1, 1970). The second device uses the parameter to set OperBaseTime. AdminBaseTime and AdminBaseTime may be the same, or may be different. The second device may determine CycleStartTime based on OperBaseTime and OperCycleTime, where CycleStartTime=OperBaseTime+N*OperCycleTime, and N indicates an $N^{th}$ cycle and N is a positive integer.

AdminControlList is used to configure a transmission queue gate control action of each port, including a gate control state (gateState) and a time interval (TimeInterval), where gateState is a gate control state (Open or Closed) of each transmission queue of the port. If the gate control state is Open, the switching node may transmit the service flow; if the gate control state is Closed, the switching node cannot transmit the service flow. TimeInterval indicates duration of the gate control state. The switching node uses the parameter to set the operation value of OperControlList. AdminControlList and OperControlList may be the same, or may be different.

FIG. 11 is a schematic diagram of AdminControlList or OperControlList. A gate control list on the right side in FIG. 11 may represent AdminControlList or OperControlList. The following uses AdminControlList as an example for description. As shown in FIG. 11, at a moment corresponding to AdminBaseTime T00, gate control states separately corresponding to eight transmission queues corresponding to a sequence number 7 to a sequence number 0 are sequentially oCooCooo. C indicates that a gate control state is Closed, in other words, a data packet in a corresponding queue cannot be sent; o indicates that a gate control state is Open, in other words, a data packet in a corresponding queue can be sent. Duration of the states is duration from T00 to T01. In other words, at a moment corresponding to T01, the gate control states change. To be specific, at the moment corresponding to T01, gate control states separately corresponding to the eight transmission queues corresponding to the sequence number 7 to the sequence number 0 are sequentially CoCooCCo. For example, at a moment corresponding to T05, a gate control state of a transmission queue corresponding to the sequence number 7 is C, in other words, the second device does not transmit, at the moment corresponding to T05, a data packet in the transmission queue corresponding to the sequence number 7. At the moment corresponding to T05, a gate control state of a transmission queue corresponding to a sequence number 6 is o, in other words, the second device may transmit, at the moment corresponding to T05, a data packet in the transmission queue corresponding to the sequence number 6.

It may be understood that the second device may be configured to transmit a plurality of service flows, the plurality of service flows may arrive at the second device at the same time or may not arrive at the second device at the same time, and priorities of the plurality of service flows may be the same or different. Currently, when the priorities of the plurality of service flows are different, the second device may place each service flow into a different transmission queue based on a priority of the service flow. A plurality of service flows with a same priority are placed into a same transmission queue. For each transmission queue, the first device may determine a corresponding first gate control scheduling parameter based on a service flow that needs to be transmitted in the transmission queue, and the second device may determine, based on the first gate control scheduling parameter corresponding to the transmission queue, a second gate control scheduling parameter corresponding to the transmission queue. In other words, a gate control scheduling parameter corresponding to a transmission queue is used to schedule one or more service flows that have a same priority and that are transmitted by using the transmission queue.

Specifically, for a method for configuring the first gate control scheduling parameter by the first device, refer to the following examples:

Example 1: When a plurality of service flows with a same priority arrive at the same time, the first device places the plurality of service flows into one transmission queue, and sends a minimum offset and a maximum offset (and optionally, a priority) of each of the plurality of service flows to the fourth device. The fourth device may configure a different offset selection value for each service flow. For example, an interval, determined by the fourth device, between offset selection values of any two adjacently sent service flows in offset selection values separately corresponding to the plurality of service flows is not less than duration corresponding to a maximum data packet of a service flow that is first sent in the two service flows, so that no congestion occurs during sending of the plurality of service flows. In addition, an offset selection value corresponding to each service flow is greater than or equal to a minimum offset corresponding to the service flow, and is less than or equal to a maximum offset corresponding to the service flow, to meet deterministic latency requirements separately corresponding to the plurality of service flows. Further, the first device may determine, based on the offset selection values separately corresponding to the plurality of service flows, information about service flow sending time of each service flow, and send the information to the second device.

In addition, the first device may further determine AdminBaseTime based on a minimum value in the offset selection values separately corresponding to the plurality of service flows, determine AdminCycleTime based on a least common multiple of cycles separately corresponding to the plurality of service flows, and determine, based on duration corresponding to a maximum data packet of each service flow, duration in which a gate state is Open.

In other words, in this example, the first device sends the offset selection values of the service flows and a first gate control scheduling parameter to the second device.

For example, a periodic service flow J and a periodic service flow K have a same priority. Both the periodic service flow J and the periodic service flow K are downlink service flows. EarliestTransmitOffset corresponds to a minimum offset, LatestTransmitOffset corresponds to a maximum offset, and TimeAwareOffset corresponds to an offset selection value. In the following example, LatestTransmitOffset is calculated in the manner A* of determining the maximum offset. It may be understood that LatestTransmitOffset may alternatively be calculated in the manner B* or the manner C*. This is merely an example and is not limited in this embodiment of this application.

Parameters of the periodic service flow J are as follows:

<Maximum Burst Size in time> (indicating duration corresponding to sending of a maximum data packet of the periodic service flow J)=(120 $\mu$s in time);
processing time=100 $\mu$s;
Interval (indicating a cycle of the periodic service flow J)=500 $\mu$s; and
offset of arrival time of the periodic service flow J relative to reference time=1600,000,000,000,110 $\mu$s.

Parameters of the periodic service flow K are as follows:

<Maximum Burst Size in time> (indicating duration corresponding to sending of a maximum data packet of the periodic service flow K)=(80 $\mu$s in time);
processing time=100 $\mu$s;
Interval (indicating a cycle of the periodic service flow J)=500 $\mu$s; and
offset of arrival time of the periodic service flow K relative to the reference time=1600,000,000,000,110 $\mu$s.

In the scenario in which the latency jitter is not considered, EarliestTransmitOffset (corresponding to a minimum offset) and LatestTransmitOffset (corresponding to a maximum offset) of the flow J may be calculated according to the formula (11-4) and formula (13-1):

EarliestTransmitOffset=offset of the arrival time of the periodic service flow J relative to the reference time+processing time=1600,000,000,000,210 $\mu$s; and

LatestTransmitOffset=offset of the arrival time of the periodic service flow J relative to the reference time+500-120=1600,000,000,000,490 $\mu$s.

In the scenario in which the latency jitter is not considered, EarliestTransmitOffset (corresponding to a minimum offset) and LatestTransmitOffset (corresponding to a maximum offset) of the flow K may be calculated according to the formula (11-4) and formula (13-1):

EarliestTransmitOffset=offset of the arrival time of the periodic service flow K relative to the reference time+100 $\mu$s=1600,000,000,000,210 $\mu$s; and

LatestTransmitOffset=offset of the arrival time of the periodic service flow K relative to the reference time+500-80=1600,000,000,000,530 $\mu$s.

It is assumed that TimeAwareOffset (corresponding to offset selection values) returned by the fourth device is as follows:

for the periodic service flow J, TimeAwareOffset=1600,000,000,000,320 $\mu$s; and
for the periodic service flow K, TimeAwareOffset=1600,000,000,000,440 $\mu$s.

It should be noted that the fourth device may learn of <Maximum Burst Size in time> of the flow J and the flow K to obtain jitters through calculation. When determining TimeAwareOffset of each service flow, the fourth device may refer to <Maximum Burst Size in time>, so that a difference between TimeAwareOffset corresponding to the flow J and TimeAwareOffset corresponding to the flow K that are determined by the fourth device is equal to <Maximum Burst Size in time> of the flow J. Therefore, deterministic transmission of the flow J is ensured.

Further, it may be determined by the first device based on the foregoing result:

an offset 1600,000,000,000,320 $\mu$s of sending time of the periodic service flow J relative to the reference time, and an offset 1600,000,000,000,440 $\mu$s of sending time of the periodic service flow K relative to the reference time; and gate control scheduling parameters corresponding to the periodic service flow J and the periodic service flow K: AdminBaseTime of 1600,000,000,000,320 $\mu$s, AdminCycleTime of 500 $\mu$s, and AdminControlList, where for GateState=Open, TimeInterval=200 $\mu$s; and for GateState=Closed, TimeInterval=300 $\mu$s.

The first device sends the foregoing determined parameters to the second device, and it is determined by the second device based on these parameters:

the offset 1600,000,000,000,320 $\mu$s of the sending time of the periodic service flow J relative to the reference time, and the offset 1600,000,000,000,440 $\mu$s of the sending time of the periodic service flow K relative to the reference time; and
OperBaseTime, OperCycleTime, and OperControlList of the periodic service flow J and the periodic service flow K, where for example,
OperCycleTime=AdminCycleTime=500 $\mu$s;
OperBaseTime=AdminBaseTime= 1600,000,000,000,320 $\mu$s; and
AdminControlList is the same as OperControlList.

The second device may send the periodic service flow J to the third device based on the offset of the sending time of the periodic service flow J relative to the reference time and a second gate control scheduling parameter, and send the periodic service flow K to the third device based on the offset of the sending time of the periodic service flow K relative to the reference time and the second gate control scheduling parameter. This can meet deterministic latency requirements of the periodic service flow J and the periodic service flow K, and can also avoid congestion between the periodic service flow J and the periodic service flow K.

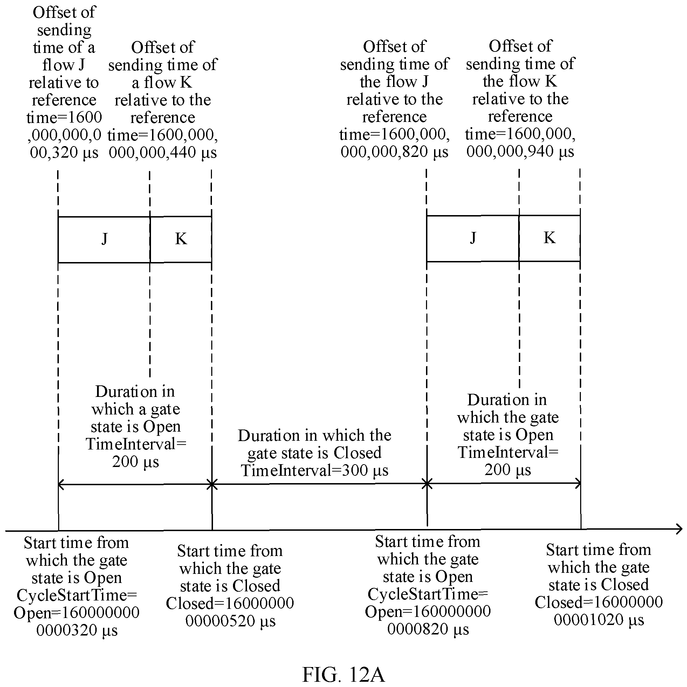

Descriptions are provided herein with reference to FIG. 12A. Because the duration corresponding to sending of the maximum data packet of the periodic service flow J is 120 $\mu$s, and the duration corresponding to sending of the maximum data packet of the periodic service flow K is 80 $\mu$s, the difference between TimeAwareOffset corresponding to the periodic service flow J and TimeAwareOffset corresponding to the periodic service flow K may be the duration corresponding to the maximum data packet of the periodic service flow J (that is, 120 $\mu$s). Duration in which a gate state remains in an open state in each cycle is 200 μs, in other words, the duration in which the gate state remains in the open state in each cycle is a sum of the duration corresponding to the maximum data packet of the periodic service flow J and the duration corresponding to the maximum data packet of the periodic service flow K. After the gate state is switched to Open for 200 μs, the gate state is switched to Closed. In addition, the cycle of the periodic service flow J is the same as the cycle of the periodic service flow K, that is, 500 μs. In other words, after the gate state is switched to Closed for 300 μs, a next cycle is entered, and the gate state is switched to Open again.

In the foregoing manner, different service flow sending time of the periodic service flow J and the periodic service flow K and the gate control scheduling parameters corresponding to the periodic service flow J and the periodic service flow K are configured, so that congestion between service flows that have a same priority and arrive at the second device at the same time can be avoided, and deterministic latency requirements of the service flows can be ensured.

Example 2: When a plurality of service flows with a same priority arrive at the same time, the first device places the plurality of service flows into one transmission queue, and sends a minimum offset, a maximum offset, and a priority of each of the plurality of service flows to the fourth device. The fourth device may configure an offset selection value for each service flow. An offset selection value corresponding to each service flow is greater than or equal to a minimum offset corresponding to the service flow, and is less than or equal to a maximum offset corresponding to the service flow, to meet deterministic latency requirements separately corresponding to the plurality of service flows. The first device may determine AdminBaseTime based on a minimum value in differences between offset selection values separately corresponding to the plurality of service flows and corresponding jitters, determine AdminCycleTime based on a least common multiple of cycles separately corresponding to the plurality of service flows, and determine, based on duration corresponding to a maximum data packet of each service flow, duration in which a gate state is Open.

In this case, the first device may not directly configure service flow sending time separately corresponding to the plurality of service flows, but implicitly indicate service flow sending time for the plurality of service flows by using AdminBaseTime. The service flow sending time may be service flow sending time of any service flow in the plurality of service flows, and another service flow is randomly sent after the service flow, in other words, a sending sequence of each service flow is not specified. Sufficient duration in which the gate state is Open is reserved, to ensure that the plurality of service flows can be all sent from the second device when the gate state is Open.

For example, a periodic service flow J and a periodic service flow K have a same priority. For specific parameters of the periodic service flow J and the periodic service flow K, refer to the descriptions in the example 1.

Similarly, jitters (jitter) of the periodic service flow J and the periodic service flow K may be calculated based on the foregoing related descriptions of the latency jitter:

for the periodic service flow J, Jitter=40 μs; and
for the periodic service flow K, Jitter=60 μs.

Therefore, EarliestTransmitOffset (corresponding to a minimum offset) and LatestTransmitOffset (corresponding to a maximum offset) of the flow J may be calculated according to the formula (12-3) and formula (14):

EarliestTransmitOffset=offset of arrival time of the periodic service flow J relative to reference time+processing time+Jitter=1600,000,000,000,250 μs; and
LatestTransmitOffset=offset of the arrival time of the periodic service flow J relative to the reference time+500-120-Jitter=1600,000,000,000,450 μs.

EarliestTransmitOffset (corresponding to a minimum offset) and LatestTransmitOffset (corresponding to a maximum offset) of the flow K may be calculated according to the formula (12-3) and formula (14):

EarliestTransmitOffset=offset of arrival time of the periodic service flow K relative to the reference time+100 μs+Jitter=1600,000,000,000,270 μs; and
LatestTransmitOffset=offset of the arrival time of the periodic service flow K relative to the reference time+500-80-Jitter=1600,000,000,000,470 μs.

It is assumed that TimeAwareOffset (corresponding to offset selection values) returned by the fourth device is as follows:

for the periodic service flow J, TimeAwareOffset=1600,000,000,000,320 μs; and
for the periodic service flow K, TimeAwareOffset= 1600,000,000,000,340 μs.

The first device subtracts a corresponding jitter from each TimeAwareOffset, to obtain: a difference between TimeAwareOffset corresponding to the flow J and the corresponding jitter is 1600,000,000,000,320-40=1600,000,000,000,280 μs, and a difference between TimeAwareOffset corresponding to the flow K and the corresponding jitter is 1600,000,000,000,340-60=1600,000,000,000,280 μs. Further, the first device may determine, based on the foregoing result, that AdminBaseTime is 1600,000,000,000 280 μs. The first device further determines that AdminCycleTime is 500 μs, and configures AdminControlList based on AdminCycleTime and <Maximum Burst Size in time>, where for GateState=Open, TimeInterval=200 μs; and for GateState=Closed, TimeInterval=300 μs.

It should be noted that the fourth device may determine, based on priorities of service flows sent by the first device, that the flow J and the flow K are service flows of a same priority, and obtain the jitters through calculation based on <Maximum Burst Size in time> of the flow J and the flow K. When determining TimeAwareOffset of each service flow, the fourth device may refer to a jitter, so that the difference between TimeAwareOffset corresponding to the flow J and the corresponding jitter and the difference between TimeAwareOffset corresponding to the flow K and the corresponding jitter that are determined by the first device correspond to a same time offset, namely, AdminBaseTime.

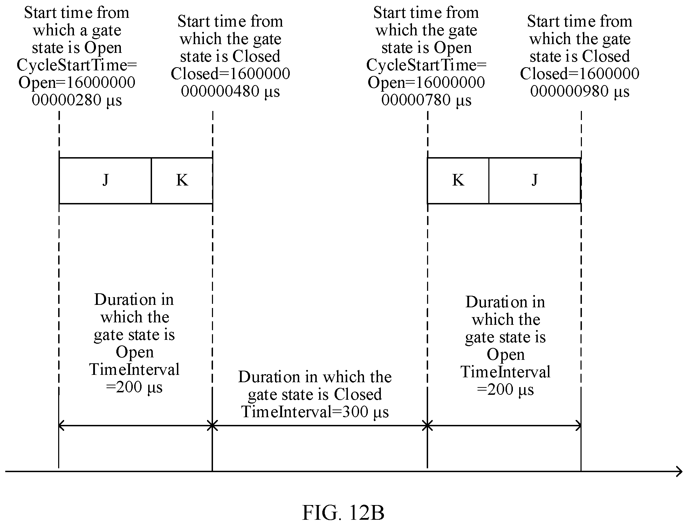

Descriptions are provided herein with reference to FIG. 12B. Because duration corresponding to sending of a maximum data packet of the periodic service flow J is 120 μs, and duration corresponding to sending of a maximum data packet of the periodic service flow K is 80 μs, time in which a gate state remains in an open state in each cycle is 200 μs. In other words, after the gate state is switched to Open for 200 μs, the gate state is switched to Closed. In addition, a cycle of the periodic service flow J is the same as a cycle of the periodic service flow K, that is, 500 μs. In other words, after the gate state is switched to Closed for 300 μs, a next cycle is entered, and the gate state is switched to Open again.

After receiving AdminBaseTime, AdminCycleTime, and AdminControlList of the periodic service flow J and the periodic service flow K, the second device may determine OperBaseTime, OperCycleTime, and OperControlList of the periodic service flow J and the periodic service flow K based on these parameters. For example,

OperCycleTime=AdminCycleTime=500 μs;
OperBaseTime=AdminBaseTime= 1600,000,000,000,280 μs; and
AdminControlList is the same as OperControlList.

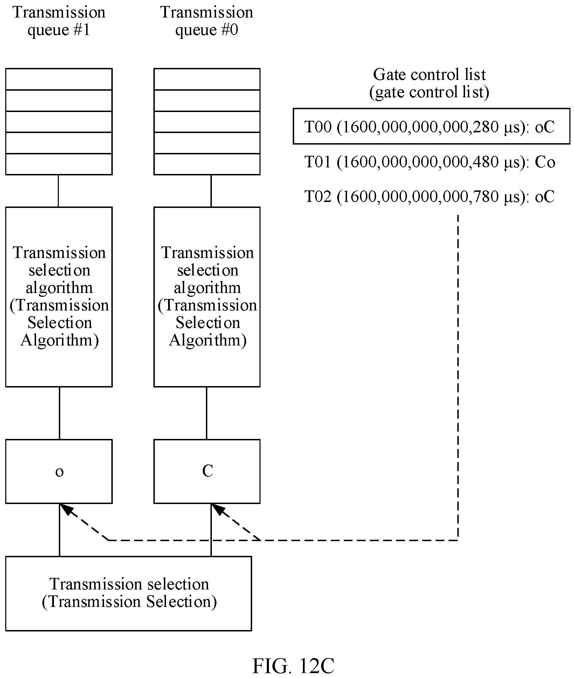

As shown in FIG. 12C, because the periodic service flow J and the periodic service flow K have a same priority, the periodic service flow J and the periodic service flow K are transmitted in a same transmission queue. For ease of description, it is assumed that the egress port of the second device supports only two transmission queues. It is assumed that the periodic service flow J and the periodic service flow K are transmitted in a transmission queue 1, and another periodic service flow M is transmitted in a transmission queue 0. For ease of description of a gate control operation process of the second device for the periodic service flow J and the periodic service flow K, it is assumed herein that the periodic service flow M does not have a low transmission latency requirement, and the periodic service flow M is transmitted when a transmission node has an idle resource. A moment corresponding to AdminBaseTime T00 is used as an example. In this case, a gate control state of the transmission queue 1 is Open, and the second device may send the periodic service flow J and the periodic service flow K. If the periodic service flow J and the periodic service flow K arrive at the second device at the same time, the periodic service flow J may be first sent, and then the periodic service flow K is sent; or the periodic service flow K may be first sent, and then the periodic service flow J is sent. Duration in which the gate control state is Open is 200 μs, and the second device completes sending of the periodic service flow J and the periodic service flow K. At a moment corresponding to T01, a gate control state of each transmission queue changes. In this case, the gate control state of the transmission queue 1 is Closed, and duration in which the gate control state is Open is 300 μs. The second device stops sending the periodic service flow J and the periodic service flow K, and starts to send the periodic service flow M. At a moment corresponding to T02, gate control operations last for one cycle, namely, OperCycleTime (500 μs). A gate control operation at the moment corresponding to T00 starts to be repeatedly performed at the moment corresponding to T02.

It should be noted that, in the example 2, each time when the gate control state corresponding to the periodic service flow J and the periodic service flow K is Open, although the first device does not indicate a sequence of sending the periodic service flow J and the periodic service flow K, in other words, the sequence of sending the periodic service flow J and the periodic service flow K is not determined, for example, the second device may first send the periodic service flow J or may first send the periodic service flow K, micro-bursts and micro-congestion of the second device and the transmission node between the second device and the third device are still not caused. A cause is that the first device may configure the second device to reserve sufficient sending time for the periodic service flow J and the periodic service flow K, in other words, duration in which the gate control state is Open is sufficient. For the second device, regardless of whether the periodic service flow J or the periodic service flow K is first sent, sending of the periodic service flow J and the periodic service flow K can be completed within the duration in which the gate control state is Open. Similarly, for the transmission node between the second device and the third device, regardless of whether the periodic service flow J or the periodic service flow K is first received, the fourth device may configure the transmission node to reserve, for transmitting the two periodic service flows, fixed and sufficient duration in which the gate control state is Open, so that sending of the periodic service flow J and the periodic service flow K can be completed within the duration in which the gate control state is Open. According to the solution provided in this embodiment of this application, it can be ensured that the second device and the transmission node between the second device and the third device reserve sufficient resources for transmitting the periodic service flow J and the periodic service flow K, so that determinacy of transmission time of the periodic service flow J and determinacy of transmission time of the periodic service flow K can be implemented.

In other words, in the example 2, a gate control scheduling parameter is used to implicitly indicate service flow sending time for service flows with a same priority, the service flow sending time transferred by using the gate control scheduling parameter may be used to sequentially send a plurality of service flows in a transmission queue, and time in which a gate control state is Open is sufficient to ensure completion of transmission of the plurality of service flows, so that deterministic transmission is implemented, and overall network performance is improved.

Example 3: When a plurality of service flows with different priorities do not arrive at the same time, the first device places the plurality of service flows into different transmission queues. The first device may send a minimum offset, a maximum offset, and a priority of each of the plurality of service flows to the fourth device. The fourth device may configure a different offset selection value for each service flow. For example, an interval, determined by the fourth device, between offset selection values of any two adjacently sent service flows in offset selection values separately corresponding to the plurality of service flows is not less than duration corresponding to a maximum data packet of a service flow with a higher priority in the two service flows, so that it is ensured that a service flow with a high priority is sent before a service flow with a low priority, and no congestion occurs during sending of the plurality of service flows. In addition, an offset selection value corresponding to each service flow is greater than or equal to a minimum offset corresponding to the service flow, and is less than or equal to a maximum offset corresponding to the service flow, to meet deterministic latency requirements separately corresponding to the plurality of service flows. Further, the first device may determine, based on the offset selection values separately corresponding to the plurality of service flows, service flow sending time of each service flow, and send the service flow sending time to the second device.

In addition, the first device determines AdminBaseTime based on a minimum value in the offset selection values separately corresponding to the plurality of service flows, and determine AdminCycleTime based on a least common multiple of cycles separately corresponding to the plurality of service flows.

For example, a periodic service flow J and a periodic service flow K have different priorities, and a priority of the periodic service flow J is higher than a priority of the periodic service flow K, in other words, the periodic service flow J is preferentially sent relative to the periodic service flow K. Both the periodic service flow J and the periodic service flow K are downlink service flows. EarliestTransmitOffset corresponds to a minimum offset, LatestTransmitOffset corresponds to a maximum offset, and TimeAwareOffset corresponds to an offset selection value. In the following example, LatestTransmitOffset is calculated in the manner A* of determining the maximum offset. It may be understood that LatestTransmitOffset may alternatively be calculated in the manner B* or the manner C*. This is merely an example and is not limited in this embodiment of this application.

Parameters of the periodic service flow J are as follows:

<Maximum Burst Size in time> (indicating duration corresponding to sending of a maximum data packet of the periodic service flow J)=(120 $\mu$s in time);
Interval (indicating a cycle of the periodic service flow J)=400 $\mu$s;
Jitter (indicating a jitter of the periodic service flow J)=0 $\mu$s (where the jitter is 0 because there is no other service flow with a same priority as the periodic service flow J);
processing time=100 $\mu$s; and
offset of arrival time of the periodic service flow J relative to reference time=1600,000,000,000,120 $\mu$s.

Therefore, EarliestTransmitOffset (corresponding to a minimum offset) and LatestTransmitOffset (corresponding to a maximum offset) of the periodic service flow J may be calculated according to the formula (11-4) and formula (13-1):

EarliestTransmitOffset=offset of the arrival time of the periodic service flow J relative to the reference time+100 $\mu$s+Jitter=1600,000,000,000,220 $\mu$s; and
LatestTransmitOffset=offset of the arrival time of the periodic service flow J relative to the reference time+400-120-Jitter=1600,000,000,000,400 $\mu$s.

Parameters of the periodic service flow K are as follows:

<Maximum Burst Size in time> (indicating duration corresponding to sending of a maximum data packet of the periodic service flow K)=(80 $\mu$s in time);

Interval (indicating a cycle of the periodic service flow K)=800 μs;
Jitter (indicating a jitter of the periodic service flow K)=0 μs;
processing time=100 μs; and
offset of arrival time of the periodic service flow K relative to the reference time=1600,000,000,000,100 μs.

Similarly, EarliestTransmitOffset (corresponding to a minimum offset) and LatestTransmitOffset (corresponding to a maximum offset) of the periodic service flow K may be calculated according to the formula (11-4) and formula (13-1):

EarliestTransmitOffset=offset of the arrival time of the periodic service flow K relative to the reference time+100 μs+Jitter=1600,000,000,000,200 μs; and
LatestTransmitOffset=offset of the arrival time of the periodic service flow K relative to the reference time+800-80-Jitter=1600,000,000,000,820 μs.

The first device sends EarliestTransmitOffset and LatestTransmitOffset of the periodic service flow J and the priority of the periodic service flow J to the fourth device, and sends EarliestTransmitOffset and LatestTransmitOffset of the periodic service flow K and the priority of the periodic service flow K to the fourth device. The fourth device determines, for each of the periodic service flow J and the periodic service flow K, a value in a range from EarliestTransmitOffset to LatestTransmitOffset as TimeAwareOffset (corresponding to an offset selection value). It is assumed that TimeAware-Offset (corresponding to offset selection values), of the periodic service flow J and the periodic service flow K, returned by the fourth device is as follows:

for the periodic service flow J, TimeAwareOffset=1600,000,000,000,260 μs; and
for the periodic service flow K, TimeAwareOffset=1600,000,000,000,380 μs.

It should be noted that a difference between TimeAwareOffset of the periodic service flow K and TimeAware-Offset of the periodic service flow J is <Maximum Burst Size in time> of the flow K. In this way, the periodic service flow K and the periodic service flow J may be sent in a staggered manner, and congestion does not occur. Certainly, this application is not limited thereto. The difference between TimeAwareOffset of the periodic service flow K and TimeAwareOffset of the periodic service flow J may alternatively be greater than <Maximum Burst Size in time> of the flow K.

The first device may determine, based on TimeAwareOffset of different flows, that AdminBaseTime is 1600,000,000,000,260 μs (for example, is a minimum value in TimeAwareOffset of the different flows). The first device further determines that AdminCycleTime is 800 μs (namely, a least common multiple of Interval corresponding to the periodic service flow J and Interval corresponding to the periodic service flow K), and configures AdminControlList based on AdminCycleTime, Interval corresponding to the periodic service flow J and the periodic service flow K, and <Maximum Burst Size in time> corresponding to the periodic service flow J and the periodic service flow K.

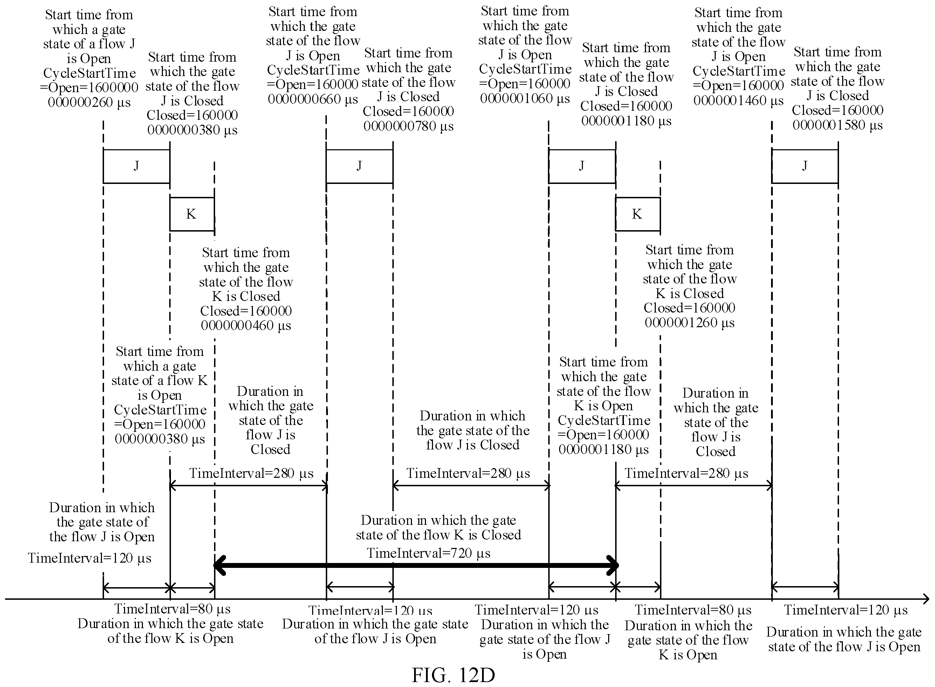

Descriptions are provided herein with reference to FIG. 12D. For a queue in which the periodic service flow J is located, because the duration corresponding to sending of the maximum data packet of the periodic service flow J is 120 μs, time in which a gate state remains in an open state in each cycle is 120 μs. In other words, after the gate state of the queue in which the periodic service flow J is located is switched to Open for 120 μs, the gate state of the queue in which the periodic service flow J is located is switched to Closed. In addition, the cycle of the periodic service flow J is 400 μs. In other words, after the gate state of the queue in which the periodic service flow J is located is switched to Closed for 280 μs, a next cycle is entered, and the gate state of the queue in which the periodic service flow J is located is switched to Open again. Therefore, AdminControlList of the periodic service flow J includes: for GateState=Open, TimeInterval=120 μs (indicating that the gate state is switched to Open for 120 μs); for GateState=Closed, TimeInter-val=280 μs (indicating that the gate state is switched to Open for 280 μs); for GateState=Open, TimeInterval=120 μs; and for GateState=Closed, TimeInterval=280 μs.

For a queue in which the periodic service flow K is located, a gate state of the periodic service flow K is Closed at the beginning, and is switched to Open until the gate state of the periodic service flow J is Closed. Other principles are similar to those of the periodic service flow J. Therefore, AdminControlList of the periodic service flow K includes: for GateState=Closed, TimeInterval=120 μs; for GateState=Open, TimeInterval=80 μs; for GateState=Closed, Ti-meInterval=720 μs; for GateState=Open, TimeInterval=80 μs; and for GateState=Closed, TimeInterval=720 μs.

It may be understood that, in addition to determining AdminBaseTime, AdminCycleTime, AdminControlList of the periodic service flow J, and AdminControlList of the periodic service flow K, the first device also determines service flow sending time of the periodic service flow J, that is, AdminBaseTime, and determines service flow sending time of the periodic service flow K, to be specific, determines, as the service flow sending time of the periodic service flow K based on AdminBaseTime, AdminControlList of the periodic service flow J, and AdminControlList of the periodic service flow K, time in which the gate state of the periodic service flow K is Open.

After receiving AdminBaseTime, AdminCycleTime, and AdminControlList of the periodic service flow J and the periodic service flow K, the second device may determine, based on these parameters, OperBaseTime, OperCycleTime, and OperControlList of the periodic service flow J and the periodic service flow K, the service flow sending time of the periodic service flow K, and the service flow sending time of the periodic service flow J. For example:

OperCycleTime=AdminCycleTime=800 μs;
OperBaseTime=AdminBaseTime=1600,000,000,000,260 μs; and
AdminControlList is the same as OperControlList.

Descriptions are provided herein with reference to FIG. 12D. At a time offset corresponding to OperBaseTime, queues in which the periodic service flow J and the periodic service flow K are located separately perform operations based on respective OperControlList.

For example, for the periodic service flow J, at a time offset corresponding to 1600,000,000,000,260 μs, the gate state of the transmission queue of the periodic service flow J is Open. Duration in which the gate state is Open is 120 μs. At a time offset corresponding to 1600,000,000,000,380 μs, the gate state of the transmission queue of the periodic service flow J is Closed. Duration in which the gate state is Closed is 280 μs. At a time offset corresponding to 1600,000,000,000,660 μs, the gate state of the transmission queue of the periodic service flow J is Open again, and a next cycle is entered. The rest may be deduced by analogy.

For the periodic service flow K, at the time offset corresponding to 1600,000,000,000,260 μs, the gate state of the transmission queue of the periodic service flow K is Closed. Duration in which the gate state is Closed is 120 μs. At the time offset corresponding to 1600,000,000,000,380 μs, the gate state of the transmission queue of the periodic service flow K is Open. Duration in which the gate state is Open is 80 μs. At a time offset corresponding to 1600,000,000,000,460 μs, the gate state of the transmission queue of the periodic service flow K is Closed again, and a next cycle is entered. The rest may be deduced by analogy.

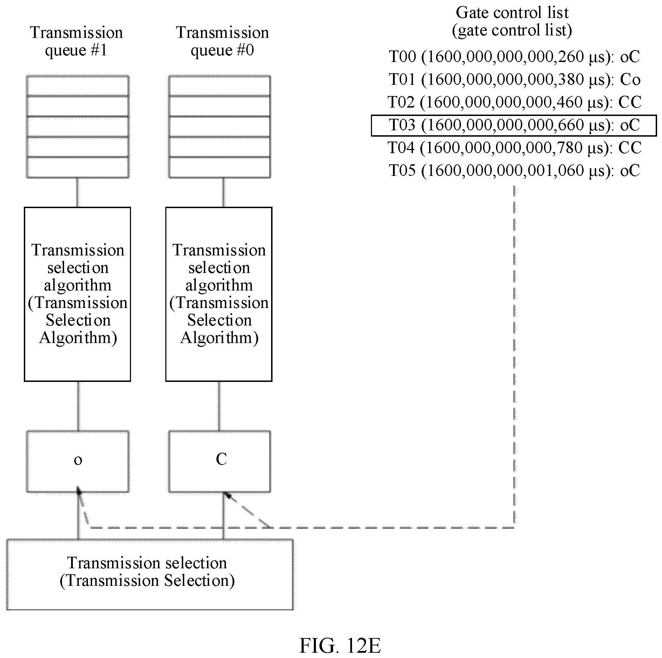

As shown in FIG. 12E, because the periodic service flow J and the periodic service flow K have different priorities, the periodic service flow J and the periodic service flow K are separately transmitted in different transmission queues. For ease of description, it is assumed that the periodic service flow J is transmitted in a transmission queue 1, and the periodic service flow K is transmitted in a transmission queue 0. At a moment corresponding to AdminBaseTime T00, a gate control state of the transmission queue 1 corresponding to the periodic service flow J is Open, and a gate control state of the transmission queue 0 corresponding to the periodic service flow K is Closed. In this case, the second device may send the periodic service flow J, and duration in which the gate control state of the transmission queue 1 is Open is 120 μs. The second device completes sending of the periodic service flow J. At a moment corresponding to T01, gate control states of transmission queues change, the gate control state of the transmission queue 1 corresponding to the periodic service flow J is Closed, and the gate control state of the transmission queue 0 corresponding to the periodic service flow K is Open. In this case, the second device may send the periodic service flow K, and duration in which the gate control state of the transmission queue 0 is Open is 80 μs. The second device completes sending of the periodic service flow K. At a moment corresponding to T02, the gate control states of the transmission queues change again, the gate control state of the transmission queue 1 corresponding to the periodic service flow J is Closed, and the gate control state of the transmission queue 0 corresponding to the periodic service flow K is Closed. This state lasts for 200 μs until a moment corresponding to T03. At the moment corresponding to T03, the gate control state of the transmission queue 1 corresponding to the periodic service flow J is Open, and the gate control state of the transmission queue 0 corresponding to the periodic service flow K is Closed. In this case, the second device may send the periodic service flow J, and duration in which the gate control state is Open is 120 μs. The second device completes sending of the periodic service flow J. At a moment corresponding to T04, the gate control states of the transmission queues change, the gate control state of the transmission queue 1 corresponding to the periodic service flow J is Closed, and the gate control state of the transmission queue 0 corresponding to the periodic service flow K is Closed. This state lasts for 280 μs. From the moment corresponding to T00 to a moment corresponding to T05, gate control operations correspond to one cycle, namely, OperCycleTime (800 μs). A gate control operation corresponding to the moment corresponding to T00 starts to be repeated at the moment corresponding to T05.

It should be noted that in the example 1, although the periodic service flow J and the periodic service flow K have different priorities and arrive at the second device at different time, the method provided in this embodiment of this application can ensure that a high-priority service flow is preferentially sent. Specifically, the priority of the periodic service flow J is higher than the priority of the periodic service flow K. According to the method provided in this embodiment of this application, gate control states and duration corresponding to different transmission queues in which the periodic service flow J and the periodic service flow K are located are controlled. When the periodic service flow K arrives at the second device earlier than the periodic service flow J, the periodic service flow J with a higher priority can still be preferentially sent. This avoids a case in which the periodic service flow J needs to wait to be sent until completion of sending of the periodic service flow K because the periodic service flow K is being sent.

In some embodiments, the first device may further send, to the second device, information used to determine the gate control scheduling parameter, and the second device determines the gate control scheduling parameter. The information used to determine the gate control scheduling parameter herein may include a cycle of each service flow, an offset selection value of each service flow, duration corresponding to a maximum data packet corresponding to each service flow, and the like.

In addition, it should be further noted that in this embodiment of this application, the fourth device is further configured to: determine the forwarding path (to be specific, the forwarding path from the second device to the third device) of the first service flow based on a user plane topology (including the access network device, the user plane network element, and a transmission node between the access network device and the user plane network element), capability information of each transmission node, and information that is about the first service flow and that is sent by the first device, for example, the minimum offset and the maximum offset in the foregoing embodiment; and configure a transmission node on the forwarding path, to be specific, send a corresponding gate control scheduling parameter to each transmission node. The gate control scheduling parameter herein is a gate control scheduling parameter for the transmission node. For example, AdminBaseTime in a gate control scheduling parameter of a next-hop transmission node of the second device may be AdminBaseTime in the gate control scheduling parameter of the second device plus a maximum transmission latency required from the second device to the next-hop transmission node of the second device. Content of other parameters is the same. The transmission node may further send capability information (used by the fourth device to configure the forwarding path for the service flow and determine a corresponding gate control scheduling parameter) of the transmission node to the fourth device, and the transmission node that receives the gate control scheduling parameter forwards the first service flow based on the received gate control scheduling parameter. How the fourth device determines the forwarding path of the first service flow and configures the transmission node on the forwarding path is not limited in this application. Therefore, through configuration of the second device and the transmission node on the forwarding path determined from the second device to the third device, a deterministic transmission latency requirement between the second device and the third device can be ensured.

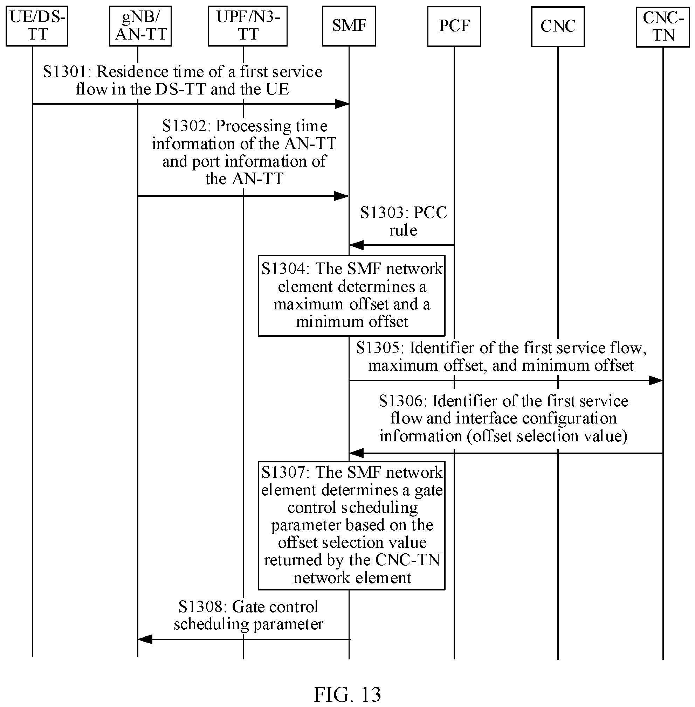

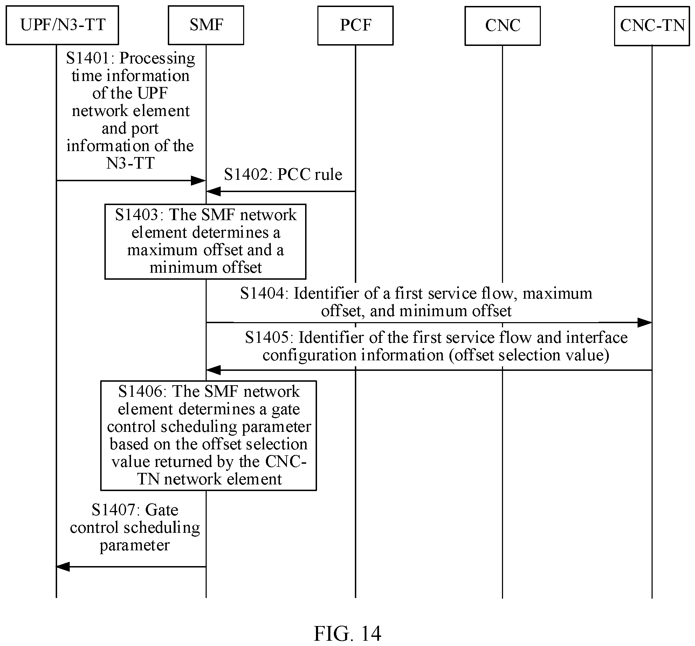

The following FIG. 13 and FIG. 14 describe transmission procedures of a first service flow with reference to the architectures shown in FIG. 6A and FIG. 6B. In examples of FIG. 13 and FIG. 14, an SMF is configured to implement functions of the first device. In FIG. 13, the first service flow is an uplink service flow, and an AN-TT is a device that is independently deployed outside a gNB, or the AN-TT is used as a functional module inside the gNB.

S1301: The SMF network element obtains, from UE, residence time (UE-DS-TT-Residence Time) of the first service flow in a DS-TT and the UE.

In addition, the SMF network element may further obtain a parameter, for example, a MAC address of a DS-TT port. This is not limited in this application. The residence time (UE-DS-TT-Residence Time) of the first service flow in the DS-TT and the UE may be carried in a PDU session establishment request message, and is sent by the UE to the SMF network element through the gNB and an AMF network element.

For details, refer to related descriptions in the manner 1. Repeated parts are not described again.

S1302: The SMF network element obtains processing time information of the AN-TT and port information of the AN-TT.

For example, when the AN-TT is a device that is independently deployed outside the gNB, the SMF network element may obtain the processing time information of the AN-TT and the port information of the AN-TT from the AN-TT, or obtain the processing time information of the AN-TT and the port information of the AN-TT from the gNB. In this case, the processing time information of the AN-TT and the port information of the AN-TT are sent by the AN-TT to the gNB, or configured on the gNB.

For example, when the AN-TT is used as a functional module inside the gNB, the SMF network element may obtain the processing time information of the AN-TT and the port information of the AN-TT from the gNB. In this case, the processing time information of the AN-TT is also referred to as processing time information of the gNB.

The port information of the AN-TT specifically includes an identifier of each port, where the identifier of each port includes a MAC address and an interface name of each port. In addition, the port information of the AN-TT may further include another parameter. This is not limited in this application.

For example, the SMF network element may determine, based on the processing time information of the AN-TT, processing time of the first service flow in the AN-TT. For specific content of the processing time information of the AN-TT, refer to related descriptions of the processing time information of the second device in step 810.

S1303: A PCF network element sends a PCC rule to the SMF network element.

The PCC rule includes a TSC assistance container, and the TSC assistance container includes information about burst arrival time of the first service flow, a cycle of the first service flow, and a direction of the first service flow. The PCC rule may further include a service requirement description parameter, and the service requirement description parameter may include a maximum burst size. In addition, the TSC assistance container and the service requirement parameter may further include other parameters. For specific content, refer to related content in the manner 1. The information about the burst arrival time of the first service flow herein is information about time at which the first service flow arrives at the DS-TT.

In correspondence to FIG. 6A, the PCF network element may obtain the information about the burst arrival time of the first service flow, the cycle of the first service flow, the direction of the first service flow, and the service requirement description parameter from a TSN AF network element.

In correspondence to FIG. 6B, the PCF network element may obtain the information about the burst arrival time of the first service flow, the cycle of the first service flow, the direction of the first service flow, and the service requirement description parameter from a TSCTSF network element.

For example, the PCF network element may generate the PCC rule based on the information about the burst arrival time of the first service flow, the cycle of the first service flow, the direction of the first service flow, and the service requirement description parameter that are obtained from the TSN AF network element or the TSCTSF network element, and send the PCC rule to the SMF network element. The SMF network element associates the PCC rule with a QoS flow, and the QoS flow is a QoS flow corresponding to the first service flow.

In a 5GS system, the first service flow may be a service flow obtained through aggregation by the TSN AF or the TSCTSF. In other words, the TSN AF or the TSCTSF aggregates a plurality of service flows with same or similar features, to obtain the first service flow.

S1304: The SMF network element determines a minimum offset and a maximum offset.

The minimum offset may also be referred to as an earliest offset, and the maximum offset may also be referred to as a latest offset. For example, the SMF network element determines TSpecTimeAware. The minimum offset corresponds to EarliestTransmitOffset in TSpecTimeAware, and the maximum offset corresponds to LatestTransmitOffset in TSpecTimeAware. An example in which the minimum offset is EarliestTransmitOffset and the maximum offset is LatestTransmitOffset is only used below for description.

(1) The SMF network element determines EarliestTransmitOffset.

For example, the SMF network element may determine, according to the formula (11-3) or formula (12-2), EarliestTransmitOffset based on UE-DS-TT-Residence Time in S1301, the processing time information of the gNB in S1302, the information about the burst arrival time of the first service flow in the PCC rule in S1303, and a PDB 1 determined based on the PCC rule.

(2) The SMF network element determines LatestTransmitOffset.

For example, the SMF network element may determine, according to the formula (13-2) or formula (14), LatestTransmitOffset based on UE-DS-TT-Residence Time in S1301, the information about the burst arrival time of the first service flow in the PCC rule in S 1303, the cycle of the first service flow, the maximum burst size included in the service requirement description parameter, and the PDB 1 determined based on the PCC rule.

Alternatively, if the SMF network element obtains maximum buffer duration of the first service flow in the AN-TT, the SMF network element may determine, according to the formula (15-2) or formula (16), LatestTransmitOffset based on the processing time information of the AN-TT in S1302, the maximum buffer duration of the first service flow in the AN-TT, UE-DS-TT-Residence Time in S1301, the information about the burst arrival time of the first service flow in the PCC rule in S1303, and the PDB 1 determined based on the PCC rule. For obtaining, by the SMF network element, the maximum buffer duration of the first service flow in the AN-TT, refer to the descriptions in the foregoing related paragraphs. Details are not described herein again. For example, in this case, the SMF network element further needs to obtain processing time information of a UPF network element from the UPF network element.

Alternatively, after determining the two values of LatestTransmitOffset, the SMF network element may select a smaller value as LatestTransmitOffset.

It may be understood that when the AN-TT is used as a functional module inside the gNB, the SMF network element determines the PDB 1 based on the PCC rule. When the AN-TT is a device that is independently deployed outside the gNB, the SMF network element determines a PDB 1' based on the PCC rule, in other words, the PDB 1 is replaced with the PDB 1'.

S1305: The SMF network element sends an identifier (StreamID) of the first service flow, the minimum offset, and the maximum offset to a CNC-TN network element.

In addition, the SMF network element may further send, to the CNC-TN network element, at least one parameter in a priority (StreamRank) of the first service flow, the cycle of the first service flow, a size of a maximum frame, a maximum latency requirement between the AN-TT and an N3-TT network element, and the port information of the AN-TT.

The size of the maximum frame is determined based on the maximum burst size. For a manner of determining the maximum latency requirement between the AN-TT and the N3-TT network element, refer to related descriptions in the embodiment of FIG. 8. Details are not described herein again.

S1306: The CNC-TN network element determines an offset selection value based on the received minimum offset and maximum offset, and sends the identifier of the first service flow and interface configuration information to the SMF network element.

The interface configuration information may include InterfaceID and the offset selection value, and InterfaceID is used to identify a port indicated by the port information of the AN-TT in S1302.

The offset selection value is TimeAwareOffset. TimeAwareOffset≥EarliestTransmitOffset, and TimeAwareOffset≤LatestTransmitOffset.

S1307: The SMF network element determines a gate control scheduling parameter based on the offset selection value returned by the CNC-TN network element. The gate control scheduling parameter includes AdminBaseTime, AdminCycleTime, and AdminControlList.

For example, the SMF network element determines the gate control scheduling parameter based on the offset selection value, the cycle of the first service flow, and the maximum burst size. For details, refer to the example 1, example 2, and example 3 shown by using the periodic service flow J and the periodic service flow K. Details are not described herein again.

S1308: The SMF network element sends the gate control scheduling parameter.

When the AN-TT is a device that is independently deployed outside the gNB, the SMF network element sends the gate control scheduling parameter to the AN-TT; or the SMF sends the gate control scheduling parameter to the gNB, and the gNB sends the gate control scheduling parameter to the AN-TT.

When the AN-TT is used as a functional module inside the gNB, the SMF network element sends the gate control scheduling parameter to the gNB. The gNB notifies the AN-TT of the gate control scheduling parameter through an internal interface.

In addition, the SMF network element further sends InterfaceID.

According to the foregoing method, the SMF network element configures, for the AN-TT, the gate control scheduling parameter associated with the first service flow, and the AN-TT transmits the service flow according to configuration of the SMF network element, so that a problem of congestion between the first service flow and another service flow can be avoided. Therefore, a deterministic latency requirement of the first service flow is met, low-latency transmission between the AN-TT and the N3-TT can be implemented, and overall network performance can be improved.

In FIG. 14, the first service flow is a downlink service flow.

S1401: The SMF network element obtains processing time information of a UPF network element and port information of an N3-TT from the UPF network element.

The port information of the N3-TT specifically includes an identifier of each port, where the identifier of each port includes a MAC address and an interface name of each port. In addition, the port information of the N3-TT may further include another parameter. This is not limited in this application.

For example, the SMF network element may obtain the processing time information of the UPF network element from the UPF network element, and determine processing time of the first service flow in the UPF network element based on the processing time information of the UPF network element. For specific content of the processing time information of the UPF network element, refer to related descriptions of the processing time information of the second device in step 810. In addition, a manner of obtaining the processing time information of the UPF network element is similar to a manner of obtaining the port information of the N3-TT. For details, refer to related descriptions of obtaining, by the first device, the processing time information of the user plane network element from the user plane network element in step 810. Repeated parts are not described again.

S1402: A PCF network element sends a PCC rule to the SMF network element.

For example, the PCC rule includes a TSC assistance container, and the TSC assistance container includes information about burst arrival time of the first service flow, a cycle of the first service flow, and a direction of the first service flow. The PCC rule further includes a service requirement description parameter, and the service requirement description parameter includes a maximum burst size. In addition, the TSC assistance container and the service requirement parameter may further include other parameters. For specific content, refer to related content in the manner 1. A difference from S1303 lies in that the information about the burst arrival time of the first service flow herein is information about time at which the first service flow arrives at an NW-TT.

S1403: The SMF network element determines a minimum offset and a maximum offset.

The minimum offset may also be referred to as an earliest offset, and the maximum offset may also be referred to as a latest offset. For example, the SMF network element determines TSpecTimeAware. The minimum offset corresponds to EarliestTransmitOffset in TSpecTimeAware, and the maximum offset corresponds to LatestTransmitOffset in TSpecTimeAware. An example in which the minimum offset is EarliestTransmitOffset and the maximum offset is LatestTransmitOffset is only used below for description.

> (1) The SMF network element determines EarliestTransmitOffset. For example, the SMF network element may determine, according to the formula (11-5) or formula (12-3), EarliestTransmitOffset based on the processing time information of the UPF network element in S1401 and the information about the burst arrival time of the first service flow in the PCC rule in S1402.
>
> (2) The SMF network element determines LatestTransmitOffset. For example, the SMF network element may determine, according to the formula (13-3) or formula (14), LatestTransmitOffset based on the information about the burst arrival time of the first service flow, the cycle of the first service flow, and the maximum burst size included in the service requirement description parameter that are in the PCC rule in S1402.

Alternatively, if the SMF network element determines maximum buffer duration of the first service flow in the UPF network element, the SMF network element may determine, according to the formula (15-3) or formula (16), LatestTransmitOffset based on the processing time information of the UPF network element in S1401, the maximum buffer duration of the first service flow in the UPF, and the information about the burst arrival time of the first service flow in the PCC rule in S1402. For obtaining, by the SMF network element, the maximum buffer duration of the first service flow in the UPF network element, refer to the descriptions in the foregoing related paragraphs. Details are not described herein again. For example, in this case, the SMF network element further needs to obtain processing time information of an AN-TT.

Alternatively, after determining the two values of LatestTransmitOffset, the SMF network element may select a smaller value as LatestTransmitOffset.

S1404: The SMF network element sends an identifier of the first service flow, the minimum offset, and the maximum offset to a CNC-TN network element.

In addition, the SMF network element may further send, to the CNC-TN network element, at least one parameter in a priority of the first service flow, the cycle of the first service flow, a size of a maximum frame, a maximum latency requirement between the AN-TT and the N3-TT network element, and the port information of the N3-TT.

The size of the maximum frame is determined based on the maximum burst size. For a manner of determining the maximum latency requirement between the AN-TT and the N3-TT network element, refer to related descriptions in the embodiment of FIG. 8. Details are not described herein again.

S1405: The CNC-TN network element determines an offset selection value based on the received minimum offset and maximum offset, and sends the identifier of the first service flow and interface configuration information to the SMF network element.

The interface configuration information may include InterfaceID and the offset selection value, and InterfaceID is used to identify a port of the N3-TT that is indicated by the port information of the N3-TT in S1401.

The offset selection value is TimeAwareOffset. TimeAwareOffset≥EarliestTransmitOffset, and TimeAwareOffset≤LatestTransmitOffset.

S1406: The SMF network element determines a gate control scheduling parameter based on the offset selection value returned by the CNC-TN network element. The gate control scheduling parameter includes AdminBaseTime, AdminCycleTime, and AdminControlList.

For example, the SMF network element determines the gate control scheduling parameter based on the offset selection value, the cycle of the first service flow, and the maximum burst size. For details, refer to the example 1, example 2, and example 3 shown by using the periodic service flow J and the periodic service flow K. Details are not described herein again.

S1407: The SMF network element sends the gate control scheduling parameter to the UPF network element.

The UPF network element may notify the N3-TT of the gate control scheduling parameter through an internal interface.

In addition, the SMF network element further sends InterfaceID to the UPF network element, and the UPF network element notifies the N3-TT of InterfaceID through the internal interface.

It may be understood that, in the embodiments shown in FIG. 13 and FIG. 14, the SMF network element may alternatively not determine the gate control scheduling parameter, but send information used to determine the gate control scheduling parameter, sending time of the first service flow, or an offset of the sending time of the first service flow relative to reference time. The sending time of the first service flow or the offset of the sending time of the first service flow relative to the reference time may be determined based on TimeAwareOffset. The information used to determine the gate control scheduling parameter may include cycles separately corresponding to a plurality of service flows, offset selection values separately of the plurality of service flows, duration corresponding to maximum data packets corresponding to the plurality of service flows, priorities separately corresponding to the plurality of service flows, and the like. The plurality of service flows include the first service flow.

According to the foregoing method, the SMF network element configures, for the N3-TT, the gate control scheduling parameter associated with the first service flow, and the N3-TT transmits the service flow according to configuration of the SMF, so that a problem of congestion between the first service flow and another service flow can be avoided. Therefore, a deterministic latency requirement of the first service flow is met, low-latency transmission between the AN-TT and the N3-TT can be implemented, and overall network performance can be improved.

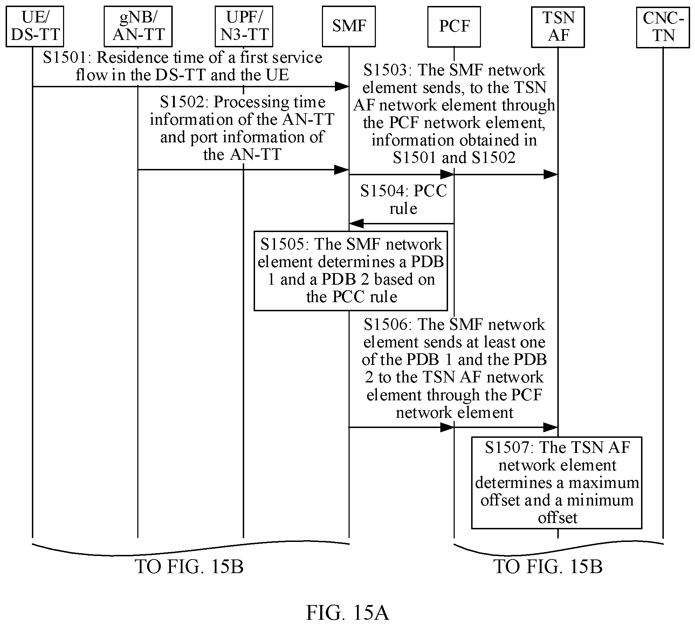

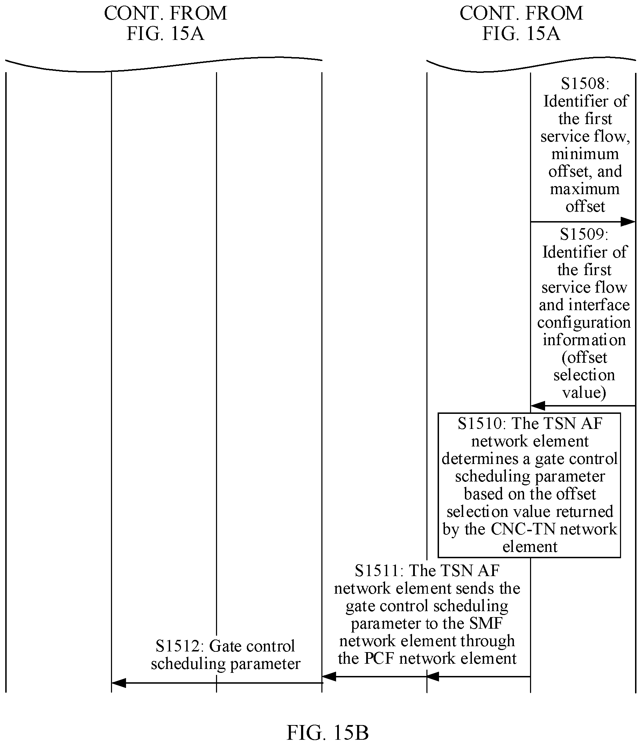

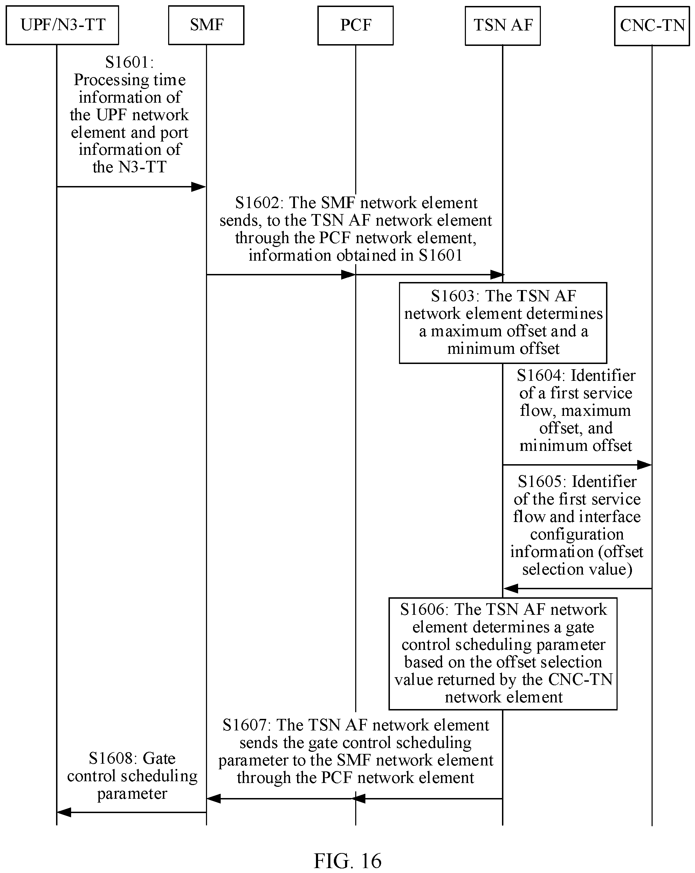

With reference to FIG. 15A and FIG. 15B and FIG. 16, the following describes transmission procedures of a first service flow in the architecture shown in FIG. 7A. In examples of FIG. 15A and FIG. 15B and FIG. 16, a TSN AF network element is configured to implement functions of the SMF network element. In FIG. 15A and FIG. 15B, the first service flow is an uplink service flow.

For S1501 and S1502, refer to S1301 and S1302. Repeated parts are not described again.

S1503: An SMF network element sends, to the TSN AF network element through a PCF network element, information obtained in S1501 and S1502.

For example, processing time information of an AN-TT and port information of the AN-TT may be encapsulated in a container (Container), in other words, invisible to the SMF network element; or may not be encapsulated in a container, and in this case, the SMF network element may read the information.

S1504: The PCF network element sends a PCC rule to the SMF network element.

For details, refer to S1303.

S1505: The SMF network element determines, based on the PCC rule, any one or both of a packet delay budget (PDB 1) for transmitting the first service flow between UE and a gNB and a packet delay budget (PDB 2) for transmitting the first service flow between the gNB and the UPF network element.

S1506: The SMF network element sends, to the TSN AF network element through the PCF network element, any one or both of the packet delay budget (PDB 1) for transmitting the first service flow between the UE and the gNB and the packet delay budget (PDB 2) for transmitting the first service flow between the gNB and the UPF network element. If the SMF sends only the PDB 2, the TSN AF network element further determines the PDB 1 based on the PDB 2.

In addition, the SMF network element may send, to the TSN AF network element through the PCF network element, the information obtained in S1501 and S1502, and any one or both of the packet delay budget (PDB 1) for transmitting the first service flow between the UE and the gNB and the packet delay budget (PDB 2) for transmitting the first service flow between the gNB and the UPF network element, that is, S1503 and S1506 may be combined into one step.

In addition, when the AN-TT is a device that is independently deployed outside the gNB, the PDB 1 and the PDB 2 are replaced with a PDB 1' and a PDB 2'.

S1507: The TSN AF network element determines a minimum offset and a maximum offset.

A method for determining the minimum offset and the maximum offset by the TSN AF network element may be the same as the method for determining the minimum offset and the maximum offset by the SMF network element. For details, refer to related descriptions in S1304.

S1508: The TSN AF network element sends an identifier of the first service flow, the minimum offset, and the maximum offset to a CNC-TN network element.

S1509: The TSN AF network element obtains the identifier of the first service flow and interface configuration information from the CNC-TN network element.

The interface configuration information may include InterfaceID and an offset selection value, and InterfaceID is used to identify a port in the port information of the AN-TT.

The offset selection value may be TimeAwareOffset. TimeAwareOffset$\geq$EarliestTransmitOffset, and TimeAwareOffset$\leq$LatestTransmitOffset.

S1510: The TSN AF network element determines a gate control scheduling parameter based on the offset selection value returned by the CNC-TN network element. The gate control scheduling parameter includes AdminBaseTime, AdminCycleTime, and AdminControlList.

S1511: The TSN AF network element sends the gate control scheduling parameter to the SMF network element through the PCF network element. In addition, the TSN AF network element may further send InterfaceID to the SMF network element through the PCF network element.

S1512: The SMF network element sends the gate control scheduling parameter.

When the AN-TT is a device that is independently deployed outside the gNB, the SMF network element sends the gate control scheduling parameter to the AN-TT; or the SMF sends the gate control scheduling parameter to the gNB, and the gNB sends the gate control scheduling parameter to the AN-TT.

When the AN-TT is used as a functional module inside the gNB, the SMF network element sends the gate control scheduling parameter to the gNB.

In addition, the SMF network element further sends InterfaceID.

According to the foregoing method, the TSN AF network element configures, for the AN-TT through the SMF network element, a first gate control scheduling parameter associated with the first service flow, and the AN-TT transmits the service flow according to configuration of the TSN AF, so that a problem of congestion between the first service flow and another service flow can be avoided. Therefore, a deterministic latency requirement of the first service flow is met, low-latency transmission between the AN-TT and an N3-TT can be implemented, and overall network performance can be improved.

In FIG. 16, the first service flow is a downlink service flow.

For S1601, refer to S1401. Repeated parts are not described again.

S1602: An SMF network element sends, to the TSN AF network element through a PCF network element, information obtained in S1601.

For example, processing time information of a UPF network element and port information of an N3-TT that are obtained from the UPF network element may be encapsulated in a container (Container), in other words, invisible to the SMF network element; or may not be encapsulated in a container, and in this case, the SMF network element may read the information.

S1603: The TSN AF network element determines a minimum offset and a maximum offset.

For details, refer to related descriptions of S1403.

S1604: The TSN AF network element sends an identifier of the first service flow, the minimum offset, and the maximum offset to a CNC-TN network element.

S1605: The TSN AF network element obtains the identifier of the first service flow and interface configuration information from the CNC-TN network element.

The interface configuration information may include InterfaceID and an offset selection value, and InterfaceID is used to identify an interface of the UPF network element or a port in the port information of the N3-TT.

The offset selection value may be TimeAwareOffset. TimeAwareOffset≥EarliestTransmitOffset, and TimeAwareOffset≤LatestTransmitOffset.

S1606: The TSN AF network element determines a gate control scheduling parameter based on the offset selection value returned by the CNC-TN network element. The gate control scheduling parameter includes AdminBaseTime, AdminCycleTime, and AdminControlList.

S1607: The TSN AF network element sends the gate control scheduling parameter to the SMF network element through the PCF network element.

In addition, the TSN AF network element further sends InterfaceID to the SMF network element through the PCF network element.

S1608: The SMF network element sends the gate control scheduling parameter to the UPF network element.

The UPF network element notifies the N3-TT of the gate control scheduling parameter.

In addition, the SMF network element sends InterfaceID to the UPF network element, and the UPF network element notifies the N3-TT of InterfaceID.

It may be understood that, in the embodiments shown in FIG. 15A and FIG. 15B and FIG. 16, the TSN AF network element may alternatively not determine the gate control scheduling parameter, but send information used to determine the gate control scheduling parameter, sending time of the first service flow, or an offset of the sending time of the first service flow relative to reference time. The sending time of the first service flow or the offset of the sending time of the first service flow relative to the reference time may be determined based on TimeAwareOffset. The information used to determine the gate control scheduling parameter may include cycles separately corresponding to a plurality of service flows, offset selection values separately of the plurality of service flows, duration corresponding to maximum data packets corresponding to the plurality of service flows, priorities separately corresponding to the plurality of service flows, and the like. The plurality of service flows include the first service flow.

According to the foregoing method, the TSN AF network element configures, for the N3-TT through the SMF network element, a first gate control scheduling parameter associated with the first service flow, and the N3-TT transmits the service flow according to configuration of the TSN AF, so that a problem of congestion between the first service flow and another service flow can be avoided. Therefore, a deterministic latency requirement of the first service flow is met, low-latency transmission between the AN-TT and the N3-TT can be implemented, and overall network performance can be improved.

It should be noted that when the TSN AF network element in the embodiments shown in FIG. 15A and FIG. 15B and FIG. 16 is replaced with a TSCTSF network element, the foregoing embodiments may be applied to the architecture shown in FIG. 7B.

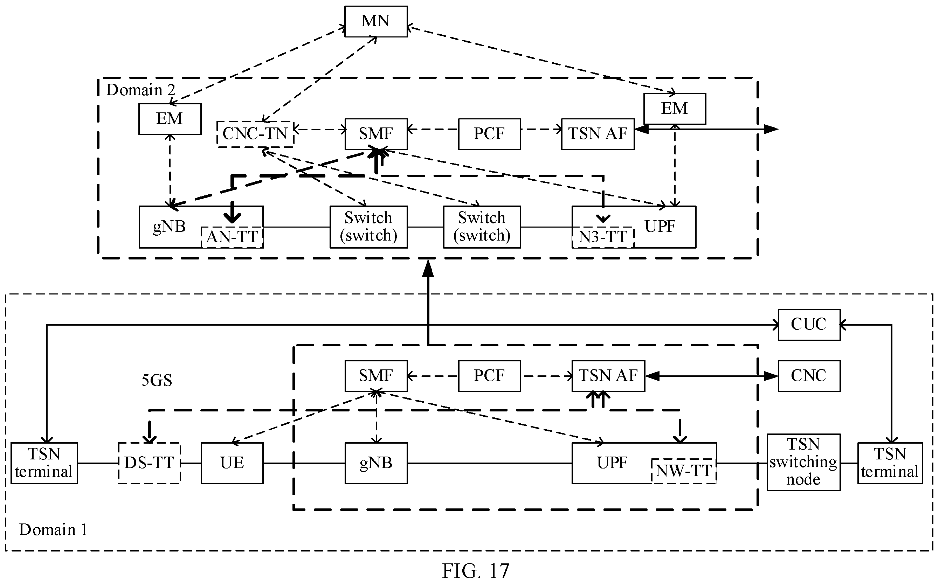

In another embodiment, in addition to the network architectures in FIG. 6A to FIG. 7B, a network architecture may also be shown in FIG. 17. For a domain 1, refer to related descriptions of FIG. 6A and FIG. 6B. In a domain 2, a user plane includes a gNB and a UPF network element in a 5GS and a switch between the gNB and the UPF network element, and a control plane includes an element manager (element manager, EM) network element, a network manager (network manager, NM) network element, and a CNC-CN network element. In FIG. 17, the NM network element may be configured to implement functions of the first device in the domain 2.

The EM network element provides a network element management function, and manages one or more network elements.

The NM network element provides a network management function, and manages a network between network elements managed by EMs.

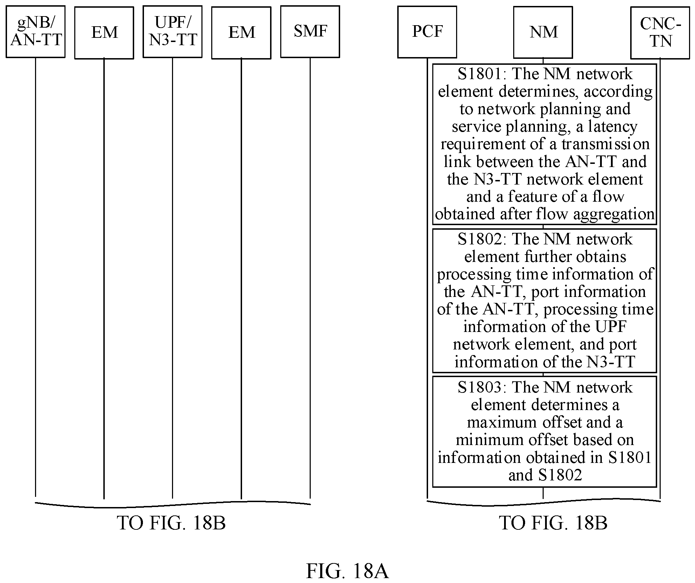

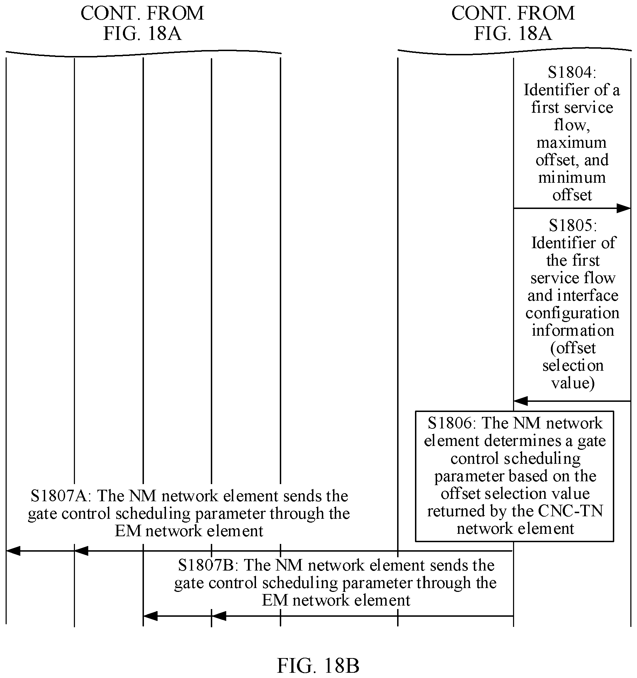

With reference to FIG. 18A and FIG. 18B, the following describes a transmission procedure of a first service flow in the architecture shown in FIG. 17.

S1801: An NM network element determines, according to network planning and service planning, a latency requirement of a transmission link between an AN-TT and an N3-TT and a feature of a flow obtained after flow aggregation.

For example, the feature of the flow obtained after flow aggregation includes a cycle of the flow, a maximum quantity of data packets transmitted in the cycle, maximum duration of the data packet, and the like.

The network planning means that the NM network element plans data packet processing capabilities and data packet transmission capabilities of the AN-TT, the N3-TT, and a transmission node between the AN-TT and the N3-TT network element, a network topology between the AN-TT and the N3-TT, and the like. The service planning means that the NM network element pre-obtains, in a phase before a network runs a service, a plurality of types of service flows that need to be transmitted between the AN-TT and the N3-TT network element, a latency requirement of each type of service flow, a feature (for example, a cycle or sending time) of each type of service flow, and the like, and determines one or more aggregation flows based on the feature of each type of service flow, to subsequently determine a gate control scheduling parameter of a queue corresponding to each aggregation flow.

S1802: The NM network element further obtains processing time information of the AN-TT, port information of the AN-TT, processing time information of a UPF network element, and port information of the N3-TT.

The foregoing information may be configured on the NM network element. Alternatively, when a gNB (where the AN-TT is deployed inside the gNB) or the AN-TT (independently deployed) is powered on, the processing time information of the AN-TT and the port information of the AN-TT are reported to the NM network element. Alternatively, when the UPF network element is powered on, the processing time information of the UPF network element and the port information of the N3-TT are reported to the NM network element.

S1803: The NM network element determines a minimum offset and a maximum offset based on information obtained in S1801 and S1802. The NM network element may determine the minimum offset and the maximum offset based on the obtained information in a processing manner the same as that of the SMF network element in FIG. 13 or FIG. 14 or the TSN AF network element in FIG. 15A and FIG. 15B or FIG. 16. Details are not described herein again.

S1804: The NM network element sends an identifier of the first service flow, the minimum offset, and the maximum offset to a CNC-TN network element.

S1805: The CNC-TN network element sends the identifier of the first service flow and an offset selection value to the NM network element.

When the first service flow is an uplink service flow, interface configuration information includes InterfaceID and the offset selection value. InterfaceID is used to identify a port in the port information of the AN-TT.

When the first service flow is a downlink service flow, interface configuration information includes InterfaceID and the offset selection value. InterfaceID is used to identify an interface of the UPF network element or a port in the port information of the N3-TT.

S1806: The NM network element determines a gate control scheduling parameter based on the offset selection value returned by the CNC-TN network element.

S1807A: When the first service flow is an uplink service flow, the NM network element sends the gate control scheduling parameter through an EM network element.

S1807B: When the first service flow is a downlink service flow, the NM network element sends the gate control scheduling parameter through an EM network element.

According to the foregoing method, the NM network element may first determine the gate control scheduling parameter in advance according to the network planning and service planning, and send the gate control scheduling parameter to the AN-TT or the N3-TT network element, so that a deterministic latency requirement of the first service flow can be met, and low-latency transmission between the AN-TT and the N3-TT network element can be implemented.

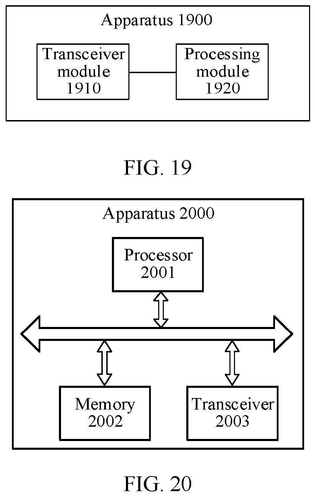

FIG. 19 is a possible example block diagram of an apparatus according to an embodiment of this application. The apparatus 1900 includes a transceiver module 1910 and a processing module 1920. The transceiver module 1910 may include a receiving unit and a sending unit. The processing module 1920 is configured to control and manage actions of the apparatus 1900. The transceiver module 1910 is configured to support the apparatus 1900 in communicating with another network entity. Optionally, the apparatus 1900 may further include a storage unit, and the storage unit is configured to store program code and data of the apparatus 1900.

Optionally, each module in the apparatus 1900 may be implemented by using software.

Optionally, the processing module 1920 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in embodiments of this application. The processor may alternatively be a combination of processors implementing a computing function, for example, a combination of one or more microprocessors, or a combination of a DSP and a microprocessor. The transceiver module 1910 may be a communication interface, a transceiver, a transceiver circuit, or the like. The communication interface is a general term. During specific implementation, the communication interface may include a plurality of interfaces, and the storage unit may be a memory.

When the apparatus 1900 is a first device or a chip in the first device, the processing module 1920 in the apparatus 1900 may support the apparatus 1900 in performing actions of the first device in the foregoing method examples, for example, may support the apparatus 1900 in performing step 800 and step 810 in FIG. 8, S1304 and S1307 in FIG. 13, S1403 and S1406 in FIG. 14, S1507 and S1510 in FIG. 15A and FIG. 15B, S1603 and S1606 in FIG. 16, and S1801, S1802, S1803, and S1806 in FIG. 18A and FIG. 18B.

The transceiver module 1910 may support communication between the apparatus 1900 and a second device or a third device. For example, the transceiver module 1910 may support the apparatus 1900 in performing step 820 in FIG. 8, S1301, S1302, S1303, S1305, S1306, and S1308 in FIG. 13, S1401, S1402, S1404, S1405, and S1407 in FIG. 14, S1503, S1506, S1508, S1509, and S1511 in FIG. 15A and FIG. 15B, S1602, S1604, S1605, and S1607 in FIG. 16, and S1804, S1805, S1807A, and S1807B in FIG. 18A and FIG. 18B.

An example is provided below:

In an implementation, the processing module 1920 is configured to determine information about service flow arrival time, where the information about the service flow arrival time includes the service flow arrival time or an offset of the service flow arrival time relative to reference time, the service flow arrival time is time at which a first service flow arrives at the second device, and the first service flow is a periodic service flow to be transmitted by the second device between an access network device and a user plane network element; the processing module 1920 is configured to determine information about service flow sending time based on the information about the service flow arrival time; and the transceiver module 1910 is configured to indicate the second device to wait, after receiving the first service flow, until the service flow sending time to send the first service flow. If the first service flow is an uplink service flow, the second device is the access network device or a translator corresponding to the access network device; or if the first service flow is a downlink service flow, the second device is the user plane network element.

In a possible design, when indicating the second device to wait, after receiving the first service flow, until the service flow sending time to send the first service flow, the transceiver module 1910 is configured to send the information about the service flow sending time to the second device.

In a possible design, the information about the service flow sending time includes the service flow sending time or an offset of the service flow sending time relative to the reference time. The service flow sending time is not later than latest sending time, and the latest sending time is determined based on the information about the service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device. Alternatively, the offset of the service flow sending time relative to the reference time does not exceed a maximum offset, and the maximum offset is determined based on information about the offset of the service flow arrival time relative to the reference time, a cycle of the first service flow, and a maximum burst size of the first service flow, and/or the maximum offset is determined based on the information about the offset of the service flow arrival time relative to the reference time, processing time of the first service flow in the second device, and maximum buffer duration of the first service flow in the second device.

In a possible design, the service flow sending time is not earlier than earliest sending time, and the earliest sending time is determined based on the information about the service flow arrival time and the processing time of the first service flow in the second device. Alternatively, the offset of the service flow sending time relative to the reference time is greater than or equal to a minimum offset, and the minimum offset is determined based on the information about the service flow arrival time and the processing time of the first service flow in the second device.

In a possible design, parameters for determining the latest sending time, the maximum offset, the earliest sending time, or the minimum offset further include a jitter latency associated with the first service flow.

In a possible design, service flow sending time that is determined by the first device and at which the second device sends a second service flow is different from the service flow sending time that is determined by the first device and at which the second device sends the first service flow, the second service flow is a periodic service flow to be transmitted by the second device between the access network device and the user plane network element, and the second service flow and the first service flow arrive at the second device at the same time, or a difference between time at which the second service flow arrives at the second device and the time at which the first service flow arrives at the second device is less than or equal to a threshold.

In a possible design, when determining the information about the service flow sending time based on the information about the service flow arrival time, the processing module 1920 is configured to: obtain an offset selection value, where the offset selection value is greater than or equal to the minimum offset and less than or equal to the maximum offset, or the offset selection value is greater than or equal to an offset of the earliest sending time relative to the reference time and less than or equal to an offset of the latest sending time relative to the reference time; and determine the information about the service flow sending time based on the offset selection value.

In a possible design, the transceiver module 1910 is configured to: send, to a fourth device, the minimum offset and the maximum offset, or the offset of the earliest sending time relative to the reference time and the offset of the latest sending time relative to the reference time; and receive the offset selection value from the fourth device.

In a possible design, the processing module 1920 is further configured to determine, based on a packet delay budget for transmitting the first service flow between the second device and the third device, the processing time of the first service flow in the second device, and processing time of the first service flow in the third device, a latency requirement for transmitting the first service flow between the second device and the third device; and the transceiver module 1910 is further configured to send the latency requirement to the fourth device. The third device is a device that is to receive the first service flow, and if the first service flow is an uplink service flow, the third device is the user plane network element, or if the first service flow is a downlink service flow, the third device is the access network device or the translator corresponding to the access network device.

In a possible design, when determining the information about the service flow sending time based on the offset selection value, the processing module 1920 is configured to determine the information about the service flow sending time based on the offset selection value and the jitter latency associated with the first service flow.

In a possible design, the information about the service flow sending time includes a gate control scheduling parameter. The processing module 1920 is configured to: obtain the cycle of the first service flow and the maximum burst size of the first service flow; determine a size of a maximum frame of the first service flow based on the maximum burst size of the first service flow; and determine the gate control scheduling parameter based on the cycle of the first service flow, the size of the maximum frame of the first service flow, and the offset selection value.

In a possible design, when the second device is the access network device and the third device is the user plane network element, the first service flow arrives at the second device through a terminal device. When determining the information about the service flow arrival time, the processing module 1920 is configured to: obtain information about time at which the first service flow arrives at a translator on a terminal device side, residence time of the first service flow in the terminal device and in the translator on the terminal device side, and a packet delay budget for transmitting the first service flow between the terminal device and the second device; and determine the information about the service flow arrival time based on the information about the time at which the first service flow arrives at the translator on the terminal device side, the residence time of the first service flow in the terminal device and in the translator on the terminal device side, and the packet delay budget for transmitting the first service flow between the terminal device and the second device.

In a possible design, the first device is a time sensitive networking TSN application function network element. When obtaining the information about the time at which the first service flow arrives at the translator on the terminal device side, the residence time of the first service flow in the terminal device and in the translator on the terminal device side, and the packet delay budget for transmitting the first service flow between the terminal device and the second device, the processing module 1920 is configured to determine the information about the time at which the first service flow arrives at the translator on the terminal device side. The transceiver unit is configured to receive, from a session management network element, the residence time of the first service flow in the terminal device and in the translator on the terminal device side, and the packet delay budget for transmitting the first service flow between the terminal device and the second device.

In a possible design, the first device is a session management network element. When the information about the time at which the first service flow arrives at the translator on the terminal device side, the residence time of the first service flow in the terminal device and in the translator on the terminal device side, and the packet delay budget for transmitting the first service flow between the terminal device and the second device are obtained, the transceiver module 1910 is configured to: receive, from a policy control network element, the information about the time at which the first service flow arrives at the translator on the terminal device side; and receive, from the terminal device, the residence time of the first service flow in the terminal device and in the translator on the terminal device side. The processing module 1920 is configured to determine the packet delay budget for transmitting the first service flow between the terminal device and the second device.

It should be understood that the apparatus 1900 in this embodiment of this application may correspond to the first device in the foregoing method embodiments, and operations and/or functions of modules in the apparatus 1900 are separately used to implement corresponding steps of the method of the first device in the foregoing method embodiments. Therefore, beneficial effects in the foregoing method embodiments can also be implemented. For brevity, details are not described herein again.

When the apparatus 1900 is a second device or a chip in the second device, the processing module 1920 in the apparatus 1900 may support the apparatus 1900 in performing actions of the second device in the foregoing method examples.

The transceiver module 1910 may support communication between the apparatus 1900 and a first device or a third device. For example, the transceiver module 1910 may support the apparatus 1900 in performing step 820 in FIG. 8, S1302 and S1308 in FIG. 13, S1401 and S1407 in FIG. 14, S1502 and S1512 in FIG. 15A and FIG. 15B, S1601 and S1608 in FIG. 16, and S1807A and S1807B in FIG. 18A and FIG. 18B.

For example, in an implementation, the transceiver module 1910 is configured to: receive a first service flow, where the first service flow is a periodic service flow to be transmitted by the second device between an access network device and a user plane network element; and receive, from the first device, information about service flow sending time; and the processing module 1920 is configured to wait until the service flow sending time indicated by the information about the service flow sending time to send the first service flow to the third device. If the first service flow is an uplink service flow, the second device is the access network device or a translator corresponding to the access network device; or if the first service flow is a downlink service flow, the second device is the user plane network element.

In a possible design, the information about the service flow sending time includes the service flow sending time or an offset of the service flow sending time relative to reference time. The service flow sending time is not later than latest sending time, and the latest sending time is determined based on information about service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device. Alternatively, the offset of the service flow sending time relative to the reference time does not exceed a maximum offset, and the maximum offset is determined based on information about service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

In a possible design, the service flow sending time is not earlier than earliest sending time, and the earliest sending time is determined based on the information about the service flow arrival time and the processing time of the first service flow in the second device. Alternatively, the offset of the service flow sending time relative to the reference time is greater than or equal to a minimum offset, and the minimum offset is determined based on the information about the service flow arrival time and the processing time of the first service flow in the second device.

In a possible design, parameters for determining the latest sending time, the maximum offset, the earliest sending time, or the minimum offset further include a jitter latency associated with the first service flow.

In a possible design, service flow sending time at which the second device sends a second service flow is different from the service flow sending time at which the second device sends the first service flow, the second service flow is a periodic service flow to be transmitted by the second device between the access network device and the user plane network element, and the second service flow and the first service flow arrive at the second device at the same time, or a difference between time at which the second service flow arrives at the second device and time at which the first service flow arrives at the second device is less than or equal to a threshold.

In a possible design, the information about the service flow sending time includes a gate control scheduling parameter.

In a possible design, the first device is a TSN application function network element, or the first device is a session management network element.

It should be understood that the apparatus 1900 in this embodiment of this application may correspond to the second device in the foregoing method embodiments, and operations and/or functions of modules in the apparatus 1900 are separately used to implement corresponding steps of the method of the second device in the foregoing method embodiments. Therefore, beneficial effects in the foregoing method embodiments can also be implemented. For brevity, details are not described herein again.

FIG. 20 is a schematic diagram of a structure of a communication apparatus 2000 according to an embodiment of this application. As shown in FIG. 20, the apparatus 2000 includes a processor 2001.

When the apparatus 2000 is a first device or a chip in the first device, in a possible implementation, the processor 2001 is configured to invoke an interface to perform the following actions:
determining information about service flow arrival time, where the information about the service flow arrival time includes the service flow arrival time or an offset of the service flow arrival time relative to reference time, the service flow arrival time is time at which a first service flow arrives at a second device, and the first service flow is a periodic service flow to be transmitted by the second device between an access network device and a user plane network element; determining information about service flow sending time based on the information about the service flow arrival time; and indicating the second device to wait, after receiving the first service flow, until the service flow sending time to send the first service flow. If the first service flow is an uplink service flow, the second device is the access network device or a translator corresponding to the access network device; or if the first service flow is a downlink service flow, the second device is the user plane network element.

It should be understood that the apparatus 2000 may be further configured to perform other steps and/or operations on a first device side in the foregoing embodiments. For brevity, details are not described herein.

When the apparatus 2000 is a second device or a chip in the second device, in a possible implementation, the processor 2001 is configured to invoke an interface to perform the following actions:
receiving a first service flow, where the first service flow is a periodic service flow to be transmitted by the second device between an access network device and a user plane network element; and waiting until service flow sending time indicated by information about the service flow sending time to send the first service flow to a third device. If the first service flow is an uplink service flow, the second device is the access network device or a translator corresponding to the access network device; or if the first service flow is a downlink service flow, the second device is the user plane network element.

It should be understood that the apparatus 2000 may be further configured to perform other steps and/or operations on a second device side in the foregoing embodiments. For brevity, details are not described herein.

It should be understood that the processor 2001 may invoke the interface to perform the foregoing receiving and sending actions. The invoked interface may be a logical interface or a physical interface. This is not limited. Optionally, the physical interface may be implemented by using a transceiver. Optionally, the apparatus 2000 further includes a transceiver 2003.

Optionally, the apparatus 2000 further includes a memory 2002, and the memory 2002 may store program code in the foregoing method embodiments, so that the processor 2001 invokes the program code.

Specifically, if the apparatus 2000 includes the processor 2001, the memory 2002, and the transceiver 2003, the processor 2001, the memory 2002, and the transceiver 2003 communicate with each other through internal connection paths, to transfer a control signal and/or a data signal. In a possible design, the processor 2001, the memory 2002, and the transceiver 2003 may be implemented by using a chip. The processor 2001, the memory 2002, and the transceiver 2003 may be implemented in a same chip, or may be implemented in different chips, or any two functions of the processor 2001, the memory 2002, and the transceiver 2003 are combined and implemented in one chip. The memory 2002 may store program code, and the processor 2001 invokes the program code stored in the memory 2002, to implement a corresponding function of the apparatus 2000.

The methods disclosed in embodiments of this application may be applied to a processor or may be implemented by a processor. The processor may be an integrated circuit chip with a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processing circuit (digital signal processor, DSP), or may be a micro controller (micro controller unit, MCU), or may be a programmable controller (programmable logic device, PLD) or another integrated chip. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

It should be understood that, in embodiments of this application, numbers "first", "second", and the like are merely intended to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Numbers or sequence numbers in the foregoing processes are merely for differentiation for ease of description, and should not constitute any limitation on an implementation process of embodiments of this application.

It should be further understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "an item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or a compact disc.

**Claims**

1. A communication method, comprising:

   determining, by a first device, information about service flow arrival time, wherein the information about the service flow arrival time comprises the service flow arrival time or an offset of the service flow arrival time relative to reference time, the service flow arrival time is time at which a first service flow arrives at a second device, and the first service flow is a periodic service flow to be transmitted between an access network device and a user plane network element;

   determining, by the first device, information about service flow sending time based on the information about the service flow arrival time; and

   indicating, by the first device, the second device to wait, after receiving the first service flow, until the service flow sending time to send the first service flow, wherein

   if the first service flow is an uplink service flow, the second device is the access network device or a translator corresponding to the access network device; or if the first service flow is a downlink service flow, the second device is the user plane network element.

2. The method according to claim 1, wherein the indicating, by the first device, the second device to wait, after receiving the first service flow, until the service flow sending time to send the first service flow comprises:
sending, by the first device, the information about the service flow sending time to the second device.

3. The method according to claim 1 or 2, wherein service flow sending time that is determined by the first device and at which the second device sends a second service flow is different from the service flow sending time that is determined by the first device and at which the second device sends the first service flow, the second service flow is a periodic service flow to be transmitted by the second device between the access network device and the user plane network element, and the second service flow and the first service flow arrive at the second device at the same time, or a difference between time at which the second service flow arrives at the second device and the time at which the first service flow arrives at the second device is less than or equal to a threshold.

4. The method according to any one of claims 1 to 3, wherein the information about the service flow sending time comprises the service flow sending time or an offset of the service flow sending time relative to the reference time; and

the service flow sending time is not later than latest sending time, and the latest sending time is determined based on the information about the service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device; or
the offset of the service flow sending time relative to the reference time does not exceed a maximum offset, and the maximum offset is determined based on the information about the service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

5. The method according to claim 4, wherein the service flow sending time is not earlier than earliest sending time, and the earliest sending time is determined based on the information about the service flow arrival time and the processing time of the first service flow in the second device; or
the offset of the service flow sending time relative to the reference time is greater than or equal to a minimum offset, and the minimum offset is determined based on the information about the service flow arrival time and the processing time of the first service flow in the second device.

6. The method according to claim 5, wherein parameters for determining the latest sending time, the maximum offset, the earliest sending time, or the minimum offset further comprise a jitter latency associated with the first service flow.

7. The method according to any one of claims 4 to 6, wherein the determining, by the first device, information about service flow sending time based on the information about the service flow arrival time comprises:

obtaining, by the first device, an offset selection value, wherein the offset selection value is greater than or equal to the minimum offset and less than or equal to the maximum offset, or the offset selection value is greater than or equal to an offset of the earliest sending time relative to the reference time and less than or equal to an offset of the latest sending time relative to the reference time; and
determining, by the first device, the information about the service flow sending time based on the offset selection value.

8. The method according to claim 7, wherein the obtaining, by the first device, an offset selection value comprises:

sending, by the first device to a fourth device, the minimum offset and the maximum offset, or the offset of the earliest sending time relative to the reference time and the offset of the latest sending time relative to the reference time; and
receiving, by the first device, the offset selection value from the fourth device.

9. The method according to claim 8, wherein the obtaining, by the first device, an offset selection value further comprises:

determining, by the first device based on a packet delay budget for transmitting the first service flow between the second device and a third device, the processing time of the first service flow in the second device, and processing time of the first service flow in the third device, a latency requirement for transmitting the first service flow between the second device and the third device, wherein the third device is a device that is to receive the first service flow, and if the first service flow is an uplink service flow, the third device is the user plane network element, or if the first service flow is a downlink service flow, the third device is the access network device or the translator corresponding to the access network device; and

sending, by the first device, the latency requirement to the fourth device.

10. The method according to any one of claims 7 to 9, wherein the determining, by the first device, the information about the service flow sending time based on the offset selection value comprises:
determining, by the first device, the information about the service flow sending time based on the offset selection value and the jitter latency associated with the first service flow.

11. The method according to any one of claims 7 to 10, wherein the information about the service flow sending time comprises a gate control scheduling parameter; and
the method further comprises:

obtaining, by the first device, the cycle of the first service flow and the maximum burst size of the first service flow;
determining, by the first device, a size of a maximum frame of the first service flow based on the maximum burst size of the first service flow; and
determining, by the first device, the gate control scheduling parameter based on the cycle of the first service flow, the size of the maximum frame of the first service flow, and the offset selection value.

12. The method according to any one of claims 1 to 11, wherein when the first service flow is an uplink service flow, the determining, by a first device, information about service flow arrival time comprises:

obtaining, by the first device, information about time at which the first service flow arrives at a translator on a terminal device side, residence time of the first service flow in a terminal device and in the translator on the terminal device side, and a packet delay budget for transmitting the first service flow between the terminal device and the second device; and
determining, by the first device, the information about the service flow arrival time based on the information about the time at which the first service flow arrives at the translator on the terminal device side, the residence time of the first service flow in the terminal device and in the translator on the terminal device side, and the packet delay budget for transmitting the first service flow between the terminal device and the second device.

13. The method according to claim 12, wherein the first device is a time sensitive networking TSN application function network element; and
the obtaining, by the first device, information about time at which the first service flow arrives at a translator on a terminal device side, residence time of the first service flow in a terminal device and in the translator on the terminal device side, and a packet delay budget for transmitting the first service flow between the terminal device and the second device comprises:

determining, by the first device, the information about the time at which the first service flow arrives at the translator on the terminal device side; and
receiving, by the first device from a session management network element, the residence time of the first service flow in the terminal device and in the translator on the terminal device side, and the packet delay budget for transmitting the first service flow between the terminal device and the second device.

14. The method according to claim 12, wherein the first device is a session management network element; and
the obtaining, by the first device, information about time at which the first service flow arrives at a translator on a terminal device side, residence time of the first service flow in a terminal device and in the translator on the terminal device side, and a packet delay budget for transmitting the first service flow between the terminal device and the second device comprises:

receiving, by the first device from a policy control network element, the information about the time at which the first service flow arrives at the translator on the terminal device side;
receiving, by the first device from the terminal device, the residence time of the first service flow in the terminal device and in the translator on the terminal device side; and

determining, by the first device, the packet delay budget for transmitting the first service flow between the terminal device and the second device.

15. A communication method, comprising:

receiving, by a second device, a first service flow, wherein the first service flow is a periodic service flow to be transmitted between an access network device and a user plane network element;

receiving, by the second device from a first device, information about service flow sending time; and

waiting, by the second device, until the service flow sending time indicated by the information about the service flow sending time to send the first service flow, wherein

if the first service flow is an uplink service flow, the second device is the access network device or a translator corresponding to the access network device; or if the first service flow is a downlink service flow, the second device is the user plane network element.

16. The method according to claim 15, wherein service flow sending time at which the second device sends a second service flow is different from the service flow sending time at which the second device sends the first service flow, the second service flow is a periodic service flow to be transmitted between the access network device and the user plane network element, and the second service flow and the first service flow arrive at the second device at the same time, or a difference between time at which the second service flow arrives at the second device and time at which the first service flow arrives at the second device is less than or equal to a threshold.

17. The method according to claim 15 or 16, wherein the information about the service flow sending time comprises the service flow sending time or an offset of the service flow sending time relative to reference time; and

the service flow sending time is not later than latest sending time, and the latest sending time is determined based on information about service flow arrival time, a cycle of the first service flow, and a maximum burst size of the first service flow, and/or the latest sending time is determined based on the information about the service flow arrival time, processing time of the first service flow in the second device, and maximum buffer duration of the first service flow in the second device; or

the offset of the service flow sending time relative to the reference time does not exceed a maximum offset, and the maximum offset is determined based on information about service flow arrival time, a cycle of the first service flow, and a maximum burst size of the first service flow, and/or the maximum offset is determined based on the information about the service flow arrival time, processing time of the first service flow in the second device, and maximum buffer duration of the first service flow in the second device.

18. The method according to claim 17, wherein the service flow sending time is not earlier than earliest sending time, and the earliest sending time is determined based on the information about the service flow arrival time and the processing time of the first service flow in the second device; or

the offset of the service flow sending time relative to the reference time is greater than or equal to a minimum offset, wherein the minimum offset is determined based on the information about the service flow arrival time and the processing time of the first service flow in the second device.

19. The method according to claim 18, wherein parameters for determining the latest sending time, the maximum offset, the earliest sending time, or the minimum offset further comprise a jitter latency associated with the first service flow.

20. The method according to claim 15 or 19, wherein the information about the service flow sending time comprises a gate control scheduling parameter.

21. The method according to any one of claims 1 to 20, wherein the first device is a TSN application function network element, or the first device is a session management network element.

22. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 14 by using a logic circuit or by executing code instructions.

**23.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 15 to 21 by using a logic circuit or by executing code instructions.

**24.** A computer-readable storage medium, wherein the storage medium stores a computer program or instructions; and when the computer program or the instructions are executed by a communication apparatus, the method according to any one of claims 1 to 21 is implemented.

FIG. 1

FIG. 2

FIG. 3

FIG. 4A

FIG. 4B

FIG. 5

Domain 2

CNC-TN    SMF    PCF    TSN AF

gNB   AN-TT    Switch (switch)    Switch (switch)    N3-TT   UPF

CUC

5GS    SMF    PCF    TSN AF    CNC

TSN terminal    DS-TT    UE    gNB    UPF   NW-TT    TSN switching node    TSN terminal

Domain 1

FIG. 6A

FIG. 6B

FIG. 7A

FIG. 7B

Domain 2

Domain 1

5GS

TSCTSF

PCF

SMF

CNC-TN

UPF

N3-TT

Switch (switch)

Switch (switch)

gNB

AN-TT

AF

DN

TSCTSF

PCF

SMF

NW-TT

UPF

gNB

UE

DS-TT

End station device

End station device

First device

Second device

Step 800: The first device determines information about service flow arrival time

Step 810: The first device determines information about service flow sending time based on the information about the service flow arrival time

Step 820: Information about the service flow sending time

FIG. 8

Switching node 2

Talker (transmit end) → Switching node 1 → UE → gNB → UPF → Switching node 3 → Listener (receive end)

gNB AN-TT → Switch (switch) → Switch (switch) → N3-TT UPF

FIG. 9

Switching node 2

Listener (receive end) ← Switching node 3 ← UE ← gNB ← UPF ← Switching node 1 ← Talker (transmit end)

gNB AN-TT ← Switch (switch) ← Switch (switch) ← N3-TT UPF

FIG. 10

Transmission Transmission Transmission Transmission Transmission Transmission Transmission Transmission
queue #7      queue #6      queue #5      queue #4      queue #3      queue #2      queue #1      queue #0

EP 4 429 191 A1

Transmission selection algorithm (Transmission Selection Algorithm)

Transmission selection algorithm (Transmission Selection Algorithm)

Transmission selection algorithm (Transmission Selection Algorithm)

Transmission selection algorithm (Transmission Selection Algorithm)

Transmission selection algorithm (Transmission Selection Algorithm)

Transmission selection algorithm (Transmission Selection Algorithm)

Transmission selection algorithm (Transmission Selection Algorithm)

Transmission selection algorithm (Transmission Selection Algorithm)

C      o      C      C      o      C      C      C

Transmission selection (Transmission Selection)

Gate control list
(gate control list)
T00: oCooCooo
T01: CoCooCCo
T02: oCooCooo
T03: ooCooCCo
T04: oCooCooo
T05: CoCCoCCC

FIG. 11

Offset of
sending
time of a      Offset of                          Offset of         Offset of
flow J     sending time of                    sending time of   sending time of
relative to      a flow K                       the flow J        the flow K
reference    relative to the                    relative to the   relative to the
time=1600       reference                         reference         reference
,000,000,0  time=1600,000,                     time=1600,000,    time=1600,000,
00,320 μs   000,000,440 μs                    000,000,820 μs    000,000,940 μs

| J | K |                                          | J | K |

Duration in                                         Duration in
which a gate                                        which the gate
state is Open        Duration in which the           state is Open
TimeInterval=        gate state is Closed            TimeInterval=
200 μs               TimeInterval=300 μs             200 μs

Start time from                            Start time from
which the gate      Start time from        which the gate       Start time from
state is Open       which the gate         state is Open        which the gate
CycleStartTime=     state is Closed        CycleStartTime=      state is Closed
Open=160000000      Closed=16000000        Open=160000000       Closed=16000000
0000320 μs          00000520 μs            0000820 μs           00001020 μs

FIG. 12A

Start time from which a gate state is Open CycleStartTime= Open=16000000 00000280 µs

Start time from which the gate state is Closed Closed=1600000 000000480 µs

Start time from which the gate state is Open CycleStartTime= Open=16000000 00000780 µs

Start time from which the gate state is Closed Closed=1600000 000000980 µs

| J | K |

| K | J |

Duration in which the gate state is Open TimeInterval =200 µs

Duration in which the gate state is Closed TimeInterval=300 µs

Duration in which the gate state is Open TimeInterval =200 µs

FIG. 12B

Transmission
queue #1

Transmission
queue #0

Gate control list
(gate control list)

T00 (1600,000,000,000,280 μs): oC

T01 (1600,000,000,000,480 μs): Co

T02 (1600,000,000,000,780 μs): oC

Transmission
selection
algorithm
(Transmission
Selection
Algorithm)

Transmission
selection
algorithm
(Transmission
Selection
Algorithm)

o

C

Transmission selection
(Transmission Selection)

FIG. 12C

FIG. 12D

EP 4 429 191 A1

Transmission
queue #1

Transmission
queue #0

Gate control list
(gate control list)

T00 (1600,000,000,000,260 μs): oC
T01 (1600,000,000,000,380 μs): Co
T02 (1600,000,000,000,460 μs): CC
T03 (1600,000,000,000,660 μs): oC
T04 (1600,000,000,000,780 μs): CC
T05 (1600,000,000,001,060 μs): oC

Transmission
selection
algorithm
(Transmission
Selection
Algorithm)

Transmission
selection
algorithm
(Transmission
Selection
Algorithm)

o

C

Transmission selection
(Transmission Selection)

FIG. 12E

FIG. 13

| UPF/N3-TT | SMF | PCF | CNC | CNC-TN |
|---|---|---|---|---|

S1401: Processing time information of the UPF network element and port information of the N3-TT

S1402: PCC rule

S1403: The SMF network element determines a maximum offset and a minimum offset

S1404: Identifier of a first service flow, maximum offset, and minimum offset

S1405: Identifier of the first service flow and interface configuration information (offset selection value)

S1406: The SMF network element determines a gate control scheduling parameter based on the offset selection value returned by the CNC-TN network element

S1407: Gate control scheduling parameter

FIG. 14

| UE/<br>DS-TT | gNB/<br>AN-TT | UPF/<br>N3-TT | SMF | PCF | TSN<br>AF | CNC-<br>TN |
|---|---|---|---|---|---|---|

S1501: Residence time of a first service
flow in the DS-TT and the UE

S1502: Processing time
information of the AN-TT
and port information of
the AN-TT

S1503: The SMF network
element sends, to the TSN
AF network element through
the PCF network element,
information obtained in
S1501 and S1502

S1504: PCC
rule

S1505: The SMF network
element determines a PDB
1 and a PDB 2 based on
the PCC rule

S1506: The SMF network
element sends at least one
of the PDB 1 and the PDB
2 to the TSN AF network
element through the PCF
network element

S1507: The TSN AF
network element
determines a maximum
offset and a minimum
offset

TO FIG. 15B

TO FIG. 15B

FIG. 15A

CONT. FROM
FIG. 15A

CONT. FROM
FIG. 15A

S1508:
Identifier of
the first
service flow,
minimum
offset, and
maximum
offset

S1509:
Identifier of
the first
service flow
and interface
configuration
information
(offset
selection
value)

S1510: The TSN AF
network element
determines a gate control
scheduling parameter
based on the offset
selection value returned
by the CNC-TN network
element

S1511: The TSN AF
network element sends the
gate control scheduling
parameter to the SMF
network element through
the PCF network element

S1512: Gate control
scheduling parameter

FIG. 15B

| UPF/N3-TT | SMF | PCF | TSN AF | CNC-TN |
|---|---|---|---|---|

S1601: Processing time information of the UPF network element and port information of the N3-TT

S1602: The SMF network element sends, to the TSN AF network element through the PCF network element, information obtained in S1601

S1603: The TSN AF network element determines a maximum offset and a minimum offset

S1604: Identifier of a first service flow, maximum offset, and minimum offset

S1605: Identifier of the first service flow and interface configuration information (offset selection value)

S1606: The TSN AF network element determines a gate control scheduling parameter based on the offset selection value returned by the CNC-TN network element

S1607: The TSN AF network element sends the gate control scheduling parameter to the SMF network element through the PCF network element

S1608: Gate control scheduling parameter

FIG. 16

FIG. 17

| gNB/<br>AN-TT | EM | UPF/<br>N3-TT | EM | SMF | | PCF | NM | CNC-<br>TN |
|---|---|---|---|---|---|---|---|---|

S1801: The NM network element determines, according to network planning and service planning, a latency requirement of a transmission link between the AN-TT and the N3-TT network element and a feature of a flow obtained after flow aggregation

S1802: The NM network element further obtains processing time information of the AN-TT, port information of the AN-TT, processing time information of the UPF network element, and port information of the N3-TT

S1803: The NM network element determines a maximum offset and a minimum offset based on information obtained in S1801 and S1802

TO FIG. 18B                    TO FIG. 18B

FIG. 18A

CONT. FROM
FIG. 18A

CONT. FROM
FIG. 18A

S1804:
Identifier of a
first service
flow,
maximum
offset, and
minimum
offset

S1805:
Identifier of
the first
service flow
and interface
configuration
information
(offset
selection
value)

S1806: The NM network
element determines a gate
control scheduling
parameter based on the
offset selection value
returned by the CNC-TN
network element

S1807A: The NM network element sends the
gate control scheduling parameter through the
EM network element

S1807B: The NM network element sends the
gate control scheduling parameter through the
EM network element

FIG. 18B

Apparatus 1900

Transceiver module 1910 — Processing module 1920

FIG. 19

Apparatus 2000

Processor 2001

Memory 2002    Transceiver 2003

FIG. 20

## INTERNATIONAL SEARCH REPORT

| International application No. |
|---|
| **PCT/CN2022/134027** |

**A.    CLASSIFICATION OF SUBJECT MATTER**

H04L47/56(2022.01)i

According to International Patent Classification (IPC) or to both national classification and IPC

**B.    FIELDS SEARCHED**

Minimum documentation searched (classification system followed by classification symbols)

H04L47/-

Documentation searched other than minimum documentation to the extent that such documents are included in the fields searched

Electronic data base consulted during the international search (name of data base and, where practicable, search terms used)

CNTXT, ENTXTC, WPABSC, VEN, CNKI: 传输时间, 到达时间, 发送时间, 接收时间, 计算, 确定, 时间, 敏感, 时延, 同时, 转换器, 包时延预算, 偏移, 抖动, 驻留, 停留, TSN, TT, transmi+, time, send+, receiv+, arriv+, sensit+, delay, PDB, same, offset, jitter, residence

**C.    DOCUMENTS CONSIDERED TO BE RELEVANT**

| Category* | Citation of document, with indication, where appropriate, of the relevant passages | Relevant to claim No. |
|---|---|---|
| X | CN 112292837 A (OPPO GUANGDONG MOBILE TELECOMMUNICATIONS CO., LTD.) 29 January 2021 (2021-01-29) description, pages 5-11 | 1-24 |
| A | CN 113677005 A (HUAWEI TECHNOLOGIES CO., LTD.) 19 November 2021 (2021-11-19) entire document | 1-24 |
| A | CN 110876159 A (HUAWEI TECHNOLOGIES CO., LTD.) 10 March 2020 (2020-03-10) entire document | 1-24 |
| A | US 11153838 B1 (TOSHIBA K. K.) 19 October 2021 (2021-10-19) entire document | 1-24 |
| A | CN 113630816 A (HUAWEI TECHNOLOGIES CO., LTD.) 09 November 2021 (2021-11-09) entire document | 1-24 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2023** | **22 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/134027**

| Patent document cited in search report | | | Publication date (day/month/year) | Patent family member(s) | | | Publication date (day/month/year) |
|---|---|---|---|---|---|---|---|
| CN | 112292837 | A | 29 January 2021 | CN | 112292837 | B | 12 August 2022 |
| | | | | WO | 2020082218 | A1 | 30 April 2020 |
| CN | 113677005 | A | 19 November 2021 | WO | 2021227798 | A1 | 18 November 2021 |
| CN | 110876159 | A | 10 March 2020 | CN | 110876159 | B | 11 February 2022 |
| US | 11153838 | B1 | 19 October 2021 | | None | | |
| CN | 113630816 | A | 09 November 2021 | WO | 2021223673 | A1 | 11 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111468102